# EUROPEAN PATENT APPLICATION

(11) **EP 4 286 938 A1**
(43) Date of publication of application: **06.12.2023**
(21) Application number: 22746301.5
(22) Date of filing: 28.01.2022
(51) Int. Cl.: G03B 5/04, G03B 17/12, G03B 3/00, H04N 5/225, H04N 5/232, G03B 3/02, G03B 13/32

(54) **LENS DRIVING DEVICE AND CAMERA MODULE INCLUDING SAME**

(30) Priority: 28.01.2021 KR 20210012063; 29.01.2021 KR 20210012981; 03.02.2021 KR 20210015649; 05.02.2021 KR 20210016743
(71) Applicant: LG Innotek Co., Ltd., Seoul 07796 (KR)
(72) Inventor: SONG, Yun Sang, Seoul 07796 (KR); AN, Sang Hun, Seoul 07796 (KR); LEE, Yong Joo, Seoul 07796 (KR)
(74) Representative: DREISS Patentanwälte PartG mbB
(86) International application number: PCT/KR2022/001642
(87) International publication number: WO 2022/164275

(57) **Abstract**

A lens driving device according to an embodiment includes a first frame; a first moving part disposed in an inner space of the first frame and relatively movable with respect to the first frame; a lens module disposed inside the first moving part; and a guide member disposed between the first frame and the first moving part, wherein the guide member is disposed between an inner surface of the first frame and an outer surface of the first moving part, and the first moving part is guided by the guide member and arranged to be rotatable based on each of a first axis and a second axis.

## Description

### [Technical Field]

The embodiment relates to a lens driving device and a camera module including the same.

### [Background Art]

A distribution of various portable terminals is widely generalized and a wireless internet service is commercialized. Accordingly, consumers' demands related to mobile terminals are also diversifying, and various types of additional devices are installed in mobile terminals.

As a representative example, there is a camera module that takes a picture or video of a subject. Meanwhile, a recent camera module may perform an autofocus (AF) function of aligning a focal length of a lens by automatically adjusting a distance between an image sensor and a lens.

In addition, the camera module may perform a zooming function of zooming up or zooming out by increasing or decreasing the magnification of a distant subject through a zoom lens.

In addition, the recent camera module employs an image stabilization (IS) technology, and accordingly, a technology that corrects or prevents image shaking caused by unstable fixtures or user movements or camera movements caused by vibration or impact is being employed.

However, a conventional camera module as described above must necessarily include a yoke and a magnet to press a moving part against a guide member and a fixed part, and thus magnetic field interference may occur, thereby deteriorating operation reliability.

In addition, the conventional camera module as described above has a problem in that the moving part is separated from the fixed part by an external impact.

### [Disclosure]

### [Technical Problem]

The embodiment provides a camera module capable of stably supporting a moving part to a fixed part without a separate magnet and yoke for pressing the moving part to the fixed part. In addition, the embodiment provides a lens driving device capable of solving magnetic field interference generated by the magnet by removing the yoke and the magnet for adjusting the frictional force between the moving part and the fixed part (or guide member), and a camera module including the same.

In addition, the embodiment provides a lens driving device capable of solving a technical problem in which components constituting the lens driving device are separated from each other by an external impact and a camera module including the same.

Technical problems to be solved by the proposed embodiments are not limited to the above-mentioned technical problems, and other technical problems not mentioned may be clearly understood by those skilled in the art to which the embodiments proposed from the following descriptions belong.

### [Technical Solution]

A lens driving device according to an embodiment comprises a first frame; a first moving part disposed in an inner space of the first frame and relatively movable with respect to the first frame; a lens module disposed inside the first moving part; and a guide member disposed between the first frame and the first moving part, wherein the guide member is disposed between an inner surface of the first frame and an outer surface of the first moving part, and the first moving part is guided by the guide member and arranged to be rotatable based on each of a first axis and a second axis.

In addition, the outer surface of the first moving part includes a curved surface formed in the optical axis direction.

In addition, the inner surface of the first frame includes a groove in which the guide member is disposed, and the guide member is disposed between the curved surface and the groove.

In addition, the lens driving device further comprises a first elastic member disposed above or below the first frame, and wherein the guide member is disposed between the first elastic member, the outer surface of the first moving part, and the inner surface of the first frame.

In addition, a position of an upper end of the guide member is higher than a region where the first elastic member is coupled to the first frame, wherein the first elastic member includes a coupling region coupled to the first frame and a contacting region in contact with the guide member, and wherein the coupling region is disposed to overlap the guide member in a horizontal direction.

In addition, the first elastic member includes a plurality of upper elastic members disposed on the first frame; and a plurality of lower elastic members disposed under the first frame, and wherein the guide member includes a plurality of upper balls corresponding to each of the plurality of upper elastic members; and a plurality of lower balls corresponding to each of the plurality of lower elastic members.

In addition, the first moving part includes a first driving member, wherein the lens driving device further comprises a fixed part including the first frame and a second driving member, and wherein the first moving part moves relative to the fixed part by an electromagnetic force provided by an interaction between the first driving member and the second driving member.

In addition, the first moving part includes a second frame and a sensor part coupled to the second frame; and wherein the sensor part includes an image sensor and a sensor substrate on which the image sensor is disposed.

In addition, the sensor part includes a sensor base disposed on the sensor substrate and having a filter disposed thereon, and wherein the sensor part is coupled with the second frame through the sensor base.

In addition, the guide member includes a plurality of balls.

In addition, the plurality of balls are disposed along a circumferential direction of the outer surface of the first moving part.

In addition, the plurality of balls include balls disposed in an upper region and a lower region of the outer surface of the first moving part.

In addition, the upper region is a region formed with a first curved surface formed such that the outer surface faces inward toward an upper side, and the lower region is a region formed with a second curved surface formed such that the outer surface faces inward toward the lower side.

In addition, the outer surface of the first moving part includes a step provided between the first curved surface and the second curved surface.

In addition, a first radius of curvature of the first curved surface is smaller than a second radius of curvature of the second curved surface.

In addition, a center of a virtual first circle formed by extending the first curvature of the first curved surface is the same as a center of a virtual second circle formed by extending the second curvature of the second curved surface.

On the other hand, a lens driving device according to the embodiment includes a fixed part; a first moving part arranged to be relatively movable with respect to the fixed part; a guide member disposed between the fixed part and the moving part; and a first elastic member disposed on the fixed part and the guide member, wherein a position of an upper end of the guide member is higher than a position of a region where the first elastic member is coupled to the first frame.

In addition, the fixed part includes a groove in which the guide member is disposed, and the guide member includes a first portion disposed in the groove and a second portion protruding on the groove.

In addition, the first elastic member has a coupling region coupled to the first frame and a contacting region in contact with the guide member, and the contacting region is disposed to press the guide member.

On the other hand, the lens driving device according to the embodiment includes a fixed part; a first moving part arranged to be relatively movable with respect to the fixed part; and a guide member disposed between the fixed part and the first moving part, wherein the guide member is disposed between an inner surface of the fixed part and an outer surface of the first moving part, wherein the first moving part has a curved surface formed in an optical axis direction, wherein the curved surface includes a first curved surface corresponding to an upper region of the outer surface and a second curved surface corresponding to a lower region of the outer surface, and wherein a first radius of curvature of the first curved surface is different from a second radius of curvature of the second curved surface.

In addition, the curved surface includes a step provided between the first curved surface and the second curved surface.

In addition, a center of a virtual first circle formed by extending the first curvature of the first curved surface is the same as a center of a virtual second circle formed by extending the second curvature of the second curved surface.

A lens driving device according to an embodiment may comprise a bobbin on which a lens is disposed, a first housing on which the bobbin is disposed, and a first guide member disposed between the bobbin and the first housing. The first housing may have a first guide groove in which the first guide member is disposed, and the first guide groove may have an asymmetrical shape.

The bobbin may have a second guide groove in which the first guide member is disposed.

The second guide groove may have a shape corresponding to an outer circumference surface of the first guide member.

The first guide groove may include a first guide surface and a second guide surface contacting the first guide member.

An angle formed by the first guide surface and the second guide surface may be an acute angle.

The embodiment may include a second housing accommodating the first housing.

The first housing may include a first outer surface facing the second housing.

The second housing may include a second inner surface facing the first housing.

The first outer surface and the second inner surface may include curved surfaces in which a central portion is convex outward than upper and lower portions.

The embodiment may include a second guide member disposed between the first outer surface and the second inner surface.

The embodiment includes a first magnet disposed in the first housing, and the first guide member may be closely attached to the first guide groove by a magnetic force of the first magnet.

The first guide member and the second guide member may have different shapes.

The first guide member may have a cylindrical shape, and the second guide member may have a ball shape.

In addition, the lens driving device according to the embodiment may include a bobbin on which a lens is disposed, a first housing on which the bobbin is disposed, and a plurality of first guide members disposed between the bobbin and the first housing.

At least one of the plurality of first guide members may be a magnetic material and at least the other may be a non-magnetic material.

Among the plurality of first guide members, a first guide member disposed on one side of the bobbin may be a magnetic material, and a first guide member disposed on the other side of the bobbin may be made of a non-magnetic material.

The first housing may have a plurality of first guide grooves on which the first guide member is disposed, and the bobbin may have a plurality of second guide grooves on which the first guide member is disposed.

The first guide member may contact the first guide groove.

In addition, the lens driving device according to the embodiment may include a bobbin on which a lens is disposed, a first housing on which the bobbin is disposed, and a first guide member disposed between the bobbin and the first housing.

The first housing has a first guide groove in which the first guide member is disposed, and when the first guide groove contacts the first guide member, an angle formed by the two tangents contacting the first guide member may be less than 90°.

The first guide groove may have a first guide surface and a second guide surface capable of contacting the first guide member.

An angle formed between the first guide surface and the second guide surface may be an acute angle.

The bobbin may include a second guide groove in which the first guide member is disposed.

The second guide groove may have a shape corresponding to an outer circumference surface of the first guide member.

The bobbin may include a bobbin frame where the second guide groove is formed and a first recess inward from an outermost periphery of the bobbin frame.

The first housing may include a first guide protruding portion protruding in a direction from the first housing frame toward the bobbin.

The first guide protruding portion may be disposed on a first recess of the bobbin.

The first guide protruding portion may be disposed lower than the outermost periphery of the bobbin frame.

The first guide protruding portion of the first housing may overlap the bobbin in a circumferential direction.

In addition, the lens driving device according to the embodiment may include a bobbin on which a lens is disposed, a first housing on which the bobbin is disposed, and a first guide member disposed between the bobbin and the first housing.

The bobbin has a second guide groove on which the first guide member is disposed, and the first housing has a first guide groove on which the first guide member is disposed, and a step may be provided on the bobbin to correspond to a first guide protruding portion forming the first guide groove.

The step of the bobbin may include a first recess formed inward from an outermost periphery of the bobbin frame where the second guide groove is formed.

The first guide protruding portion may be disposed on the first recess of the bobbin.

A camera module according to an embodiment may include any one of the above lens driving devices.

A lens driving device according to an embodiment includes a first housing in which a lens assembly is disposed inside and a magnet is disposed, and a second housing in which a coil is disposed and disposed to surround the first housing, wherein the first housing may include a protruding portion protruding toward the coil at a position corresponding to the coil.

The magnet may be disposed on the protruding portion, and the second housing may overlap the protruding portion in a vertical direction.

An end of the protruding portion may have a groove in which the magnet is disposed.

The first housing includes a first surface facing the second housing, the second housing includes a second surface facing the first housing, and the first surface and the second surface may include curved surfaces in which a central portion is convex outward than upper and lower portions.

The embodiment may include a second guide member disposed between the first surface and the second surface.

The second housing may include a groove in which the protruding portion is disposed.

The magnet may be disposed closer to the coil than to the groove.

The first housing is capable of rotational driving and tilting driving based on an optical axis by the first surface, the second surface, and the second guide member, and the rotational driving and the tilting driving may be limited as the protruding portion contacts the second housing.

In addition, the lens driving device according to the embodiment includes a first housing in which a lens assembly is disposed inside and a magnet is disposed, and a second housing in which a coil is disposed and disposed to surround the first housing, wherein the first housing may include a protruding portion protruding toward the coil at a position corresponding to the coil.

The second housing includes a groove in which the protruding portion is disposed, and the groove includes a first surface corresponding to a first side surface of the protruding portion, a second surface corresponding to a second side surface of the protruding portion, and a third surface corresponding to a lower surface of the protruding portion.

According to the embodiment, a predetermined magnet may be mounted on the protruding portion of the first housing, and the second housing may overlap the protruding portion in a vertical direction.

The first housing includes a first surface facing the second housing, the second housing includes a second surface facing the first housing, and the first surface and the second surface include curved surfaces in which a central portion is convex outward than upper and lower portions, and wherein a second guide member may be disposed between the first surface and the second surface.

In addition, the lens driving device according to the embodiment includes a fixed part; and a moving part moving relative to the fixed part.

The moving part includes a protruding portion, and the fixed part may include a first surface and a second surface in contact with the protruding portion to limit rotation of the moving part in a first direction; and a third surface limiting tilting of the moving part in a second direction different from the first direction.

The lens driving device may include a stopper limiting rotation of the moving part.

In addition, the lens driving device according to the embodiment may include a first housing in which a lens assembly is disposed inside and a magnet is disposed, and a second housing in which a coil is disposed and disposed to surround the first housing.

The first housing may include a protruding portion protruding toward the coil at a position corresponding to the coil.

The second housing may include a first region contacting the protruding portion when the first housing is rotated about an optical axis, and a second region contacting the protruding portion when the first housing is tilted.

In addition, the lens driving device according to the embodiment may include a first frame on which a lens is disposed, a second frame on which the first frame is disposed, and a third frame on which the second frame is disposed.

The first frame moves in a Z-axis direction, the second frame tilts in X-axis and Y-axis directions and rotates around the Z-axis, and the third frame may include a stopper structure that limits tilting and rotation of the second frame.

The stopper structure may include four stopper structures provided in two in the X-axis direction and in two in the Y-axis direction.

The stopper structure may be symmetrically disposed at four corners of the third frame.

In addition, the lens driving device according to the embodiment includes a fixed part and a moving part moving with respect to the fixed part, wherein the moving part includes a protruding portion, and the fixed part may include a stopper in which the protruding portion is inserted and which limits rotation of the moving part.

The stopper may be formed by three faces of the groove.

The fixed part may include a receiving portion in which the protruding portion is disposed.

One surface of the receiving portion may include a groove into which the protruding portion is inserted.

One surface of the stopper may have a width of an upper region greater than a width of a middle region.

One side of an end region of the protruding portion may be disposed on one surface of the magnet, and the other side facing the one side may be open.

A lens driving device according to an embodiment may include a bobbin on which a lens is disposed, a first housing on which the bobbin is disposed, and a plurality of first guide members disposed between the bobbin and the first housing.

The first housing includes a plurality of first housing frames and a plurality of first magnet parts disposed on the first housing frames, and a resultant force of attraction between the first guide member and the first magnet part may be greater than a gravitational force of the bobbin including the lens.

The first guide member 3220 may include a first-first guide member 3220a, a first-second guide member 3220b, a first-third guide member 3220c, and a first-fourth guide member 3220d.

The housing frame 3310 may include a first-first housing frame portion 3310a, a first-second housing frame portion 3310b, a first-third housing frame portion 3310c, and a first-fourth housing frame portion 3310d.

The first magnet part MN1 includes a first-first magnet MN1a, a first-second magnet MN1b, and a first-third magnet MN1c and a first-fourth magnet MN1d at four sides of the housing frame 3310 of the first housing 3300.

The first-first guide member 3220a is disposed at one end of the first-first housing frame portion 3310a, and the first-second guide member 3220b is disposed at the other end of the first-first housing frame portion 3310a.

The first-first guide member 3220a is disposed adjacent to the first-first magnet MN1a,

The first-second guide member 3220b may be disposed adjacent to the first-second magnet MN1b.

A first attraction direction F1 in which attraction between the first-first magnet MN1a and the first-first guide member 3220a is maximum may be a direction parallel to the first axis.

A second attractive direction F2 in which the attractive force between the first-second magnet MN1b and the first-second guide member 3220b is maximum may be a direction parallel to the second axis.

The first-third guide member 3220c may be disposed at the other end of one end and the other end of the first-second housing frame portion 3310d, which is positioned farther from the first-first housing frame portion 3310a.

The first-third guide member 3220c is disposed adjacent to the first-third magnet MN1c, and wherein the first-third guide member 3220c is spaced apart from the first-second magnet MN1b and may be disposed farther than the first-third magnet MN1c.

A third attraction direction F3 in which attraction between the first-third magnet MN1c and the first-third guide member 3220c is maximum may be a direction parallel to the first axis.

The first-fourth guide member 3220d may be disposed at the other end of one end and the other end of the first-fourth housing frame portion 3310d, which is positioned farther from the first-first housing frame portion 3310a.

The first-fourth guide member 3220d is disposed adjacent to the first-fourth magnet MN1d, and is spaced apart from the first-first magnet MN1a and may be farther than the first-first magnet MN1a.

A fourth attraction direction F4 in which attraction between the first-fourth magnet MN1d and the first-fourth guide member 3220d is maximum may be a direction parallel to the second axis.

The first-first housing frame portion 3310a may include a first-first guide protruding portion 3315a extending in a second axis direction.

The first-first guide protruding portion 3315a may function as a stopper of the first-first guide member 3220a in the first axis direction.

The first-fourth housing frame portion 3310d includes a first-fourth guide protruding portion 3315d extending in the first axis direction, and the first-fourth guide protruding portion 3315d may function as a stopper of the first-fourth guide member 3220d in the second axis direction.

In addition, the lens driving device according to the embodiment may include a bobbin on which a lens is disposed, a first housing on which the bobbin is disposed, and a plurality of first guide members disposed between the bobbin and the first housing.

In an embodiment, a horizontal section of the first housing perpendicular to the optical axis includes first to fourth quadrants, the first guide member is disposed in the second to fourth quadrants of the first housing, and the first guide member may not be disposed in the first quadrant of the housing.

The first housing includes a plurality of first housing frame portions, and the plurality of first guide members 220 may be disposed on some of the plurality of first housing frame portions and may not be disposed on other first housing frame portions.

The housing frame 310 may include a first-first housing frame portion 310a, a first-second housing frame portion 310b, a first-third housing frame portion 310c and a first-fourth housing frame portion 310d.

The first guide member 220 is disposed on the first-first housing frame portion 310a, the first-second housing frame portion 310b and the first-fourth housing frame portion 310d, and may not be disposed on the first-third housing frame portion 310c.

The first guide member 220 includes a first-first guide member 220a, a first-second guide member 220b, a first-third guide member 220c and a first-fourth guide member 220d, and a plurality of first guide members 220 among the first guide members 220 may be disposed on any one of the first housing frame portion.

The first-first guide member 220a and the first-second guide member 220b may be disposed on the first-first housing frame portion 310a.

One of the first guide members 220 may be disposed on any one of the first housing frame portion.

The first-third guide member 220c may be disposed on the first-second housing frame portion 310b, and the first-fourth guide member 220d may be disposed on the first-fourth housing frame portion 310d.

The lens driving device includes a first magnet part disposed on the first housing 300, and the first magnet part MN1 may be included a first-first magnet MN1a, a first-second magnet MN1b, a first-third magnet MN1c and a first-fourth magnet MN1d disposed at four sides of the housing frame 310 of the first housing 300.

A first attraction direction F1 in which attraction between the first-first magnet MN1a and the first-first guide member 220a is maximum is a direction parallel to the first axis, and a second attraction direction F2 in which attraction between the first-second magnet MN1b and the first-second guide member 220b is maximum may be a direction parallel to the second axis.

A third attraction direction F3 in which attraction between the first-third magnet MN1c and the first-third guide member 220c is maximum is a direction parallel to the first axis, and a fourth attraction direction F4 in which attraction between the first-fourth magnet MN1d and the first-fourth guide members 220d is maximum may be a direction parallel to the second axis.

In addition, the lens driving device according to the embodiment includes a first housing in which a lens assembly is disposed inside and a magnet is disposed, and a second housing in which a coil is disposed and disposed to surround the first housing, wherein the first housing may include a protruding portion protruding toward the coil at a position corresponding to the coil.

The magnet may be disposed on the protruding portion, and the second housing may overlap the protruding portion in a vertical direction.

An end of the protruding portion may have a groove in which the magnet is disposed.

The first housing includes a first surface facing the second housing, the second housing includes a second surface facing the first housing, and the first surface and the second surface include curved surfaces in which a central portion is convex outward than upper and lower portions.

The embodiment may include a second guide member disposed between the first surface and the second surface.

The second housing may include a groove in which the protruding portion is disposed.

The magnet may be disposed closer to the coil than to the groove.

The first housing is capable of rotational driving and tilting driving based on an optical axis by the first surface, the second surface, and the second guide member, and the rotational driving and the tilting driving may be limited as the protruding portion contacts the second housing.

In addition, the lens driving device according to the embodiment includes a first housing in which a lens assembly is disposed and a magnet is disposed, and a second housing in which a coil is disposed and disposed to surround the first housing, and wherein the first housing may include a protruding portion protruding toward the coil at a position corresponding to the coil.

The second housing includes a groove in which the protruding portion is disposed, and the groove may include a first surface corresponding to a first side surface of the protruding portion, a second surface corresponding to a second side surface of the protruding portion, and a third surface corresponding to a lower surface of the protruding portion.

According to the embodiment, a predetermined magnet may be mounted on the protruding portion of the first housing, and the second housing may overlap the protruding portion in a vertical direction.

The first housing includes a first surface facing the second housing, the second housing includes a second surface facing the first housing, the first surface and the second surface include curved surfaces in which a central portion is convex outward than upper and lower portions, and wherein a second guide member is disposed between the first surface and the second surface.

In addition, the lens driving device according to the embodiment includes a fixed part; and a moving part moving relative to the fixed part.

The moving part includes a protruding portion, and the fixed part may include a first surface and a second surface in contact with the protruding portion to limit rotation of the moving part in a first direction; and a third surface limiting tilting of the moving part in a second direction different from the first direction.

The lens driving device may include a stopper limiting rotation of the moving part.

In addition, the lens driving device according to the embodiment may include a first housing in which a lens assembly is disposed inside and a magnet is disposed, and a second housing in which a coil is disposed and disposed to surround the first housing.

The first housing may include a protruding portion protruding toward the coil at a position corresponding to the coil.

The second housing may include a first region contacting the protruding portion when the first housing is rotated about an optical axis, and a second region contacting the protruding portion when the first housing is tilted.

In addition, the lens driving device according to the embodiment may include a first frame on which a lens is disposed, a second frame on which the first frame is disposed, and a third frame on which the second frame is disposed.

The first frame moves in a Z-axis direction, the second frame tilts in X-axis and Y-axis directions and rotates around the Z-axis, and the third frame may include a stopper structure that limits tilting and rotation of the second frame.

The stopper structure may include four stopper structures provided in two in the X-axis direction and in two in the Y-axis direction.

The stopper structure may be symmetrically disposed at four corners of the third frame.

In addition, the lens driving device according to the embodiment includes a fixed part and a moving part moving with respect to the fixed part, wherein the moving part includes a protruding portion, and the fixed part may include a stopper in which the protruding portion is inserted and which limits rotation of the moving part.

The stopper may be formed by three faces of the groove.

The fixed part may include a receiving portion in which the protruding portion is disposed.

One surface of the receiving portion may include a groove into which the protruding portion is inserted.

One surface of the stopper may have a width of an upper region greater than a width of a middle region.

One side of an end region of the protruding portion may be disposed on one surface of the magnet, and the other side facing the one side may be open.

### [Effects of the Invention]

According to an embodiment, the guide member is disposed in the groove and the guide member may be pressurized using the first elastic member, and accordingly, it is possible to rotate the first moving part in a state where the guide member is stably disposed between the fixed part and the first moving part. In addition, the embodiment may adjust a shape of the groove and adjust the pressing force of the first elastic member on the guide member, and accordingly, it is possible to easily adjust the adhesion between the fixed part and the first moving part. According to this, the embodiment may remove a magnet or a yoke used to adjust the adhesion while pressing the guide member in a comparative example. Furthermore, the embodiment may minimize magnetic field interference generated during an auto-focus operation or an image stabilization operation by the magnet or yoke of the comparative example, and thereby improve operation reliability.

In addition, in the embodiment, the frame in which the magnet is disposed in the first moving part is divided into a second frame and a subframe. Accordingly, the embodiment may allow easy coupling of a magnet part corresponding to a second driving member to the first moving part, thereby improving assembly.

In addition, the embodiment has a structure in which the second lower elastic member is coupled together between the second frame and the subframe, thereby improving the assembly of the first moving part and the second moving part.

In an embodiment, the first curved surface provided in an upper portion of the second frame and the second curved surface provided in a lower portion have different radius of curvature. In this case, a center of a virtual first circle formed by the first curved surface coincides with a center of a virtual second circle formed by the second curved surface, and accordingly, a step is provided between the first curved surface and the second curved surface. Accordingly, the embodiment may prevent the first moving part from being separated from an external impact, and thus may improve reliability. Furthermore, a first radius of curvature of the first curved surface is smaller than a second radius of curvature of the second curved surface, thereby reducing a height of the first moving part compared to both the first curved surface and the second curved surface having a second radius of curvature, and further reducing the height of the overall lens driving device.

According to the lens driving device and the camera module including the same according to the embodiment, it is possible to solve the posture difference issue due to the difference in attraction when the camera module is rotated in implementing the AF technology.

For example, a resultant force in a second attraction direction F2 with the maximum attraction between the first-second magnet part MN1b and the first-second guide member 3220b and a fourth attraction direction F4 with the maximum attraction between the first-fourth magnet part MN1d and the first-fourth guide member 3220d is opposite to the gravitational force, and accordingly, the resultant force of the second attraction direction F2 and the third attraction direction F4 is greatly controlled compared to the gravitational force, thereby offsetting the gravitational force.

Accordingly, the embodiment arranges the position of the first guide member 3220, which is a magnetic material, based on the direction of attraction, and accordingly, there is a technical effect of reducing current consumption by minimizing the force in the AF direction (movement direction) by suppressing the posture difference with a minimum force.

On the other hand, the first guide member 3220 has a complex technical effect of preventing the tilt of the barrel from occurring by a resultant force in a third attraction direction F3 with the maximum attraction between the first-third magnet part MN1c and the first-third guide member 220c and a first attraction direction F1 with the maximum attraction between the first-first magnet part MN1a and the first-first guide member 3220a.

In addition, the embodiment can solve a technical problem that the components of the lens driving device are separated when an impact is applied to the camera module. For example, according to the embodiment, the first guide groove GH1 may be provided at the first housing 3300, and the second guide groove GH2 may be provided at the bobbin 3200.

In the embodiment, the first guide member 3220 for AF driving of the lens is disposed between the first guide groove GH1 and the second guide groove GH2, and the first guide groove GH1 and the second guide groove GH2 may function as a guide rail. In this case, the first guide member 3220 may be disposed. The first guide groove GH1 may have an asymmetrical shape.

For example, the second guide groove GH2 may have a shape corresponding to an outer circumference surface of the first guide member 3220. For example, the second guide groove GH2 may have a curved surface shape corresponding to the outer circumference surface of the first guide member 3220.

In addition, the first guide groove GH1 may include a first guide surface 3311 and a second guide surface 3312 that may contact the first guide member 3220. The first guide surface 3311 and the second guide surface 3312 may be flat.

In an embodiment, an angle Θ formed between the first guide surface 3311 and the second guide surface 3312 may be an acute angle.

According to the embodiment, the first guide groove GH1 in which the first guide member 3220 is disposed has an asymmetrical shape, so that even if an impact or the like occurs, there is a technical effect of providing a movement path through which the lens may move with minimal friction while preventing separation of the first guide member 3220.

In addition, in the embodiment, the angle Θ formed by the first guide surface 3311 and the second guide surface 3312 may be an acute angle, and accordingly, there is a technical effect of preventing the separation of the first guide member 220 even when an impact or the like occurs.

In addition, the lens driving device and the camera module including the same according to the embodiment prevent separation of the first guide member 3220 when implementing AF, zooming, or OIS, and accordingly, it is possible to solve the problem of lens decenter or tilt occurrence by precise implementation of AF and OIS for the lens. In addition, there is a technical effect of remarkably improving image quality or resolving power by preventing the angle of view from changing or out of focus by properly matching the alignment between the plurality of lens groups.

In addition, according to the embodiment, it is possible to solve the technical problems of occurrence of high-frequency vibration, increase in driving resistance, and occurrence of dynamic tilt due to a preload spring structure in the AF structure.

For example, according to the embodiment, it is possible to provide a structure for moving a lens with minimal friction and tilt by removing a spring vulnerable to high-frequency vibration from an AF structure and applying a guide shaft. According to the embodiment, there are the following technical effects. The first guide member 3220 for AF operation is disposed between the first guide groove GH1 and the second guide groove GH2, and accordingly, the spring structure is removed compared to the prior art, so there is no high-frequency vibration, and the absence of spring structure reduces drive resistance, reduces power consumption, and the dynamic tilt is less compared to the guide bearing structure.

In addition, according to the lens driving device and the camera module including the same according to the embodiment, it is possible to solve the problem that a greater force is required for rolling torque in roll implementation compared to pitch and yaw implementation in implementing OIS.

For example, in an embodiment, the second magnet part MN2 for roll implementation is disposed farther from the center of the lens 3100 or bobbin 200 compared to the second magnet part MN2 for implementing a pitch or yaw, and it is possible to solve the problem that a greater force is required for the rolling torque.

In addition, for example, according to the embodiment, the second magnet part MN2 disposed at the corner of the second housing 3400 and facing the second coil part CL2 is disposed farther from the center of the lens 3100 or the center of the bobbin 3200 than the first magnet part MN1 facing the third coil part CL3, and there is a special technical effect that the distance of the driving point is increased so that the driving force may be increased through a greater torque implementation.

In addition, the embodiment can solve the problem of deteriorating the reliability of the camera module when an external impact or the like occurs in OIS implementation.

For example, in the embodiment, the protruding portion 3320 of the first housing 3300 may be positioned located in the housing groove 3400R of the second housing 3400, and there is a technical effect that the protruding portion 3320 of the first housing 3300 and the housing groove 3400R of the second housing 3400 can implement a stopper function related to a 3-axis OIS. Through this, the embodiment can solve the problem of deteriorating the reliability of the camera module when an external impact or the like occurs.

In addition, according to the embodiment, there is a technical effect of preventing magnetic field interference between magnets when AF or OIS is implemented. For example, in the conventional internal technology, there is a problem in that thrust is reduced because AF driving or OIS driving is not normally performed due to magnetic field interference between a magnet for driving AF and a magnet for driving OIS. In addition, there is a problem of causing decentering or tilting due to magnetic field interference between magnets.

According to the embodiment, there is a technical effect capable of providing a lens driving device and a camera module including the same capable of preventing magnetic field interference between magnets by changing the arrangement positions of the magnets for OIS driving and AF driving.

### [Description of Drawings]

FIG. 1 is a perspective view of a camera module according to a first embodiment.
FIG. 2 is an exploded perspective view of a part of the camera module of FIG. 1.
FIG. 3 is a cross-sectional perspective view of the lens driving device of FIG. 2.
FIG. 4 is an exploded perspective view of the lens driving device of FIG. 2.
FIG. 5A is an exploded perspective view of the fixed part of FIG. 4.
FIG. 5B is a first perspective view of the first frame of FIG. 5A.
FIG. 5C is a second perspective view of the first frame of FIG. 5A.
FIG. 5D is an exploded perspective view of the first driving member of FIG. 5A.
FIG. 5E is a coupling view of a fixed part and a guide member according to an embodiment.
FIG. 5F is a plan view and a side view in a state in which the guide member is coupled to the fixed part of the embodiment.
FIG. 5G is a perspective view of the main substrate of FIG. 5A.
FIG. 6A is an exploded perspective view of the second moving part according to the first embodiment.
FIG. 6B is a first perspective view of the third frame of FIG. 6A.
FIG. 6C is a second perspective view of the third frame of FIG. 6A.
FIG. 7A is an exploded perspective view of the first moving part according to the first embodiment.
FIG. 7B is a perspective view of the second frame of FIG. 7A.
FIG. 7C is a first perspective view of the subframe of FIG. 7A.
FIG. 7D is a plan view of FIG. 7C.
FIG. 7E is a second perspective view of the subframe of FIG. 7A.
FIG. 7F is a view for explaining the coupling structure of the second frame, the subframe and the second lower elastic member.
FIG. 7G is a view for explaining a coupling structure of a second frame, a second driving member, and a subframe according to the first embodiment.
FIG. 7H is an exploded perspective view of the sensor part of FIG. 7A.
FIG. 7I is a coupling view of the first moving part according to the first embodiment.
FIG. 8A is an exploded perspective view of the elastic substrate according to the first embodiment.
FIG. 8B is a plan view of the pattern part of FIG. 8A.
FIG. 8C is a view for explaining the connection structure of the elastic substrate of the first embodiment.
FIG. 9 is a view for explaining a coupling structure of a first moving part and a second moving part according to the first embodiment.
FIG. 10 is a view for explaining a coupling structure of a fixed part, a first moving part, and a second moving part according to the first embodiment.
FIG. 11 is an exploded perspective view of the driving part according to the first embodiment.
FIG. 12 is a perspective view of the first elastic member according to the first embodiment.
FIG. 13 is a view for explaining a coupling structure of the first elastic member of FIG. 12.
FIG. 14 is a cross-sectional view illustrating a second frame of a first moving part according to a modified example.
FIG. 15 is a mobile terminal to which a camera module according to an embodiment is applied.
FIG. 16 is a perspective view of a vehicle to which a camera module according to an embodiment is applied.
FIG. 17A is a perspective view of a camera module according to an embodiment.
FIG. 17B is a detailed perspective view of a camera module according to the embodiment shown in FIG. 17A.
FIG. 18A is a perspective view in which a circuit board is omitted from the camera module according to the embodiment shown in FIG. 17B.
FIG. 18B is a plan view of a lens driving device in a camera module according to the embodiment shown in FIG. 18A.
FIG. 18C is a cross-sectional view of the lens driving device according to the embodiment shown in FIG. 18B along line A1-A2.
FIG. 19A is a perspective view of a lens driving device according to the embodiment shown in FIG. 18B.
FIG. 19B is a side cross-sectional view of the lens driving device according to the embodiment shown in FIG. 19A taken along line B1-B2 perpendicular to the z-axis.
FIG. 19C is a detailed view of FIG. 19B, and FIG. 19D is a view showing the direction of attraction in FIG. 19C.
FIG. 20A is an enlarged view of a third region in FIG. 19D, and FIG. 20B is an enlarged view of a fourth region in FIG. 19D.
FIG. 21A is a side cross-sectional view of the lens driving device according to the embodiment shown in FIG. 19A taken along line B1-B2 perpendicular to the z-axis.
FIG. 21B is an enlarged view of a third region in a side cross-sectional view of the lens driving device according to the embodiment shown in FIG. 21A.
FIG. 21C is a first detail view of FIG. 21B, FIG. 21D is a second detail view of FIG. 21B, and FIG. 21E is a third detail view of FIG. 21B.
FIG. 22A is a view in which the circuit board is omitted from the camera module according to the embodiment shown in FIG. 17A.
FIG. 22B is a detailed view in which the bobbin and lens are omitted in FIG. 22A.
FIG. 22C is a detailed view in which the first housing, the first guide part, and the sensor substrate part are omitted in FIG. 22B.
FIG. 23A is an enlarged view of the first region in FIG. 22B, FIG. 23B is an enlarged view of the second region in FIG. 22C, and FIG. 23C is an enlarged view of the second housing in FIG. 23B.
FIG. 24 is a side cross-sectional view of the lens driving device in the camera module according to the third embodiment taken along line B1-B2.
FIG. 25A is an enlarged view of a first region in a side cross-sectional view of the lens driving device according to the embodiment shown in FIG. 24.
FIG. 25B is a first detail view of FIG. 25A, FIG. 25C is a second detail view of FIG. 25A, and FIG. 25D is a third detail view of FIG. 25A.
FIG. 26 is an enlarged view of the second region P2 in the lens driving device according to the embodiment shown in FIG. 24.
FIG. 27 is a side cross-sectional view of the lens driving device according to the embodiment shown in FIG. 24.

### [Best Mode]

Hereinafter, embodiments of the present invention will be described in detail with reference to the accompanying drawings.

However, the spirit and scope of the present invention is not limited to a part of the embodiments described, and may be implemented in various other forms, and within the spirit and scope of the present invention, one or more of the elements of the embodiments may be selectively combined and replaced.

In addition, unless expressly otherwise defined and described, the terms used in the embodiments of the present invention (including technical and scientific terms may be construed the same meaning as commonly understood by one of ordinary skill in the art to which this invention belongs, and the terms such as those defined in commonly used dictionaries may be interpreted as having a meaning that is consistent with their meaning in the context of the relevant art. Further, the terms used in the embodiments of the present invention are for describing the embodiments and are not intended to limit the present invention.

In this specification, the singular forms may also include the plural forms unless specifically stated in the phrase, and may include at least one of all combinations that may be combined in A, B, and C when described in "at least one (or more) of A (and), B, and C". Further, in describing the elements of the embodiments of the present invention, the terms such as first, second, A, B, (a), and (b) may be used.

These terms are only used to distinguish the elements from other elements, and the terms are not limited to the essence, order, or order of the elements. In addition, when an element is described as being "connected", "coupled", or "contacted" to another element, it may include not only when the element is directly "connected" to, "coupled" to, or "contacted" to other elements, but also when the element is "connected", "coupled", or "contacted" by another element between the element and other elements.

In addition, when described as being formed or disposed "on (over)" or "under (below)" of each element, the "on (over)" or "under (below)" may include not only when two elements are directly connected to each other, but also when one or more other elements are formed or disposed between two elements. Further, when expressed as "on (over)" or "under (below)", it may include not only the upper direction but also the lower direction based on one element.

"Optical axis (see OA) direction" used below is defined as an optical axis direction of a lens and/ or an image sensor coupled to a lens driving device.

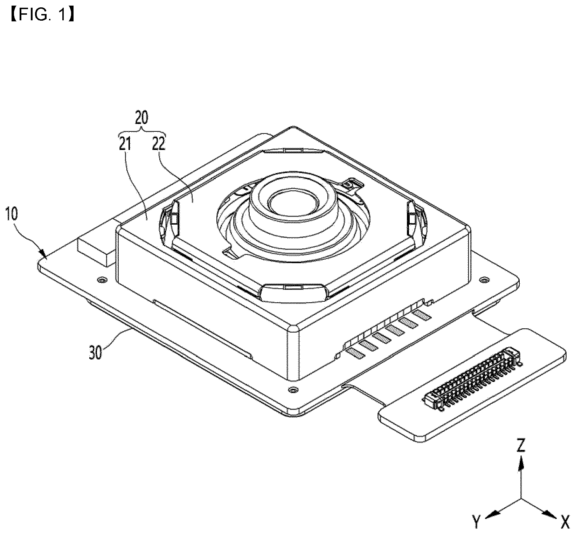

'Vertical direction' used below may be a direction parallel to the optical axis direction. The vertical direction may correspond to 'z-axis direction (see FIG. 1)'. That is, the optical axis direction, the vertical direction, and the third direction described below may be substantially the same direction.

'Horizontal direction' used below may be a direction perpendicular to the vertical direction. That is, the horizontal direction may be a direction perpendicular to the optical axis. Accordingly, the horizontal direction may include 'x-axis direction' and 'y-axis direction' (see FIG. 1). Meanwhile, the 'x-axis direction' may be substantially the same direction as the first direction described below, and the 'y-axis direction' may be substantially the same direction as the second direction described below.

"Auto focus function" used below is defined as a function for automatically adjusting a focus on a subject by adjusting a distance from an image sensor and moving a lens in the optical axis direction according to the distance of the subject so that a clear image of the subject may be obtained on the image sensor. Meanwhile, "auto focus" may correspond to "AF (Auto Focus)". In addition, it can be used interchangeably with 'auto focusing'.

"Camera shake correction function" used below is defined as a function of moving the lens and/or the image sensor so as to cancel vibration (movement) generated in the image sensor by external force. Meanwhile, "Camera shake correction function" may correspond to "Optical Image Stabilization (OIS).

'Yawing' used below may be a movement in a yaw direction rotating about the x-axis. 'Pitching' used below may be movement in a pitch direction rotating about the y-axis. However, the embodiment is not limited thereto, and a rotational motion about the x-axis may be defined as 'pitching', and a rotational motion about the y-axis may be defined as 'yawing'.

### <FIRST EMBODIMENT>

Hereinafter, the camera module according to the first embodiment will be described.

Hereinafter, a configuration of the camera module will be described with reference to the drawings.

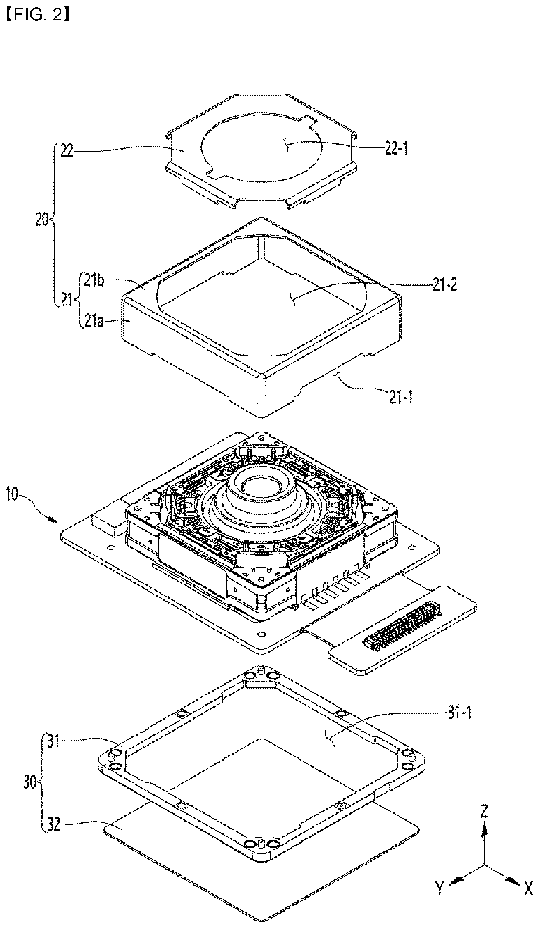

FIG. 1 is a perspective view of a camera module according to a first embodiment, and FIG. 2 is an exploded perspective view of a part of the camera module of FIG. 1.

The camera module may include the lens driving device 10 and a case.

The case may include a first case 20 and a second case 30.

The first case 20 and the second case 30 may protect the lens driving device 10. Specifically, the first case 20 may cover a side portion and an upper region of the lens driving device 10. In addition, the second case 30 may cover a lower region of the lens driving device 10. The first case 20 and the second case 30 may be referred to as 'shield can'. That is, the first case 20 may shield electromagnetic waves generated from side and upper portion of the lens driving device 10. In addition, the second case 30 may shield electromagnetic waves generated from the lower portion of the lens driving device 10. In addition, the first case 20 and the second case 30 may function as a stopper that limit the movement of the lens driving device 10. For example, the first case 20 may function as a stopper to limit an upward movement of a second moving part, which will be described later. For example, the second case 30 may function as a stopper to limit the movement of the first moving part to be described later.

The first case 20 may include a first-first case 21 covering a side region and an upper region of the lens driving device 10 and a first-second case 22 covering the upper region of the lens driving device 10.

The first-first case 21 may include a side plate 21a surrounding the side region to cover the side region of the lens driving device 10 and an upper plate 21b extending from an upper end of the side plate 21a.

The side plate 21a may include at least one first opening portion 21-1. The first opening portion 21-1 may open at least a part of the lens driving device 10 disposed in an inner space. Preferably, the first opening portion 21-1 of the side plate 21a may expose terminals of the first substrate (or main substrate) and terminals of the second substrate (or coil substrate), which will be described later. For example, the first opening portion 21-1 may open a soldering region for electrically connecting a terminal of the first substrate and a terminal of the second substrate to each other.

The upper plate 21b may cover a portion of the upper portion of the lens driving device 10. In addition, the upper plate 21b may open the remaining portion of the upper portion of the lens driving device 10. For example, the upper plate 21b may cover an upper edge region of the lens driving device 10. For example, the upper plate 21b may open a region other than an edge region of the lens driving device 10. To this end, the upper plate 21b may include a second opening portion 21-2. For example, the upper plate 21b may cover an upper region of a 'fixed part' of the lens driving device 10 to be described later.

The first-second case 22 is disposed within the second opening portion 21-2 of the upper plate 21b of the first-first case 21. The first-second case 22 may cover an inner region adjacent to the edge region of the lens driving device 10 of the lens driving device 10. For example, the first-second case 22 may cover a portion of the upper region of the 'first moving part' and the 'second moving part' disposed in the inner region of the 'fixed part' of the lens driving device 10 to be described later. In addition, the first-second case 22 may expose the remaining portion of the upper region of the 'first moving part' and the 'second moving part' of the lens driving device 10 to be described later. For example, the first-second case 22 may expose an upper region of a 'second frame' of a 'first moving part' to be described later. For example, the first-second case 22 may expose an upper region of a 'lens unit' of a 'second moving part' of the lens driving device 10 to be described later. To this end, the first-second case 22 may include a third opening portion 22-1.

Meanwhile, the first-second case 22 may cover an upper region of a 'third frame' of a 'second moving part' of the lens driving device 10 to be described later. In this case, the first-second case 22 may limit the movement of the 'second moving part'. For example, the first-second case 22 may limit the upward movement of the 'second moving part'. Specifically, the first-second case 22 may be spaced apart from the 'third frame' in an optical axis direction within a movable range of the 'second moving part'. In this case, when the 'second moving part' moves upward to a maximum based on the movable range, an upper end of the 'third frame' may come into contact with the first-second case 22. Accordingly, the first-second case 22 may also function as a stopper for limiting the upward movement of the 'second moving part'.

A second case 30 may be disposed under the lens driving device 10. The second case 30 may be a lower case covering a lower region of the lens driving device 10. The second case 30 may cover a lower region of the lens driving device 10 at a position spaced apart from the lower surface of the lens driving device 10 by a predetermined distance. To this end, the second case 30 may include a spacer 31 disposed on a lower surface of the lens driving device 10 and including a fourth opening portion 31-1, and a lower plate 32 covering the fourth opening portion 31-1 of the spacer 31. In this case, a thickness of the spacer 31 may be determined based on a movable range of the 'first moving part' of the lens driving device 10 to be described later. For example, the spacer 31 may prevent the lower plate 32 from interfering with the movement of the 'first moving part' within a movable range of the 'first moving part'. The lower plate 32 covers the fourth opening portion 31-1 of the spacer 31 to shield electromagnetic waves generated from the lens driving device 10. In this case, the lower plate 32 may limit the movement of the 'first moving part'. For example, the lower plate 32 may be spaced apart from the lower end of the 'second frame' of the 'first moving part' in the optical axis direction or the z-axis direction by the spacer 31 within the movable range of the 'first moving part'. In this case, when the 'first moving part' moves to the maximum in a downward direction based on the movable range, the lower end of the 'second frame' may come into contact with the lower plate 32. Accordingly, the lower plate 32 may also function as a stopper for limiting the movement of the 'first moving part'.

The lens driving device 10 may be disposed in an accommodation space formed by the first case 20 and the second case 30. In addition, at least a part of the lens driving device 10 may be exposed to an outside of the first case 20 and the second case 30. For example, a part of a 'fixed part' of the lens driving device 10 to be described later may be disposed outside the accommodation space of the first case 20 and the second case 30. Specifically, the 'first substrate (or main substrate)' of the 'fixed part' of the lens driving device 10 may be disposed outside the accommodation space formed by the first case 20 and the second case 30. The lens driving device 10 includes a 'lens' and moves the 'lens' in an optical axis direction or a z-axis direction to perform an auto focus correction operation (AF operation), or rotates the 'lens' about a x-axis or a y-axis to perform an image stabilization operation (OIS operation).

Hereinafter, the lens driving device 10 according to an embodiment will be described in detail.

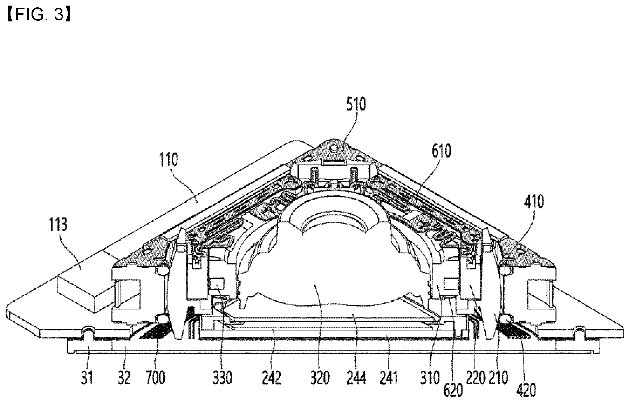

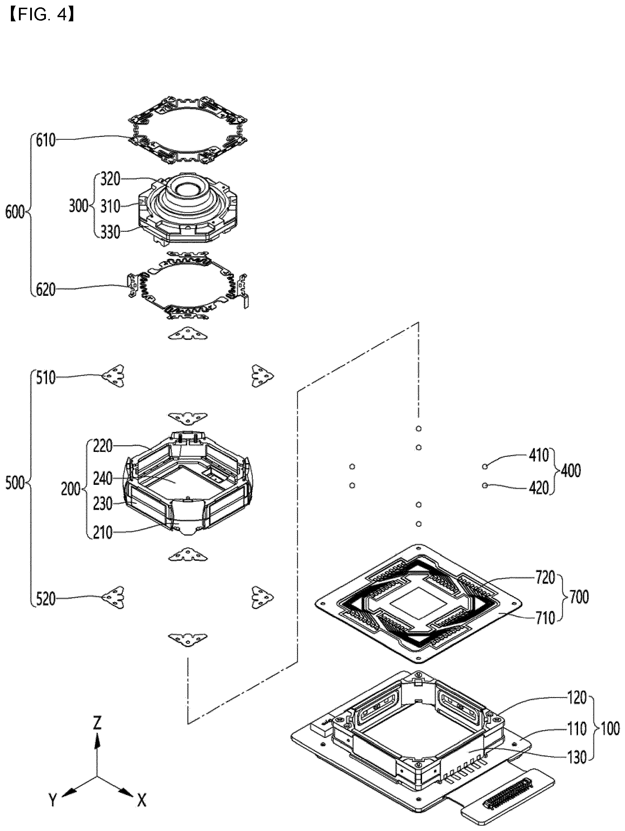

FIG. 3 is a cross-sectional perspective view of the lens driving device of FIG. 2, and FIG. 4 is an exploded perspective view of the lens driving device of FIG. 2.

FIGS. 3 and 4, the lens driving device 10 may include a fixed part 100, a first moving part 200, a second moving part 300, a guide member 400, a first elastic member 500, a second elastic member 600 and an elastic substrate 700. Such a lens driving device 10 may be a voice coil motor (VCM). The lens driving device 10 may be a lens driving motor. The lens driving device 10 may be a lens driving actuator. The lens driving device 10 may include an AF module. The lens driving device 10 may include an OIS module.

A position of the fixed part 100 may be fixed in the lens driving device 10. For example, the position of the fixed part 100 may be fixed during the OIS operation or AF operation of the lens driving device 10. The fixed part 100 may be disposed to surround the outside of the first moving part 200. The fixed part 100 may be spaced apart from the first moving part 200. Preferably, the fixed part 100 may be a part whose position is fixed when the first moving part 200 moves during the OIS operation of the lens driving device 10. In addition, the fixed part 100 may be a part whose position is fixed when the second moving part 300 moves during the AF operation of the lens driving device 10.

The first moving part 200 may be disposed in an inner space of the fixed part 100. The first moving part 200 may be spaced apart from the first moving part 200 in an inner space of the fixed part 100.

The first moving part 200 may relatively move with respect to the fixed part 100 in an inner space of the fixed part 100. For example, the first moving part 200 may rotate based on a first axis. For example, the first moving part 200 may perform a yawing motion of rotating about an x-axis corresponding to the first axis. For example, the first moving part 200 may rotate based on a second axis perpendicular to the first axis. For example, the first moving part 200 may perform a pitching operation to rotate about a y-axis corresponding to the second axis. Specifically, the first moving part 200 may be an OIS module for OIS operation. Here, the rotation may include tilting.

The second moving part 300 may be disposed in an inner space of the first moving part 200. The second moving part 300 may relatively move with respect to the fixed part 100 and the first moving part 200. For example, the second moving part 300 may move based on the third axis. For example, the second moving part 300 may perform an auto focusing operation moving in a z-axis (or optical axis) corresponding to the third axis. Specifically, the second moving part 300 may be an AF module for an AF operation.

The guide member 400 may be a rolling member. For example, the guide member 400 may include a plurality of balls. The guide member 400 may be disposed between the fixed part 100 and the first moving part 200. The guide member 400 may guide the first moving part 200 to move relatively with respect to the fixed part 100.

The first elastic member 500 may be a pressure member. The first elastic member 500 may correspond to the guide member 400. The first elastic member 500 may be provided to correspond to the number of balls constituting the guide member 400. The first elastic member 500 may be disposed on the fixed part 100. The first elastic member 500 may press the guide member 400. Specifically, the first elastic member 500 may include a coupling region coupled to the fixed part 100 and a contacting region extending from the coupling region and contacting the guide member 400. In addition, the contacting region of the first elastic member 500 has elasticity, and thus can press the guide member 400 in the z-axis direction.

The second elastic member 600 may elastically couple the second moving part 300 to the first moving part 200. The second elastic member 600 may elastically support the second moving part 300 with respect to the first moving part 200 so that the second moving part 300 may move in the inner space of the first moving part 200. Accordingly, the second moving part 300 can move in the z-axis direction corresponding to the optical axis by the elastic force of the second elastic member 600 while being elastically coupled to the first moving part 200.

The elastic substrate 700 may electrically connect the fixed part 100 and the first moving part 200 to each other. In this case, the elastic substrate 700 may be elastically connected so that the first moving part 200 is relatively movable with respect to the fixed part 100. The elastic substrate 700 may include a 'pattern part' that bends with elasticity when the first moving part 200 moves while electrically connecting the fixed part 100 and the first moving part 200.

Hereinafter, specific configurations of the fixed part 100, the first moving part 200, the second moving part 300, and the elastic substrate 700 constituting the lens driving device 10 will be described.

### <FIXED PART >

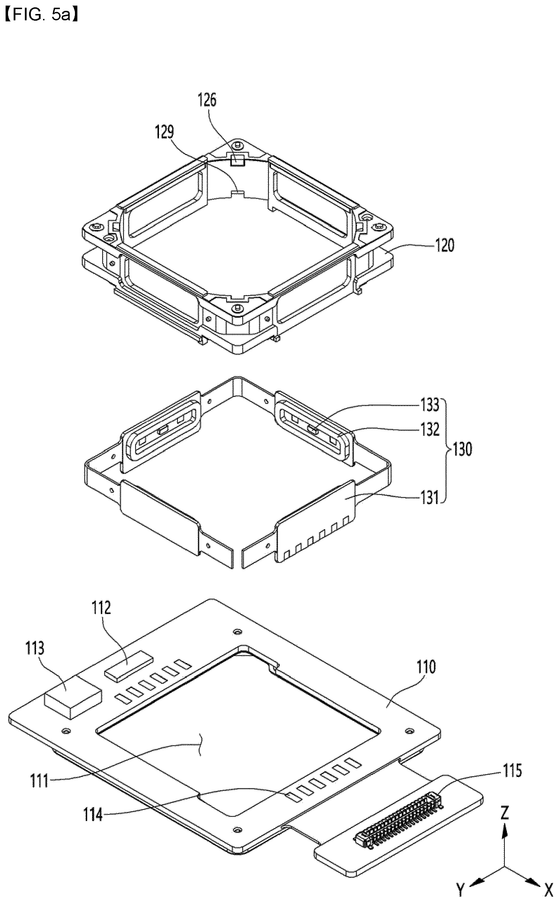

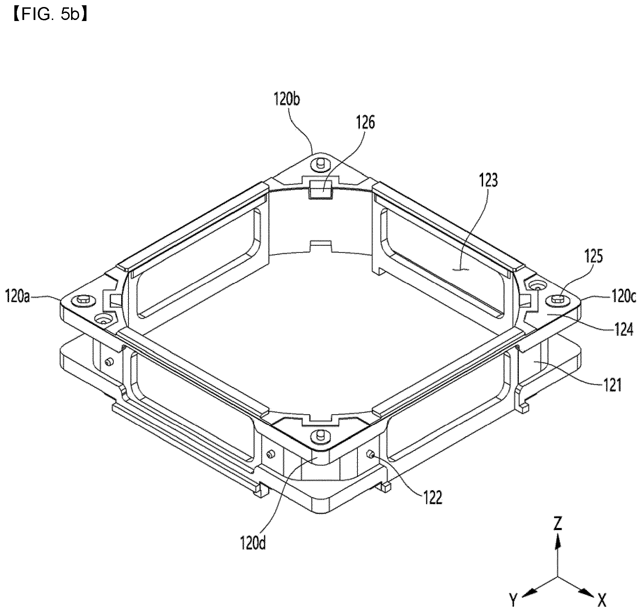

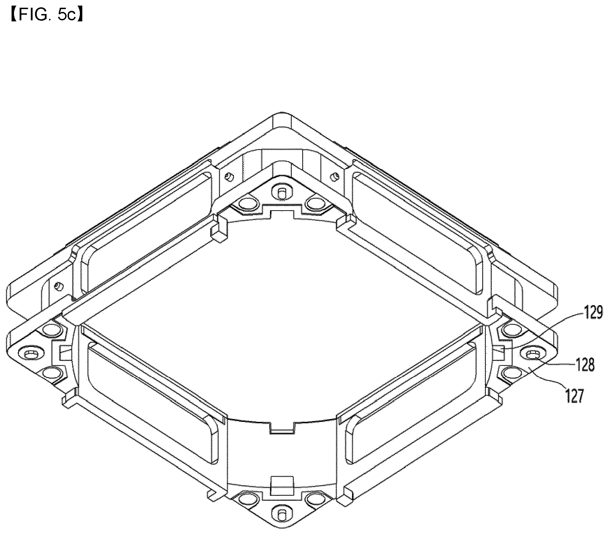

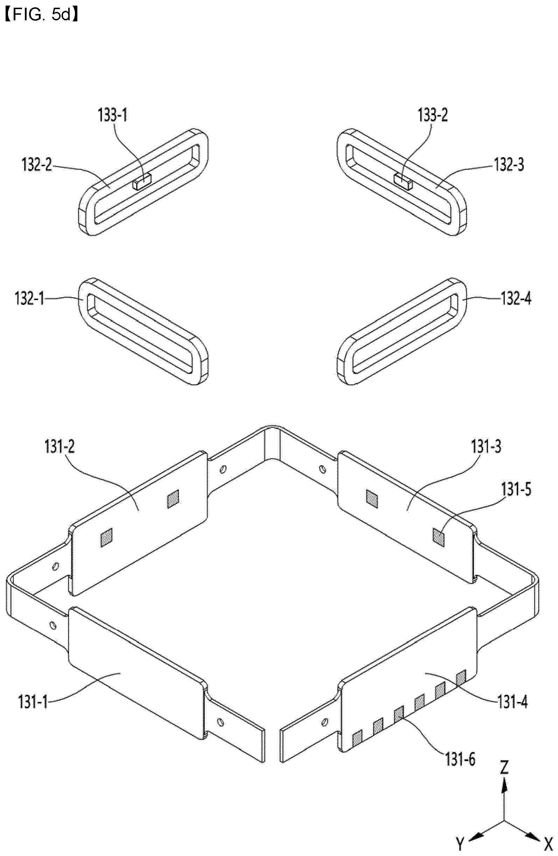

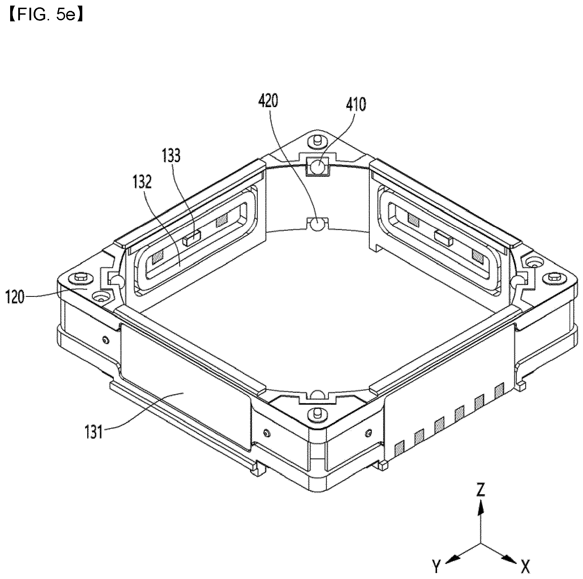

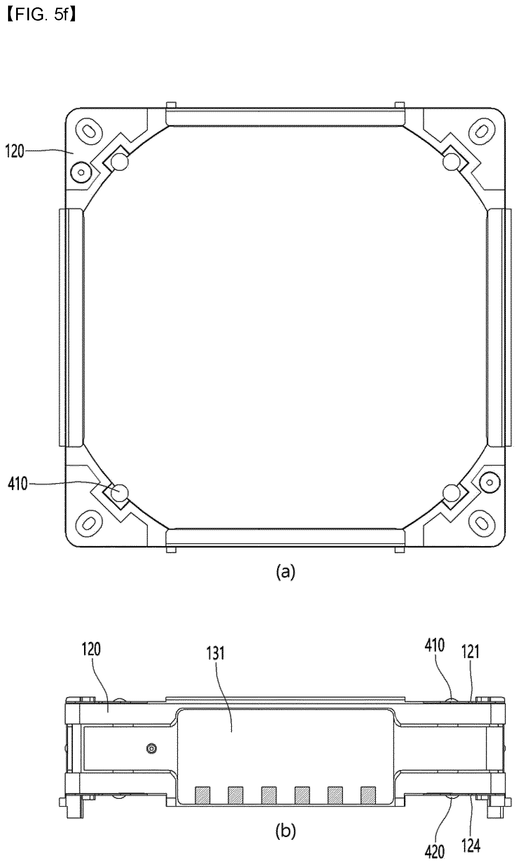

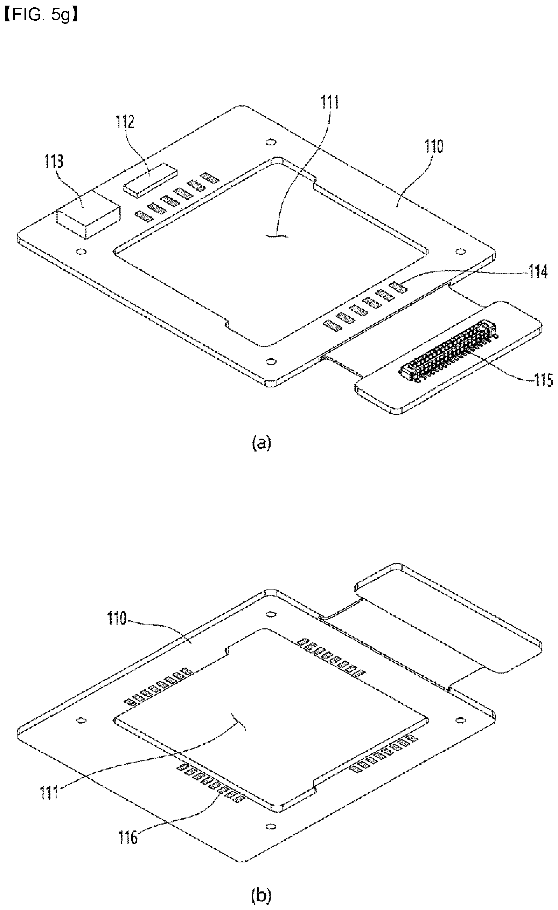

FIG. 5A is an exploded perspective view of the fixed part of FIG. 4, FIG. 5B is a first perspective view of the first frame of FIG. 5A, FIG. 5C is a second perspective view of the first frame of FIG. 5A, FIG. 5D is an exploded perspective view of the first driving member of FIG. 5A, FIG. 5E is a coupling view of a fixed part and a guide member according to an embodiment, FIG. 5F is a plan view and a side view in a state in which the guide member is coupled to the fixed part of the embodiment, and FIG. 5G is a perspective view of the main substrate of FIG. 5A. Hereinafter, the fixed part 100 will be described in detail with reference to FIGS. 5A to 5G.

The fixed part 100 includes a main substrate 110, a first frame 120 and a first driving member 130.

The first frame 120 may also be referred to as a housing or an outer shell. The first frame 120 may be directly or indirectly coupled to the main substrate 110. For example, an adhesive member (not shown) is applied between the first frame 120 and the main substrate 110, and the first frame 120 may be fixed or coupled to the main substrate 110 by the adhesive member. The first frame 120 may be disposed on the main substrate 110.

The first frame 120 may have a quadrangular shape having a space provided therein. However, the embodiment is not limited thereto, and the first frame 120 may have a circular shape or a polygonal shape in addition to the quadrangular shape.

The first frame 120 may include a plurality of sidewalls surrounding an inner space. For example, the first frame 120 may include first to fourth sidewalls.

The first frame 120 may include a first seating portion 121 on which the first driving member 130 is disposed or seated. For example, first to fourth sidewalls of the first frame 120 may include the first seating portion 121 on which the coil substrate 130 of the first driving member 130 is seated. The first seating portion 121 may have a groove shape depressed inward from an outer surface of the first to fourth sidewalls of the first frame 120.

The first frame 120 may include a first protrusion 122. The first protrusion 122 may be provided on the first seating portion 121 of the first frame 120. Specifically, the first protrusion 122 may protrude from the outer surface of the first seating portion 121 toward the outside of the first frame 120. The first protrusion 122 may firmly couple the coil substrate 130 seated on the first seating portion 121 to the first frame 120.

The first frame 120 may include a coil opening portion 123. For example, the first frame 120 may include the coil opening portion 123 formed on the first to fourth sidewalls, respectively. The coil opening portion 123 may be formed to penetrate between an outer surface and an inner surface of the first frame 120. The coil opening portion 123 may have a shape or size corresponding to a first coil part 132 constituting the first driving member 130.

The first frame 120 may include a plurality of corner portions. For example, the first frame 120 may include a plurality of corner portions connecting the first to fourth sidewalls. The first frame 120 may include at least four corner portions. Specifically, the first frame 120 may include a first corner portion 120a, a second corner portion 120b, a third corner portion 120c, and a fourth corner portion 140d.

The first frame 120 may include second seating portions formed at each of the plurality of corner portions. Specifically, a second-first seating portion 124 may be formed at an upper surface of the plurality of corner portions of the first frame 120. In addition, a second-second seating portion 127 may be provided at a lower surface of the plurality of corner portions of the first frame 120. The first elastic member 500 may be seated on the second-first seating portion 124 and the second-second seating portion 127. Specifically, as will be described later, the first elastic member 500 includes a plurality of first upper elastic members 510 disposed at an upper surface of the first frame 120 and a plurality of first lower elastic members 520 disposed at the lower surface of the first frame 120. In addition, a first upper elastic member 510 may be coupled to the second-first seating portion 124 of the first frame 120. In addition, the first lower elastic member 520 may be seated on the second-second seating portion 127 of the first frame 120. The second-first seating portion 124 may have a shape corresponding to the first upper elastic member 510. For example, the second-first seating portion 124 may have a triangular shape, but is not limited thereto. In addition, the second-second seating portion 127 may have a shape corresponding to the first lower elastic member 520. For example, the second-second seating portion 127 may have a triangular shape corresponding to the first lower elastic member 520, but is not limited thereto.

The first frame 120 may include a second protrusion formed on the second seating portion. For example, the first frame 120 may include a second-first protrusion 125 formed on the second-first seating portion 124. The second-first protrusion 125 may protrude upward from the second-first seating portion 124. The second-first protrusion 125 may firmly couple the first upper elastic member 510 to the second-first seating portion 124. In addition, the first frame 120 may include a second-second protrusion 128 formed on the second-second seating portion 127. The second-second protrusion 128 may protrude downward from the second-second seating portion 127. The second-second protrusion 128 may firmly couple the first lower elastic member 520 to the second-second seating portion 127.

An inner surface of the first frame 120 may include a curved surface. Specifically, inner surfaces of the plurality of corner portions of the first frame 120 may include curved surfaces. In this case, the inner surface of the first frame 120 may be a curved surface formed in a horizontal direction or a left-right direction. For example, the first frame 120 includes a first curved surface corresponding to the inner surface of the first corner portion 120a, a second curved surface corresponding to the inner surface of the second corner portion 120b, a third curved surface corresponding to the inner surface of the second corner portion 120c, and a fourth curved surface corresponding to the inner surface of the second corner portion 120d. In this case, radii of curvature of the first to fourth curved surfaces of the inner surface of the first frame 120 may be the same to each other and may have a first radius of curvature. For example, a virtual extension line connecting the first to fourth curved surfaces of the inner surface of the first frame 120 may be a circle having the first radius of curvature.

The first frame 120 may include a groove. For example, grooves may be formed on each inner surface of the first frame 120. The grooves may include a first groove 126 and a second groove 129. Specifically, the first groove 126 and the second groove 129 may be formed on an inner surface of each of a plurality of corner portions of the first frame 120. The first groove 126 and the second groove 129 may correspond to the guide member 400. For example, the number of the first grooves 126 and the second grooves 129 may correspond to the number of balls constituting the guide member 400.

The first groove 126 and the second groove 129 may be provided on an inner surface of the first frame 120 while being spaced apart in a z-axis direction (or an optical axis direction). Specifically, the first groove 126 may be formed on an upper surface of the first frame 120 and an inner surface connected to the upper surface. In addition, the second groove 129 may be formed on a lower surface of the first frame 120 and an inner surface connected to the lower surface.

The first groove 126 may correspond to an upper guide member 410 of the guide member 400. In addition, the second groove 129 may correspond to a lower guide member 420 of the guide member 400.

The first groove 126 may have a shape corresponding to a portion of the upper guide member 410. The first groove 126 accommodates a portion of the upper guide member 410, and thus the accommodated upper guide member 410 can rotate within the first groove 126. For example, the first groove 126 may include four first grooves formed on an upper portion of an inner surface of each corner portion. In addition, the upper guide member 410 may include four upper balls accommodated in each of the four first grooves.

The second groove 129 may have a shape corresponding to a portion of the lower guide member 420. The second groove 126 accommodates a portion of the lower guide member 420, and thus the accommodated lower guide member 420 can rotate within the second groove 129. For example, the second groove 129 may include four second grooves formed under the inner surface of each corner portion. In addition, the lower guide member 420 may include four lower balls accommodated in each of the four second grooves.

The first groove 126 and the second groove 129 may include a first inner wall and a second inner wall, respectively.

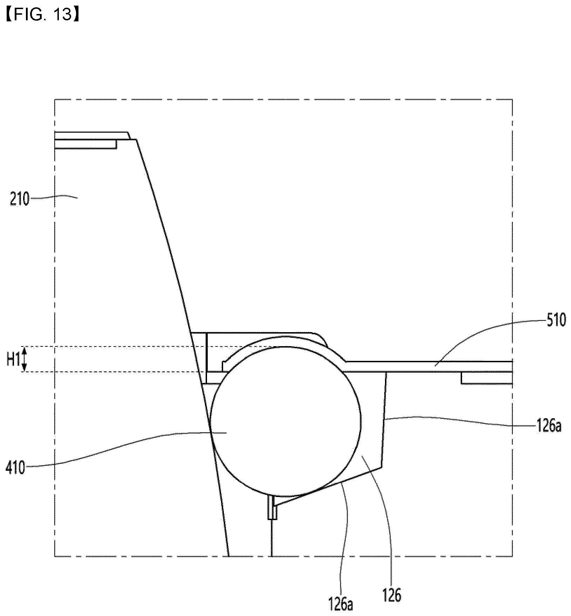

For example, referring briefly to FIG. 13, the first groove 126 may include a first inner wall 126a connected to the upper surface of the first frame 120 and extending downward with a first inclination angle, and a second inner wall 126b connected to the inner surface of the first frame 120 and extending from the second inner wall 126a at a second inclination angle. The first inner wall 126 may extend downward with the first inclination angle. The first inclination angle may be less than 90 degrees. For example, the first inner wall 126a may come closer to the inner surface of the first frame 120 toward a lower side. For example, a width of the first groove 126 may gradually decrease toward a lower direction due to the first inclination angle of the first inner wall 126a.

Meanwhile, the second inner wall 126b of the first groove 126 may extend from the first inner wall 126a to the inner surface of the first frame 120 at the second inclination angle. In this case, the second inclination angle may be an interior angle between the first inner wall 126a and the second inner wall 126b. In addition, the second inclination angle may be an obtuse angle greater than 90 degrees. Accordingly, the second inner wall 126b may come closer to the inner surface of the first frame 120 toward a lower side. In addition, a lowermost end of the second inner wall 126b may meet the inner surface of the first frame 120. In an embodiment, the first groove 126 may have a shape in which the width gradually decreases toward the lower direction as described above. For example, the first groove 126 may have a 'V' shape in which an interior angle has an obtuse angle. Accordingly, in the embodiment, a position of the upper guide member 410 disposed between the first frame 120 and the first moving part 200 may be adjusted. For example, the embodiment may adjust the position of the upper guide member 410 in the first groove 126 by adjusting the pressing force of the upper guide member 410 by the first upper elastic member 510. For example, when the pressing force of the first upper elastic member 510 decreases, the position of the upper guide member 410 may move upward in the first groove 126. In addition, in this case, adhesion between the first moving part 200 and the first frame 120 may be reduced by the upper guide member 410. Conversely, when the pressing force of the first upper elastic member 510 increases, the position of the upper guide member 410 may move downward in the first groove 126. In this case, adhesion between the first moving part 200 and the first frame 120 may increase by the upper guide member 410.

According to an embodiment, the upper guide member 410 is disposed in the first groove 126 and the upper guide member 410 may be pressurized using the first elastic member 510, and accordingly, it is possible to rotate the first frame 120 in a state where the upper guide member 410 is stably disposed between the first frame 120 and the first moving part 200. In addition, the embodiment may adjust a shape of the first groove 126 and adjust the pressing force of the first elastic member 510 on the guide member, and accordingly, it is possible to easily adjust the adhesion between the first frame 120 and the first moving part 200. According to this, the embodiment may remove a magnet or a yoke used to adjust the adhesion while pressing the guide member in a comparative example. Furthermore, the embodiment may minimize magnetic field interference generated during an auto-focus operation or an image stabilization operation by the magnet or yoke of the comparative example, and thereby improve operation reliability.

Meanwhile, although only the shape of the first groove 126 has been described above, the second groove 129 may also substantially have a shape corresponding to the first groove 126. For example, the second groove 129 may include a third inner wall connected to the lower surface of the first frame 120 and extending upward with a first inclination angle, and a fourth inner wall extending from the third inner wall at a second inclination angle and connected to the inner surface of the first frame 120. Substantially, the third inner wall may be symmetrical with the first inner wall 126a based on the horizontal direction, and the fourth inner wall may be symmetrical with the second inner wall 126b in the horizontal direction. Specifically, the second groove 129 may have a symmetrical shape with the first groove 126 based on the horizontal direction.

Meanwhile, the upper guide member 410 may be disposed in the plurality of first grooves 126 of the first frame 120, and the lower guide member 420 may be disposed in the plurality of second grooves 129. In this case, as shown in (a) of FIG. 5F, a portion of each of the upper guide member 410 and the lower guide member 420 is inserted into the first groove 126 and the second groove 129, and the remaining portion may protrude toward the inner space of the first frame 120. In addition, the portion of the upper guide member 410 and the lower guide member 420 protruding toward the inner space may contact an outer surface of a second frame 310 of the second moving part 300 disposed in the inner space of the first frame 120.

In addition, as shown in (b) of FIG. 5F, an upper end of the upper guide member 410 may be positioned higher than an upper surface of the first seating portion 121 in a state where the upper guide member 410 is inserted into the first groove 126. That is, a portion of the upper guide member 410 may be disposed within the first groove 126 and the remaining portion may protrude upward from the upper surface of the first seating portion 121. In addition, a height of the protruding portion of the upper guide member 410 may be adjusted by the pressing force of the first upper elastic member 510 seated on the first seating portion 121. Similarly, a lower end of the lower guide member 420 may be positioned lower than the lower surface of the second seating portion 124 in a state where the lower guide member 420 is inserted into the second groove 129. That is, a portion of the lower guide member 420 may be disposed within the second groove 129 and the remaining portion may protrude downward from the lower surface of the second seating portion 124. In addition, a height of the protruding portion of the lower guide member 420 may be adjusted by the pressing force of the second upper elastic member 520 seated on the second seating portion 124.

Meanwhile, the fixed part 100 may include a first driving member 130 coupled to the outer surface of the first frame 120. The first driving member 130 may include a coil substrate 131, a first coil part 132 and a hall sensor 133.

The coil substrate 131 may be a printed circuit board (PCB) or a flexible printed circuit board (FPCB). The coil substrate 131 may include a plurality of substrate regions. For example, the coil substrate 131 may include first to fourth substrate regions 131-1, 131-2, 131-3, and 131-4 corresponding to each of the first to fourth sidewalls of the first frame 120. In this case, the coil substrate 131 may also be referred to as a 'second substrate'.

For example, the first substrate region 131-1 of the coil substrate 131 may correspond to the first sidewall of the first frame 120. In addition, the second substrate region 131-2 of the coil substrate 131 may correspond to the second sidewall of the first frame 120. In addition, the third substrate region 131-3 of the coil substrate 131 may correspond to the third sidewall of the first frame 120. In addition, the fourth substrate region 131-4 of the coil substrate 131 may correspond to the fourth sidewall of the first frame 120. Coupling holes (not shown) may be provided at each substrate region of the coil substrate 131. For example, each substrate region of the coil substrate 131 may include a coupling hole inserted into the first protrusion 122 of the first frame 120. A first coil part 132 may be disposed on each substrate region of the coil substrate 131.

To this end, first pads 131-5 electrically connected to the first coil part 132 may be provided on an inner surface of each substrate region of the coil substrate 131.

In addition, the coil substrate 131 may be electrically connected to the main substrate 110 of the fixed part 100 to be described later. For example, the coil substrate 131 is electrically connected to the main substrate 110 to receive driving power for driving the first coil part 132, or to transmit position information acquired through the Hall sensor 133 to the main board 110. To this end, a second pad 131-6 electrically connected to the main substrate 110 may be provided on an outer surface of at least one of the four substrate regions of the coil substrate 131.

The first coil part 132 is disposed on inner surfaces of the first to fourth substrate regions 131-1, 131-2, 131-3, and 131-4 of the coil substrate 131, respectively. For example, the first coil part 132 may be disposed on the first pad 131-5 formed on inner surfaces of the first to fourth substrate regions 131-1, 131-2, 131-3, and 131-4. The first coil part 132 may include a plurality of first coils. For example, the first coil part 132 may include four first coils, but is not limited thereto.

Specifically, the first coil part 132 may include a first-first coil 132-1 disposed on the first substrate region 131-1, a first-second coil 132-2 disposed on the second substrate region 131-2, a first-third coil 132-3 disposed on the third substrate region 131-3, and a first-fourth coil 132-4 disposed on the fourth substrate region 131-4. The first coil part 132 may provide a driving force for rotating the first moving part 200 based on the x-axis or the y-axis by the interaction with the second driving member 230 of the first moving part 200 to be described later.

For example, the first-first coil 132-1 and the first-third coil 132-3 disposed facing the first-first coil 132-1 may rotate the first moving part 200 based on the x-axis by interaction with the second driving member 230. For example, the first-second coil 132-2 and the first-fourth coil 132-4 disposed facing the first-second coil 132-2 may rotate the first moving part 200 based on the y-axis by interaction with the second driving member 230.

The first driving member 130 includes a Hall sensor 133 disposed on the coil substrate 131. The Hall sensor 133 may be provided with at least two sensors. For example, the Hall sensor 133 may include a first Hall sensor 133-1 and a second Hall sensor 133-2.

The first hall sensor 133-1 may be disposed in an inner region of the first-second coil 132-2. The first hall sensor 133-1 may detect a degree of rotation of the first moving part 200 in the y-axis direction. For example, when the first moving part 200 rotates about the y-axis direction, the first hall sensor 133-1 may detect position information of the rotated first moving part 200. In this case, it is shown in the drawing that the first Hall sensor 133-1 is disposed inside the first-second coil 132-2, but is not limited thereto. For example, the first Hall sensor 133-1 may be disposed inside the first-fourth coil 132-4 facing the first-second coil 132-2.

The second hall sensor 133-2 may be disposed in an inner region of the first-third coil 132-3. The second hall sensor 133-2 may detect a degree of rotation of the first moving part 200 in the x-axis direction. For example, when the first moving part 200 rotates about the x-axis direction, the second hall sensor 133-2 may detect position information of the rotated first moving part 200. In this case, it is shown in the drawing that the second Hall sensor 133-2 is disposed inside the first-third coil 132-3, but is not limited thereto. For example, the second hall sensor 133-2 may be disposed inside the first-first coil 132-1 facing the first-third coil 132-3.

Meanwhile, the first coil part 132 and the hall sensor 133 may be exposed to an inner space of the first frame 120. Specifically, the first coil part 132 and the hall sensor 133 may be disposed in the coil opening portion 123 of the first frame 120. In addition, the first coil part 132 and the Hall sensor 133 may be disposed directly facing the first moving part 200 disposed in the inner space of the first frame 120. Specifically, the first coil part 132 and the hall sensor 133 may be disposed directly facing the second driving member 230 of the first moving part 200 disposed in the inner space of the first frame 120.

The fixed part 100 may include a main substrate 110. The main substrate 110 may also be referred to as a 'first substrate'. The main substrate 110 may be coupled to the first frame 120. The main substrate 110 may be a substrate electrically connected to an external device. Here, the external device may be a power supply unit and/or a control unit of an optical device. The main substrate 110 may be disposed below the first frame 120. The main substrate 110 may be a printed circuit board (PCB) or a flexible printed circuit board (FPCB). The main substrate 110 may be a rigid circuit board (RPCB). The main substrate 110 may be a rigid flexible circuit board (RFPCB) to which an RPCB and an FPCB are connected. The main substrate 110 may include a connector 115 for connection with an external device.

The main substrate 110 may include an opening portion 111 in which an region overlapping the first moving part 200 and the second moving part 300 in the optical axis direction is open.

A third pad 114 may be disposed on an upper surface of the main substrate 110 adjacent to the opening portion 111. The third pad 114 may be formed to surround the upper surface of the main substrate 110 adjacent to the opening portion 111. The third pad 114 may be electrically connected to the coil part 132. Specifically, the third pad 114 may be electrically connected to the second pad 131-6 of the coil substrate 131 through soldering or the like.

The main substrate 110 may include a first driver IC 112. The first driver IC 112 may be electrically connected to the first coil part 132. The first driver IC 112 may be electrically connected to the Hall sensor 133. The first driver IC 112 may supply current to the first coil part 132 to control the first moving part 200 to rotate about the x-axis or y-axis. In addition, the first driver IC 112 may adjust the direction or strength of the current applied to the first coil part 132 based on the position information sensed through the Hall sensor 133.

The main substrate 110 may include a gyro sensor 113. The gyro sensor 113 may detect image shake information. For example, the gyro sensor 113 may detect movement of a user using a camera module in which the lens driving device 10 is mounted.

Meanwhile, the first driver IC 112 and the gyro sensor 113 may be exposed to the outside of the first case 20. For example, the first case 20 may be disposed while covering the remaining portion of the main substrate 110 in a state in which the first driver IC 112 and the gyro sensor 113 of the main substrate 110 are exposed to the outside.

The main substrate 110 may include a fourth pad 116 provided at a lower surface. The fourth pad 116 may be disposed adjacent to the opening portion 111 at the lower surface of the main substrate 110. The fourth pad 116 may be electrically connected to an elastic substrate 700 to be described later.

### <SECOND MOVING PART >

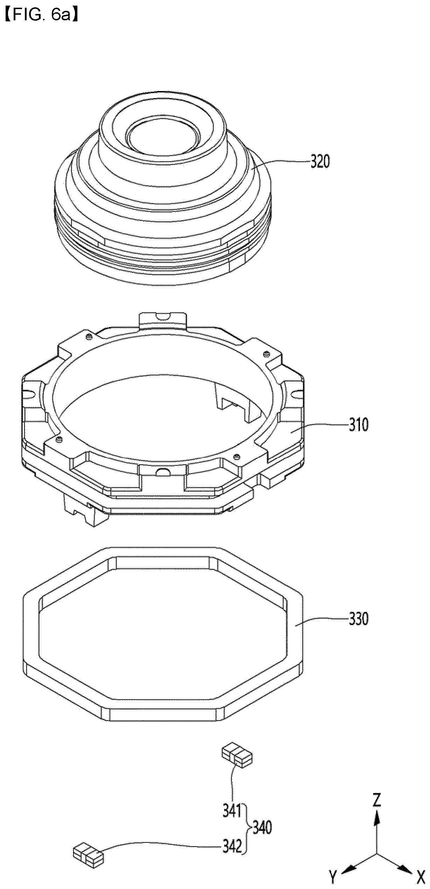

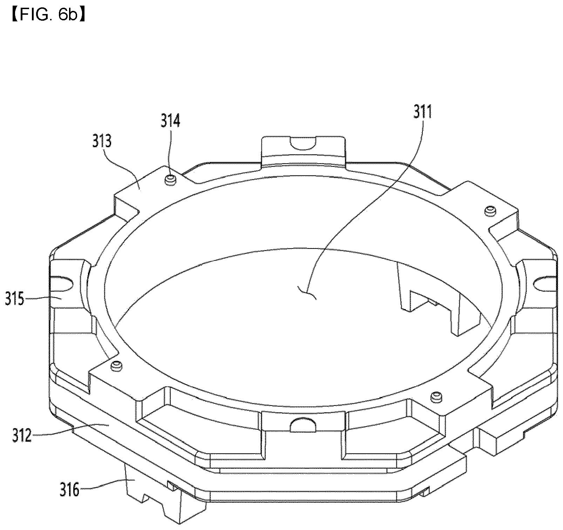

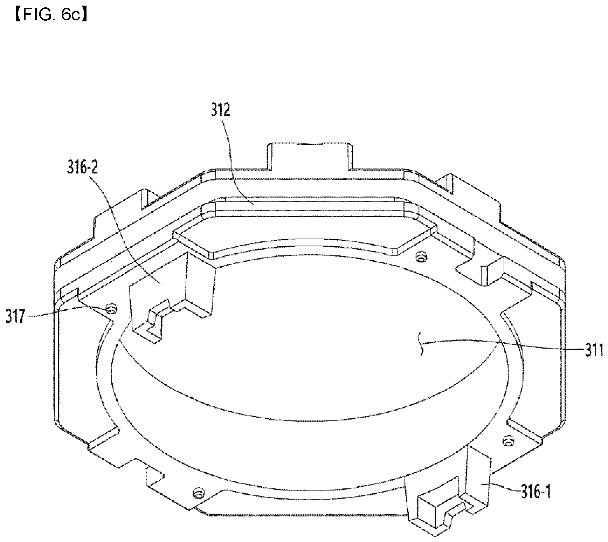

FIG. 6A is an exploded perspective view of the second moving part according to the first embodiment, FIG. 6B is a first perspective view of the third frame of FIG. 6A, and FIG. 6C is a second perspective view of the third frame of FIG. 6A.

Referring to FIGS. 6A to 6C, the second moving part 300 may include a third frame 310, a lens 320, a third driving member 330, and a sensing magnet 340.

The second moving part 300 is disposed in an inner space of the fixed part 100 and an inner space of the first moving part 200. Preferably, the second moving part 300 is disposed to be relatively movable with respect to the fixed part 100 and the first moving part 200.

To this end, the second moving part 300 may include a third frame 310.

The third frame 310 may accommodate the lens 320 in an inner space 311. Preferably, the lens 320 may be accommodated in the inner space 311 of the third frame 310 and fixed or coupled to the third frame 310. For example, the lens 320 and the third frame 310 may be coupled by screwing and/or adhesive. The lens 320 may be accommodated in the inner space 311 of the third frame 310. The lens 320 may be disposed at a position corresponding to an 'image sensor' to be described later. For example, the lens 320 may be aligned with the 'image sensor' in the optical axis direction. The lens 320 may be disposed inside a barrel. For example, the barrel may be disposed between the inner space 311 of the third frame 310 and the lens 320. More specifically, the lens 320 may be coupled to the barrel, and the barrel may be coupled to the third frame 310. The lens 320 may be composed of a plurality of sheets.

The third frame 310 may also be referred to as a 'bobbin' on which a coil is wound. To this end, the outer surface of the third frame 310 may include a winding portion 312 on which the second coil part 330 is wound.

The third frame 310 includes a plurality of protruding portions.

Specifically, the third frame 310 may include a plurality of first protruding portions 313 spaced apart from each other on an upper surface of the third frame. The first protruding portion 313 may protrude from the upper surface of the third frame 120 with a first height. The first protruding portion 313 may be a seating portion on which the second elastic member 600 is seated. To this end, a third protrusion 314 to which the second elastic member 600 is coupled may be formed on the upper surface of the first protruding portion 313. The third protrusion 314 may protrude upward from an upper surface of the first protruding portion 313. For example, the second elastic member 600 includes a second upper elastic member 610 and a second lower elastic member 620. In addition, the third protrusion 314 may be coupled to the second upper elastic member 610.

In addition, the third frame 310 may include a plurality of second protruding portions 315 spaced apart from the first protruding portion 313 on an upper surface of the third frame. The second protruding portion 315 may be a stopper that limits movement of the second moving part 300. For example, the second protruding portion 315 may protrude from the upper surface of the third frame 310 with a second height. In this case, the second height may be greater than the first height. Specifically, the upper surface of the second protruding portion 315 may be positioned higher than the upper surface of the first protruding portion 313. More specifically, an upper surface of the second protruding portion 315 may be positioned higher than an upper end of the third protrusion 314. Accordingly, when the second moving part 300 moves in the z-axis direction, the embodiment may prevent interfere of the second elastic member 600 coupled to the first protruding portion 313 and the third protrusion 314. The second protruding portion 315 may selectively contact the first case 20 when the second moving part 300 moves. Specifically, when the second moving part 300 moves to the maximum in the upward direction, the second protruding portion 315 may contact the lower surface of the first case 20. Accordingly, the movement of the second moving part 300 in an upward direction out of a movable range may be limited by the second protruding portion 315.

A sensing magnet receiving portion may be provided at a lower surface of the third frame 310. For example, the third frame 310 may include a first sensing magnet receiving portion 316-1 and a second sensing magnet receiving portion 316-2 facing each other with the inner space 311 therebetween and provided at the lower surface of the third frame.

The first sensing magnet receiving portion 316-1 may receive the first sensing magnet 341. In addition, the second sensing magnet receiving portion 316-2 may receive the second sensing magnet 342. At least one of the first sensing magnet 314 and the second sensing magnet 342 may detect position information of the second moving part 300. For example, when the second moving part 300 moves, a distance between the first sensing magnet 341 and the second sensing magnet 342 and a 'second driver IC' to be described later may change. In addition, the second driver IC senses a strength of the magnetic field that varies according to the distance to the first sensing magnet 341 or the second sensing magnet 342, and may detect a position of the lens 320, a position of the third frame 310, or a position of the second moving part 300.

Meanwhile, in the embodiment, the position of the second moving part 300 may be sensed using both the first sensing magnet 341 and the second sensing magnet 342, or the position of the second moving part 300 can be sensed using only one of these. In this case, when the position of the second moving part 300 is sensed using only one of the first sensing magnet 341 and the second sensing magnet 342, the other sensing magnet may not be provided. However, when only one of the first sensing magnet 341 and the second sensing magnet 342 is provided, it may affect the reliability of the AF operation of the second moving part 300. For example, the first sensing magnet 341 and the second sensing magnet 342 as described above generate attraction with the second driving member 230 to be described later. In addition, when only one of the first sensing magnet 341 and the second sensing magnet 342 is provided, the attraction with the second driving member 230 occurs only in a specific region of the second moving part 300, and this may cause a reliability problem such as positional dislocation of the second moving part 300. Accordingly, even when the position detection is performed using only one of the first sensing magnet 341 and the second sensing magnet 342, the embodiment allows the first sensing magnet 341 and the second sensing magnet 342 to be disposed at mutual positions of the lower surface of the third frame 310, respectively, thereby solving reliability problems such as positional distortions.

Meanwhile, the third frame 310 may include a fourth protrusion 317 provided at a lower surface of the third frame. The fourth protrusion 317 may be coupled with the second lower elastic member 620. That is, a fourth seating portion corresponding to the third seating portion 313 may be provided at the lower surface of the third frame 310. In addition, a fourth protrusion 317 protruding downward may be formed on the fourth seating portion. In addition, the second lower elastic member 620 may be coupled to the fourth seating portion and the fourth protrusion 317.

### <FIRST MOVING PART >

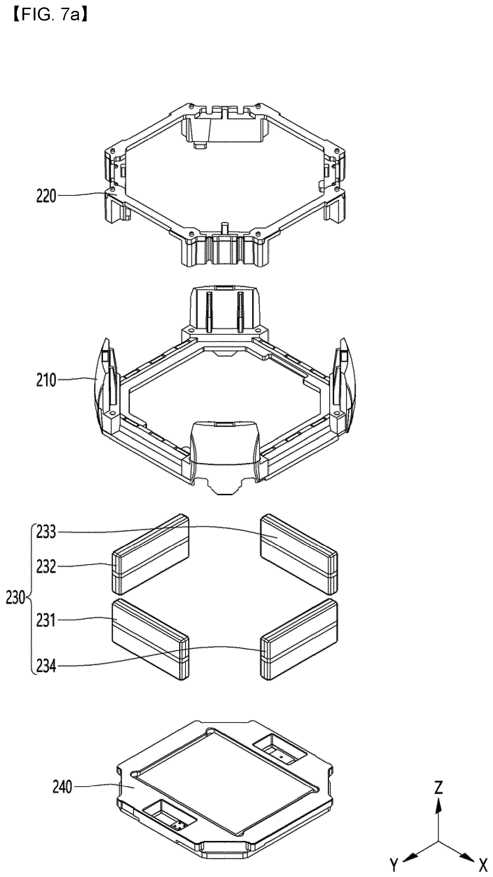

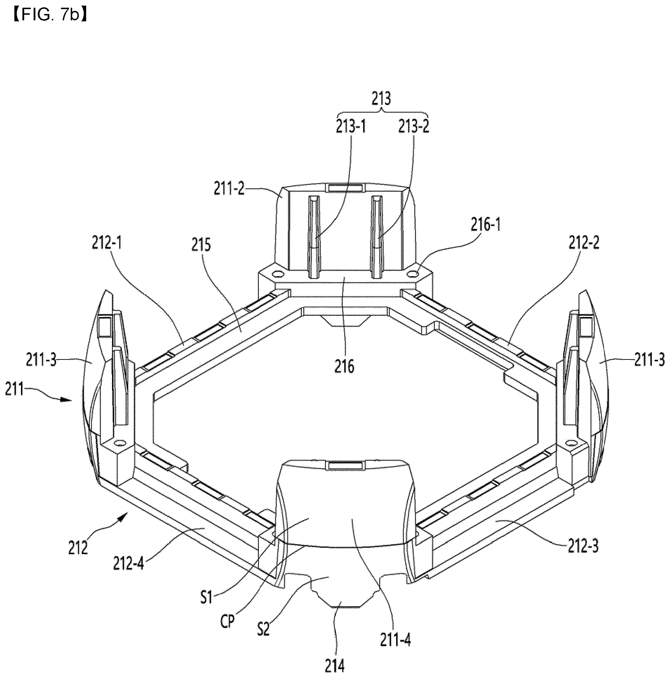

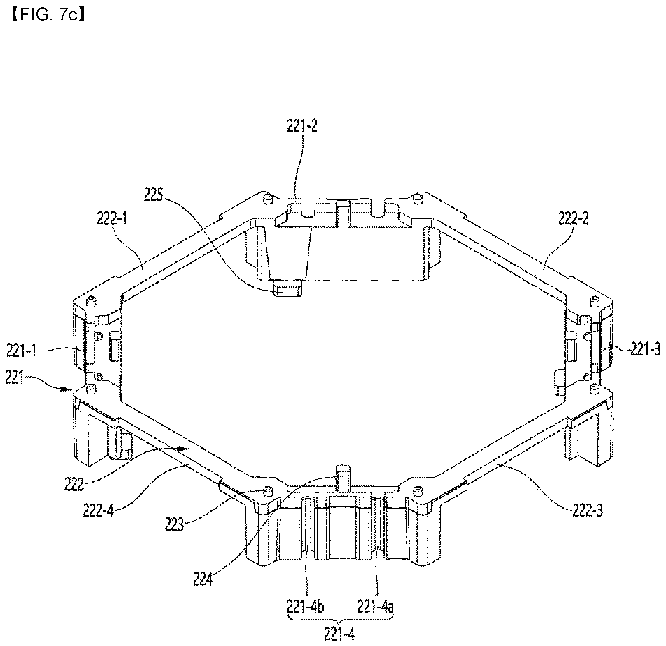

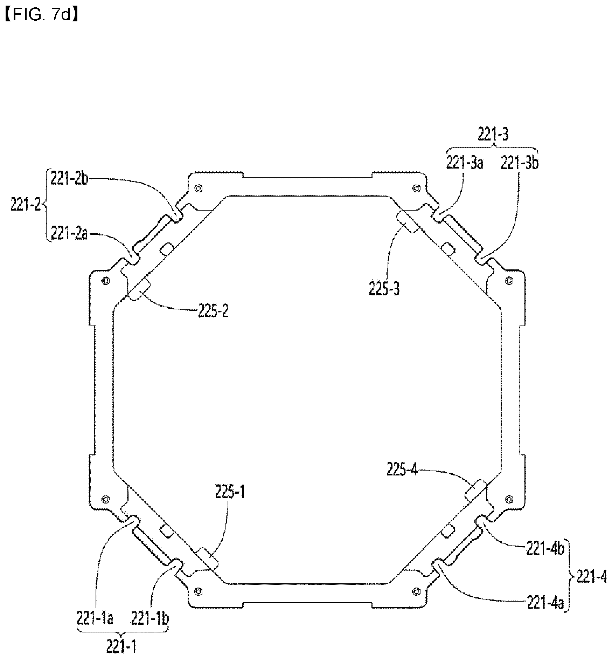

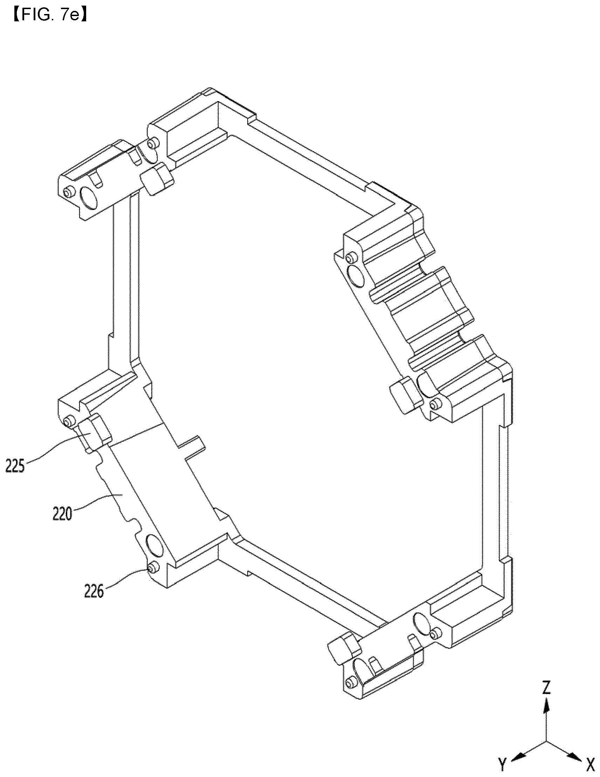

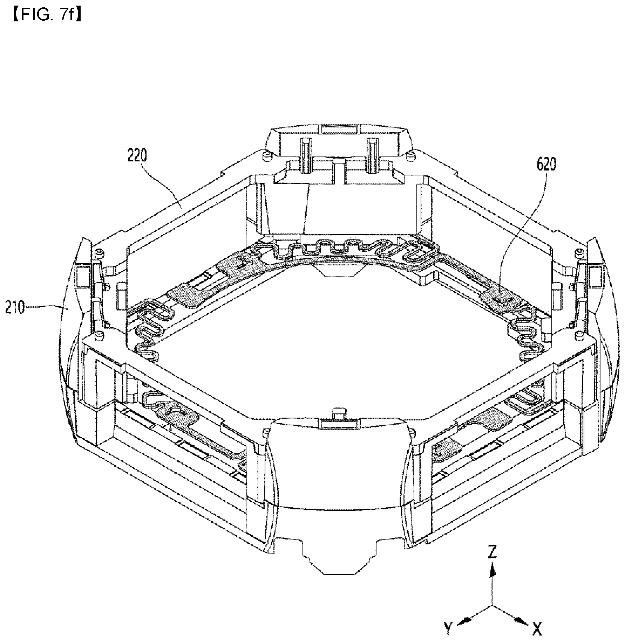

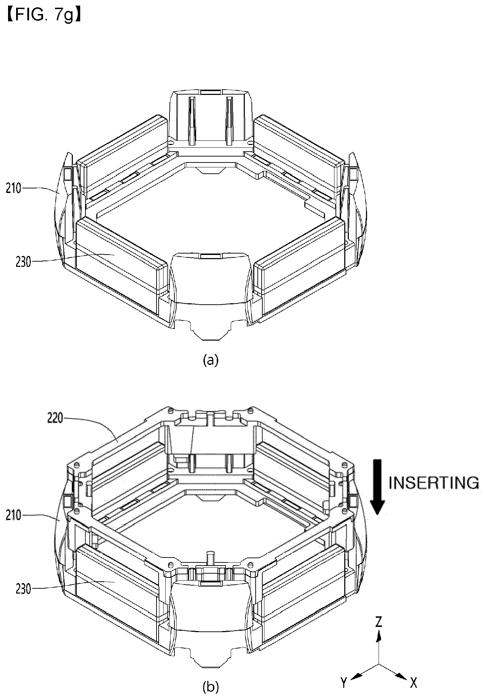

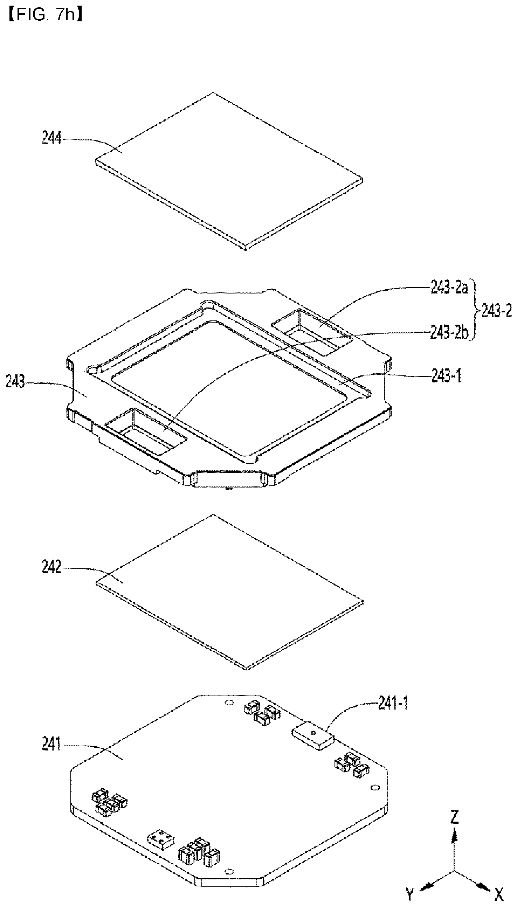

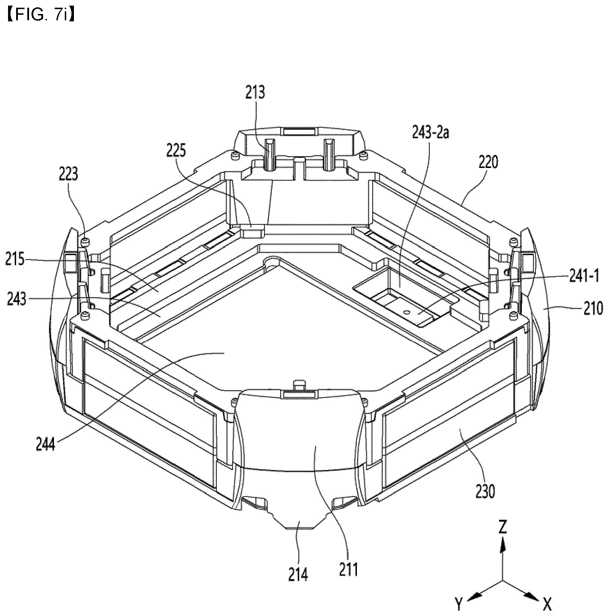

FIG. 7A is an exploded perspective view of the first moving part according to the first embodiment, FIG. 7B is a perspective view of the second frame of FIG. 7A, FIG. 7C is a first perspective view of the subframe of FIG. 7A, FIG. 7D is a plan view of FIG. 7C, FIG. 7E is a second perspective view of the subframe of FIG. 7A, FIG. 7F is a view for explaining the coupling structure of the second frame, the subframe and the second lower elastic member, FIG. 7G is a view for explaining a coupling structure of a second frame, a second driving member, and a subframe according to the first embodiment, FIG. 7H is an exploded perspective view of the sensor part of FIG. 7A, and FIG. 7I is a coupling view of the first moving part according to the first embodiment. Hereinafter, the first moving part 200 according to the embodiment will be described in detail with reference to FIGS. 7A to 7I.

The first moving part 200 may be disposed between the fixed part 100 and the second moving part 300.

The first moving part 200 may include a second frame 210.

The second frame 210 may include an outer surface 211 corresponding to an inner surface of the first frame 120. The second frame 210 may include an outer surface 211 in contact with the guide member 400.

Specifically, the second frame 210 may include a first outer surface 211-1 corresponding to an inner surface of the first corner portion 120a of the first frame 120. In addition, the second frame 210 may include a second outer surface 211-2 corresponding to an inner surface of the second corner portion 120b of the first frame 120. In addition, the second frame 210 may include a third outer surface 211-3 corresponding to an inner surface of the third corner portion 120c of the first frame 120. In addition, the second frame 210 includes a fourth outer surface 211-4 corresponding to the inner surface of the fourth corner portion 140d of the first frame 120. In this case, the outer surface 211 of the second frame 210 may be referred to as a 'sliding part' that slides by the guide member 400 disposed in the grooves 126 and 129 of the first frame 120.

The outer surface 211 of the second frame 210 may include a curved surface. For example, the outer surface 211 of the second frame 210 may include a curved surface formed in an optical axis direction, a z axis direction, or a vertical direction. In addition, the outer surface 211 of the second frame 210 may include a curved surface formed along a left-right direction or a horizontal direction.

Each of the curved surfaces of the first to fourth outer surfaces 211-1, 211-2, 211-3, and 211-4 may be depressed inward from a central region CP toward an upper region. Each of the curved surfaces of the first to fourth outer surfaces 211-1, 211-2, 211 - 3, and 211-4 may protrude outward from the upper region toward the central region CP. Each of the curved surfaces of the first to fourth outer surfaces 211-1, 211-2, 211-3, and 211-4 may be depressed inward from the central region CP to the lower region. Each of the curved surfaces of the first to fourth outer surfaces 211-1, 211-2, 211-3, and 211-4 may protrude outward from the lower region toward the central region CP.

Each of the curved surfaces of the first to fourth outer surfaces 211-1, 211-2, 211-3, and 211-4 may include a first curved surface S1 corresponding to an upper region based on the central region CP and a second curved surface S2 corresponding to a lower region based on the central region CP. In the first embodiment, a radius of curvature of the first curved surface S1 may be same as a radius of curvature of the second curved surface S2.

For example, a virtual first surface formed by connecting the first curved surfaces S1 of the first to fourth outer surfaces 211-1, 211-2, 211-3, and 211-4 in the x-axis, y-axis, and z-axis directions may have a hemisphere shape having a first radius of curvature.

In addition, a virtual second surface formed by connecting the second curved surfaces S2 of the first to fourth outer surfaces 211-1, 211-2, 211-3, and 211-4 in the x-axis, y-axis, and z-axis directions may have a hemisphere shape having the first radius of curvature symmetrical to the virtual first surface.

For example, a virtual third surface formed by connecting the first curved surfaces S1 and the second curved surfaces S2 of the first to fourth outer surfaces 211-1, 211-2, 211-3, and 211-4 in the x-axis, y-axis, and z-axis directions may have a sphere shape having the first radius of curvature.

Meanwhile, the guide member 400 may move along the first to fourth outer surfaces 211-1, 211-2, 211-3, and 211-4 of the second frame 210.

Specifically, the upper guide member 410 may move along the first curved surface S1 of the first to fourth outer surfaces 211-1, 211-2, 211-3, and 211-4, respectively, in the optical axis direction. In addition, the lower guide member 420 may move along the second curved surface 21 of the first to fourth outer surfaces 211-1, 211-2, 211-3, and 211-4, respectively, in the optical axis direction.

Accordingly, the first moving part 200 can rotate about the x-axis or rotate about the y-axis according the curvature of the first to fourth outer surfaces 211-1, 211-2, 211-3, and 211-4 in the optical axis direction.

The second frame 210 includes a magnet mounting portion. Specifically, the second frame 210 includes a first magnet mounting portion 212 supporting a lower side of the second driving member 230. The first magnet mounting portion 212 may be positioned between the first to fourth outer surfaces 211-1, 211-2, 211-3, and 211-4. For example, the first magnet mounting portion 212 may include a first-first magnet mounting portion 212-1 disposed between the first outer surface 211-1 and the second outer surface 211-2. For example, the first magnet mounting portion 212 may include a first-second magnet mounting portion 212-2 disposed between the second outer surface 211-2 and the third outer surface 211-3. For example, the first magnet mounting portion 212 may include a first-third magnet mounting portion 212-3 disposed between the third outer surface 211-3 and the fourth outer surface 211-4. For example, the first magnet mounting portion 212 may include a first-fourth magnet mounting portion 212-4 disposed between the first outer surface 211-1 and the fourth outer surface 211-4.

The first magnet mounting portion 212 may accommodate a portion of a lower portion of the second driving member 230 disposed on the second frame 210 and a portion of the side portion of the second driving member 230.

The second frame 210 may include a rail. Specifically, the second frame 210 may include first rails 213 disposed on inner surfaces of the first to fourth outer surfaces 211-1, 211-2, 211-3, and 211-4. The first rail 213 may also be referred to as a 'coupling portion' or 'fixing portion' for inserting or fitting or fixing the subframe 220 to the second frame 210.

The first rail 213 may include a first-first rail 213-1 and a first-second rail 213-2 disposed on the inner surfaces of the first to fourth outer surfaces 211-1, 211-2, 211-3, and 211-4, respectively. The first-first rail 213-1 and the first-second rail 213-2 may be spaced apart from each other at a predetermined interval on an inner surface of each of the second frame 213. For example, each of the first-first rail 213-1 and the first-second rail 213-2 may be formed to extend in the z-axis direction or the optical axis direction on the inner surface of the second frame 210. Accordingly, the first rail 213 can enable a subframe 220 to be inserted and coupled in the optical axis direction from an upper portion of the second frame 210.

Each of the first-first rail 213-1 and first-second rail 213-2 as described above may protrude inward from the inner surface of the second frame 210, and may have a protrusion shape extending in the optical axis direction. Accordingly, the first-first rail 213-1 and the first-second rail 213-2 may be referred to as a 'coupling protrusion'. However, the embodiment is not limited thereto, and each of the first-first rail 213-1 and first-second rail 213-2 may have a groove shape extending in the optical axis direction rather than a protrusion shape. In addition, when the first-first rail 213-1 and the first-second rail 213-2 have a groove shape, a second rail 221 of the subframe 220 corresponding thereto may have a protrusion shape.

The second frame 210 includes a third protruding portion 214 for a stopper function. The third protruding portion 214 may extend downward from the outer surface 211 of the second frame 120. Specifically, the third protruding portion 214 may be formed to extend downward from a lower end of the second curved surface S2 of the outer surface 211. A lower end of the third protruding portion 214 may be positioned lower than a lower surface of the second frame 210. In addition, the third protruding portion 214 may not contact other components of the lens driving apparatus 10 within a movable range of the second frame 210. Further, when the second frame 210 has a movement out of the movable range, the third protruding portion 214 may contact a specific component of the lens driving device 10. Specifically, the third protruding portion 214 may contact the lower plate 32 of the second case 30 when the second frame 210 moves to the maximum within the movable range.

For example, the third protruding portion 214 is provided at each of the first to fourth outer surfaces 211-1, 211-2, 211-3, and 211-4 of the second frame 210. In addition, the second frame 210 may rotate about a first x-axis direction, a second x-axis direction, a first y-axis direction, and a second y-axis direction. The first x-axis direction may mean that the first outer surface 211-1 and the fourth outer surface 211-4 of the second frame 210 move in an downward direction, and correspondingly, the second outer surface 211-2 and the third outer surface 211-3 move in an upward direction. The second x-axis direction may mean that the first outer surface 211-1 and the fourth outer surface 211-4 of the second frame 210 move in an upward direction, and correspondingly, the second outer surface 211-2 and the third outer surface 211-3 move in a downward direction. The first y-axis direction may mean that the first outer surface 211-1 and the second outer surface 211-2 of the second frame 210 move in a downward direction, and correspondingly, the third outer surface 211-3 and the fourth outer surface 211-4 move in an upward direction. The second y-axis direction may mean that the first outer surface 211-1 and the second outer surface 211-2 of the second frame 210 move in an upward direction, and correspondingly, the third outer surface 211-3 and the fourth outer surface 211-4 move in a downward direction.

In addition, when the second frame 210 is moved or rotated at the maximum in the first x-axis direction, a third protruding portion provided at the first outer surface 211-1 and the fourth outer surface 211-4 of the second frame 210 may contact the lower plate 32 of the second case 30.

In addition, when the second frame 210 is moved or rotated at the maximum in the second x-axis direction, a third protruding portion provided on the second outer surface 211-2 and the third outer surface 211-3 of the second frame 210 may contact the lower plate 32 of the second case 30.

In addition, when the second frame 210 is moved or rotated at the maximum in the first y-axis direction, a third protruding portion provided on the first outer surface 211-1 and the second outer surface 211-2 of the second frame 210 may contact the lower plate 32 of the second case 30.

In addition, when the second frame 210 is moved or rotated at the maximum in the second y-axis direction, a third protruding portion provided on the third outer surface 211-3 and the fourth outer surface 211-4 of the second frame 210 may contact the lower plate 32 of the second case 30.

The second frame 210 may include a fifth seating portion 215 and a sixth seating portion 216. The fifth seating portion 215 and the sixth seating portion 216 may be a stepped protrusion protruding from the inner surface of the second frame 210 in an inward direction (a direction toward the second moving part). The fifth seating portion 215 may be a seating portion on which the sensor part 240 is seated. The sixth seating portion 216 may be a seating portion to which the second elastic member 600 is fixed or coupled while the subframe 220 is seated.

To this end, a coupling groove 216-1 may be provided at the sixth seating portion 216. For example, when the subframe 220 is inserted into and coupled to the first rail 213, the upper surface of the sixth seating portion 216 contacts the subframe 220 so that the subframe 220 can be stably seated on the second frame 210. To this end, an adhesive member (not shown) may be applied to the upper surface of the sixth seating portion 216, so that the subframe 220 can be fixed or coupled to the sixth seating portion 216. In addition, the sixth seating portion 216 may be a seating portion to which the second lower elastic member 620 is seated or coupled. For example, a seventh protrusion 226 is formed on the lower surface of the subframe 220. In addition, the second lower elastic member 620 may be fixed or coupled between the upper surface of the sixth seating portion 216 of the second frame 210 and the lower surface of the subframe 220 in a state inserted into the seventh protrusion 226. For example, the seventh protrusion 226 is inserted into and coupled to the coupling groove 216-1 of the second frame 210 in a state where the second lower elastic member 620 is inserted into the seventh protrusion 226 of the subframe 220, so that the second frame 210, the subframe 220 and the second lower elastic member 620 may be coupled.

In addition, the fifth seating portion 215 may be a seating portion on which a sensor part 240, which will be described later, is seated. For example, a sensor part 240 may be coupled to the lower surface of the second frame 210. Specifically, a sensor base 243 of the sensor part 240 may be seated at the lower surface of the fifth seating portion 215. To this end, an adhesive member (not shown) may be applied to the lower surface of the fifth seating portion 215, so that the sensor base 243 of the sensor part 240 may be fixed or coupled to the fifth seating portion 215.

The first moving part 200 of the embodiment includes a subframe 220. The subframe 220 may be combined with the second frame 210 to form a single frame. In this case, the second frame 210 and the subframe 220 may also be referred to as a 'magnet holder' in which a magnet corresponding to the second driving member 230 is disposed.

Before describing the subframe 220 of the embodiment, the frame constituting the first moving part 200 is shown as being separated into the second frame 210 and the subframe 220 in the drawing, but is not limited thereto. For example, the second frame 210 and the subframe 220 may be provided as one integrated frame, and accordingly, it may function as a magnet holder including a magnet receiving portion in which the second driving member 230 is disposed. However, in the embodiment, in order to facilitate assembly of the first moving part 200, the first moving part 200 includes the second frame 210 and the subframe 220 separated from each other as described above.. For example, when the second frame 210 and the subframe 220 are formed as an integrated frame, it is not easy to place the second driving member 230 on the integrated frame, and accordingly, the time required to arrange the second driving member 230 may increase. In contrast, the second driving member 230 can be easily arranged by inserting and coupling the subframe 220 to the second frame 210 in a state in which the second driving member 230 is disposed on the first magnet mounting portion 212 of the second frame 210, thereby improving the assembly of the first moving part 200.

A second rail 221 is provided on the outer surface of the subframe 220. The second rail 221 of the subframe 220 may correspond to the first rail 213 of the second frame 210.

The second rails 221 of the subframe 220 may be provided on each of the first to fourth outer surfaces corresponding to each of the inner surfaces of the second frame 210. For example, the second rails 221 may be formed on first to fourth outer surfaces of the subframe 220, respectively. Specifically, the second rail 221 may include second(a) to second(d) rails 211-1, 211-2, 211-3, and 211-4 respectively formed on the first to fourth outer surfaces of the subframe 220.

The second rail 221 of the subframe 220 may also be referred to as a 'coupling portion' or a 'fixing portion' inserted into and coupled to the first rail 213 of the second frame 210.

Each of the second(a) to second(d) rails 211-1, 211-2, 211-3, and 211-4 may include a second-first rail and a second-second rail. For example, the second(a) rail 211-1 may include a second(a)-first rail 211-1a and a second(a)-second rail 211-1b. For example, the second(b) rail 211-2 may include a second(b)-first rail 211-2a and a second(a)-second rail 211-2b. For example, the second(c) rail 211-3 may include a second(c)-first rail 211-3a and a second(c)-second rail 211-3b. For example, the second(d) rail 211-4 may include a second(d)-first rail 211-4a and a second(d)-second rail 211-2b. The second-first rail and the second-second rail of each of the second(a) to second(d) rails 211-1, 211-2, 211-3, and 211-4. The second-first rail and the second-second rail of each of the second(a) to second(d) rails 211-1, 211-2, 211-3, and 211-4 may be extended in the z-axis direction or the optical axis direction to be formed at the outer surface of the sub-frame 220. Accordingly, the second rail 221 may be inserted into and coupled to the first rail 213 in the optical axis direction.

The second-first rail and second-second rail of each of the second(a) to second(d) rails 211-1, 211-2, 211-3, and 211-4 as described above may have a groove shape extending in the optical axis direction while being depressed inward from the outer surface of the subframe 220. Accordingly, the second-first rail and the second-second rail of each of the second(a) to second(d) rails 211-1, 211-2, 211-3, and 211-4 may be referred to as a 'coupling groove'. However, the embodiment is not limited thereto, the second-first rail and the second-second rail of each of the second(a) to second(d) rails 211-1, 211-2, 211-3, and 211-4 as described above may have a protrusion shape.

The subframe 220 includes a magnet mounting portion. Specifically, the subframe 220 may include a second magnet mounting portion supporting the upper side of the second driving member 230. The second magnet mounting portion may correspond to the first magnet mounting portion 212 of the second frame 210.

The second magnet mounting portion includes a second-first magnet mounting portion 222-1 corresponding to the first-first magnet mounting portion 212-1 of the second frame 210, a second-second magnet mounting portion 222-2 corresponding to the first-second magnet mounting portion 212-2 of the second frame 210, a second-third magnet mounting portion 222-3 corresponding to the first-third magnet mounting portion 212-3 of the second frame 210, and a second-fourth magnet mounting portion 222-4 corresponding to the first-fourth magnet mounting portion 212-4 of the second frame 210.

The second-first to second-fourth magnet mounting portions 222-1, 222-2, 222-3, and 222-4 may accommodate a portion of the upper portion of the second driving member 230 and a portion of the side portion of the second driving member 230 disposed on the second frame 210 and the subframe 220.

The subframe 220 may include a plurality of protrusions.

The subframe 220 may include a fifth protrusion 223. The fifth protrusion 223 may be formed in plurality on the upper surface of the subframe 220 and spaced apart from each other. The fifth protrusion 223 may be a coupling protrusion to which the second elastic member 600 is coupled. For example, one side of the second upper elastic member 610 of the second elastic member 600 may be coupled to the fifth protrusion 223 of the subframe 220, and the other side may be coupled to the third protrusion 314 of the third frame 310.

The subframe 220 may include a sixth protrusion 224. The sixth protrusion 224 may be formed by protruding upward from the upper surface of the subframe 220. In this case, the upper end of the sixth protrusion 224 may be positioned higher than the upper end of the fifth protrusion 223. The height of the sixth protrusion 224 may determine a movable range of the second moving part 300. For example, the first case 20 is seated on the sixth protrusion 224. Accordingly, a separation distance between the second moving part 300 and the first case 20 may be determined by the height of the sixth protrusion 224. In addition, a maximum movable position in an upward direction of the second moving part 300 may be determined by the separation distance.

The subframe 220 may include a seventh protrusion 226. The seventh protrusion 226 may be formed on the lower surface of the subframe 220. The seventh protrusion 226 may be a protrusion for coupling or fixing the subframe 220 to the second frame 210. In addition, the seventh protrusion 226 may be a protrusion for coupling or fixing the second lower elastic member 620. As shown in FIG. 7F, the second lower elastic member 620 is coupled to the seventh protrusion 226, and the second rail 221 of the sub frame 220 is inserted into the first rail 213 of the second frame 210, so that the seventh protrusion 226 can be inserted into the coupling groove 216-1 of the second frame 210. Accordingly, the seventh protrusion 226 is inserted into and coupled to the coupling groove 216-1, so that the sub frame 220 and the second lower elastic member 260 may be stably coupled or fixed to the second frame 210.

The subframe 220 may include a fourth protruding portion 215. The fourth protruding portion 215 may protrude inward from the lower surface of the subframe 220. The fourth protruding portion 215 may be formed in plurality at different positions. For example, the fourth protruding portion 215 may include a fourth-first protruding portion 215-1, a 4-2 protruding portion 215-2, a 4-3 protruding portion 215-3, and a 4-4 protruding portion 215-4. The fourth protruding portion 215 of the subframe 220 may be a stopper that limits movement of the second moving part 300. That is, in a state where the second moving part 300 is elastically coupled to the first moving part 200 by the second elastic member 600, the second moving part 300 may move relative to the first moving part 200 in the z-axis direction. In this case, when the second moving part 300 moves to the maximum downward direction, the lower surface of the third frame 310 of the second moving part 300 may contact the fourth protruding portion 215 of the sub frame 220. Accordingly, the fourth protruding portion 215 may limit the movement of the second moving part 300 out of the movable range in the downward direction.

The first moving part 200 of the embodiment may include a second driving member 230. The second driving member 230 may be a magnet part. The second driving member 230 may be an OIS magnet for rotating the first moving part 200 in an x-axis or a y-axis with respect to the fixed part 100 by interacting with the first coil part 132 of the fixed part 100. In addition, the second driving member 230 may be an AF magnet for moving the second moving part 300 in the z-axis direction with respect to the fixed part 100 and the first moving part 200 by interacting with a third driving member 330. Preferably, the second driving member 230 may be a common magnet commonly used for AF driving and OIS driving.

The second driving member 230 may include a first magnet part 231, a second magnet part 232, a third magnet part 233, and a fourth magnet part 234.

The first magnet part 231 may correspond to the first-first coil 132-1. An outer surface of the first magnet part 231 may be disposed to face the first-first coil 132-1. In addition, an inner surface of the first magnet part 231 may be disposed to face the third driving member 330.

The second magnet part 232 may correspond to the first-second coil 132-2. An outer surface of the second magnet part 232 may be disposed to face the first-second coil 132-2. In addition, an inner surface of the second magnet part 232 may be disposed to face the third driving member 330.

The third magnet part 233 may correspond to the first-third coil 132-3. An outer surface of the third magnet part 233 may be disposed to face the first-third coil 132-3. In addition, an inner surface of the third magnet part 233 may be disposed to face the third driving member 330.

The fourth magnet part 234 may correspond to the first-fourth coil 132-4. An outer surface of the fourth magnet part 234 may be disposed to face the first-fourth coil 132-4. In addition, an inner surface of the fourth magnet part 234 may disposed to face the third driving member 330.

Each of the first to fourth magnet parts 231, 232, 233, and 234 may include two regions having an N pole and two regions having an S pole. For example, each of the first to fourth magnet parts 231, 232, 233, and 234 may be a 4-pole magnetized magnet. An outer surface of each of the first to fourth magnet parts 231, 232, 233, and 234 may be divided into a first region and a second region. The first region may be disposed on the second region. In addition, the inner surface of each of the first to fourth magnet parts 231, 232, 233, and 234 may be divided into a third region and a fourth region. The third region may be disposed on the fourth region. The first region and the third region may be disposed in a mutually horizontal direction, and the second region and the fourth region may be disposed in a mutually horizontal direction. In this case, the first region may be an N pole, and the second region may be an S pole. In addition, the third region may be an S pole, and the fourth region may be an N pole. However, the embodiment is not limited thereto, and the polarities of the first to fourth regions may be opposite to those described above. Both the first and second regions of the first to fourth magnet parts 231, 232, 233, and 234 may face the first coil part 132. In addition, the third regions of the first to fourth magnet parts 231, 232, 233, and 234 may be disposed to face the third driving member 330. In addition, the fourth regions of the first to fourth magnet parts 231, 232, 233, and 234 may not face the third driving member 330. Specifically, the fourth regions of the first to fourth magnet parts 231, 232, 233, and 234 may not overlap with the third driving member 330 in the horizontal direction. Accordingly, the thickness of the third region of the first to fourth magnet parts 231, 232, 233, and 234 may correspond to a movable range of the second moving part 300 in the z-axis direction.

In summary, the first and second regions of the first to fourth magnet parts 231, 232, 233, and 234 can interact with the first coil part 132, so that the first moving part 200 may be rotated about an x-axis or a y-axis. In addition, the third regions of the first to fourth magnet parts 231, 232, 233, and 234 can interact with the third driving member 330, so that the second moving part 300 may be moved in the z-axis direction. However, the embodiment is not limited thereto, the third driving member 330 may interact with a fourth region other than the third region of the first to fourth magnet parts 231, 232, 233, and 234, so that the second moving part 300 may be moved in the z-axis direction.

The first moving part 200 may include a sensor part 240.

The sensor part 240 may be coupled to the second frame 210. That is, the sensor part 240 may rotate along the x-axis or the y-axis together with the second frame 210.

The sensor part 240 may include a sensor substrate 241, a sensor 242, a sensor base 243 and a filter 244.

The sensor substrate 241 may be a package substrate. A sensor 242 may be mounted on the sensor substrate 241 in a package form. The sensor 242 may be any one of a charge coupled device (CCD), a metal oxide semi-conductor (MOS), a CPD, and a CID. The sensor 242 may move together with the second frame 210 when the second frame 210 moves.

Such a sensor substrate 241 may include a printed circuit board (PCB). The sensor substrate 241 may include a circuit board. A second driver IC 241-1 may be mounted on an upper surface of the sensor substrate 241. The second driver IC 241-1 may be aligned with at least one of the first sensing magnet receiving portion 316-1 and the second sensing magnet receiving portion 316-2 of the third frame 310 in the optical axis direction. Specifically, the second driver IC 241-1 may be aligned or overlapped with the sensing magnet 340 accommodated in the first sensing magnet receiving portion 316-1 and the second sensing magnet receiving portion 316-2 in the optical axis direction. The second driver IC 241-1 may detect a change in position of the sensing magnet 340 according to the movement of the second moving part 300. The second driver IC 241-1 senses the strength of a magnetic field that changes according to the position of the sensing magnet 340 and determines the position of the second moving part 300, specifically the lens 320.

A sensor base 243 may be disposed on the sensor substrate 241. The sensor base 243 may include an opening portion. Specifically, the sensor base 243 may include a step 243-1 in which a region overlapping the lens 320 in the optical axis direction is opened and the filter 244 can be seated. An adhesive member (not shown) is disposed on the step 243-1, and a filter 244 may be fixed or coupled to the adhesive member. The filter 244 may serve to block light of a specific frequency band from entering the sensor 242 from light passing through the lens 320. The filter 244 may be disposed parallel to the x-y plane. The filter 244 may be disposed between lens 320 and sensor 242. The filter 244 may include an infrared filter. The infrared filter may absorb or reflect infrared rays incident to the infrared filter.

The sensor base 243 may include a device opening portion 243-2 that opens the second driver IC 241-1 disposed on the sensor substrate 241. For example, the device opening portion 243-2 may include a first device opening portion 243-2a and a second device opening portion 234-2b. In this case, the second driver IC 241-1 may be disposed on the upper surface of the sensor substrate 241 opened through one of the first device opening portion 243-2a and the second device opening portion 234-2b. As shown in the drawing, the second driver IC 241-1 may be disposed within the first device opening portion 243-2a. In addition, the second driver IC 241-1 is exposed through the first element opening portion 243-2a, so that the second driver IC 241-1 may be disposed to directly face the first sensing magnet 341 accommodated in the first sensing magnet receiving portion 316-1 of the third frame 310 in the optical axis direction.

Meanwhile, although not shown in the drawing, the sensor substrate 241 may include a pad. Specifically, the sensor substrate 241 may include a pad formed on an edge region of a lower surface. The pad may be combined with an elastic substrate 700 to be described later. Specifically, the pad formed on the lower surface of the sensor substrate 241 may be electrically connected to the second terminal portion 721-2 of the elastic substrate 700. For example, the pad of the sensor substrate 241 and the second terminal portion 721-2 of the elastic substrate 700 may be coupled through soldering.

### <ELASTIC SUBSTRATE>

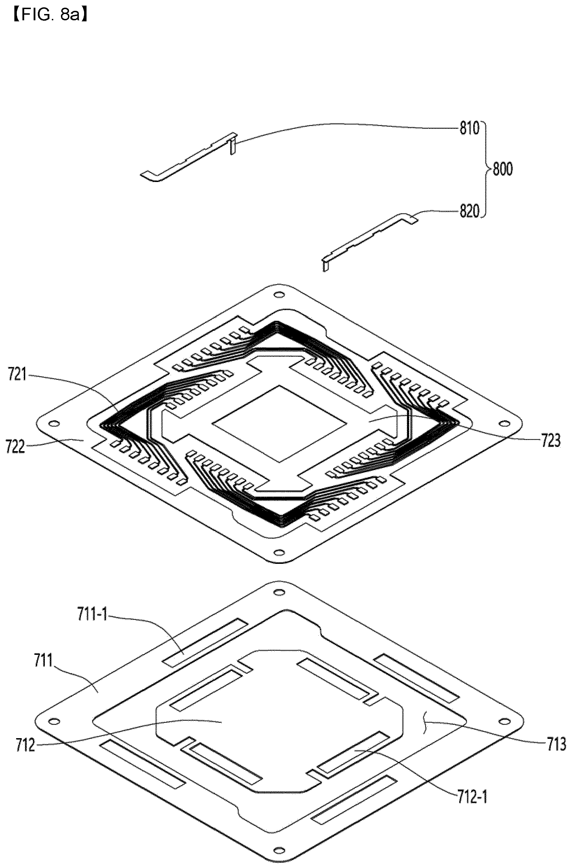

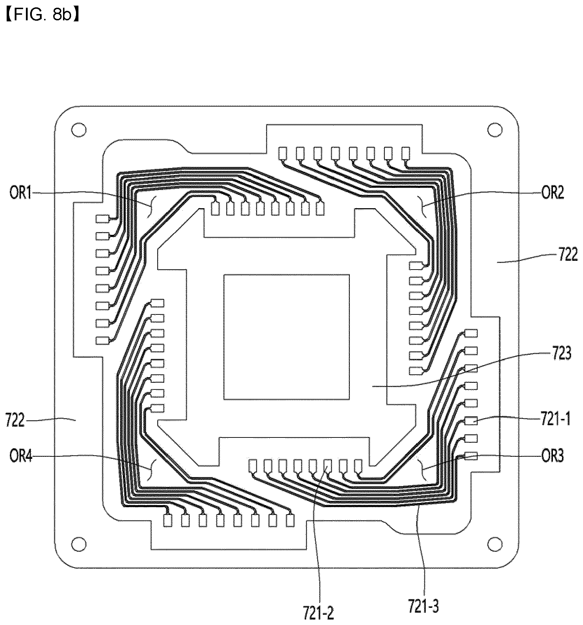

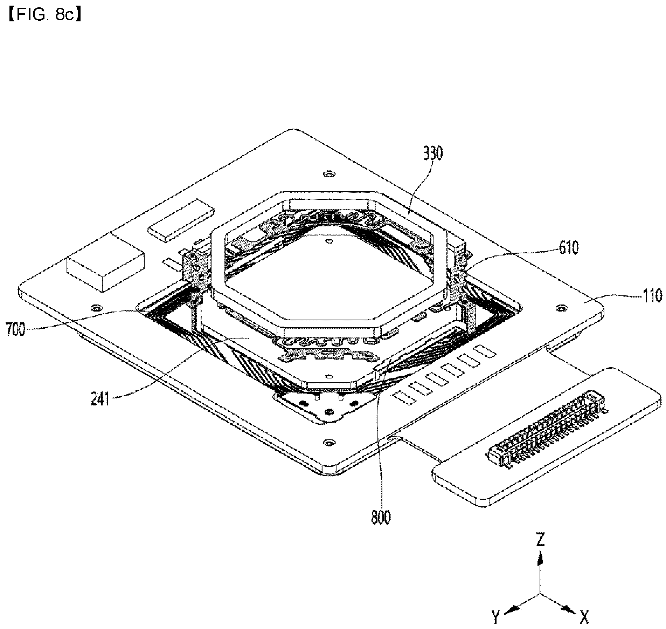

FIG. 8A is an exploded perspective view of the elastic substrate according to the first embodiment, FIG. 8B is a plan view of the pattern part of FIG. 8A, and FIG. 8C is a view for explaining the connection structure of the elastic substrate of the first embodiment. Hereinafter, an elastic substrate 700 according to an embodiment and an electrical connection structure thereof will be described with reference to FIGS. 8A to 8C.

The elastic substrate 700 according to the embodiment includes an insulating part 710 and a pattern part 720. In addition, according to embodiments, the elastic substrate 700 may further include a connection spring part 800.

The insulating part 710 may include a first insulating region 711 having an opening provided at a center and a second insulating region 712 disposed in the opening of the first insulating region 711. The second insulating region 712 may be disposed spaced apart from the first insulating region 711 in an inner region of the first insulating region 711. That is, the insulating part 710 may include a first insulating region 711 and a second insulating region 712 separated from each other. In addition, the first insulating region 711 may be disposed surrounding an outer side of the second insulating region 712 with a separation region 713 interposed therebetween.

The first insulating region 711 may correspond to the main substrate 110 and the second insulating region 712 may correspond to the sensor substrate 241. For example, the first insulating region 711 may overlap the main substrate 110 in an optical axis direction. For example, the second insulating region 712 may overlap the sensor substrate 241 in an optical axis direction.

Each of the first insulating region 711 and the second insulating region 712 may include an opening portion. For example, the first insulating region 711 may include a first terminal opening portion 711-1. For example, the second insulating region 712 may include a second terminal opening portion 712-1. The first terminal opening portion 711-1 may open a portion of a pattern part 720 disposed on the first insulating region 711. In addition, the second insulating region 712 may open a portion of the pattern part 720 disposed on the second insulating region 712.

The pattern part 720 may be disposed on the first insulating region 711, the second insulating region 711, and the separation region 713. The pattern part 720 may transmit an electrical signal. To this end, the pattern part 720 may include a conductive metal material.

The pattern part 720 may include a conductive pattern part 721 for electrical signal transmission and a reinforcing pattern part 722 and 723 for strength reinforcement. The conductive pattern part 721 and the reinforcing pattern part 722 and 723 may be formed of the same metal material. For example, the conductive pattern part 721 and the reinforcing pattern part 722 and 723 may be simultaneously formed by etching the same metal layer (not shown) disposed on the first insulating region 711 and the second insulating region 712. However, the embodiment is not limited thereto, and the conductive pattern part 721 and the reinforcing pattern part 722 and 723 may be formed through separate processes using different material layers.

The reinforcing pattern part 722 and 723 include a first reinforcing pattern part 722. The first reinforcing pattern part 722 may be disposed on the first insulating region 711. The first reinforcing pattern part 722 may improve strength of the first insulating region 711. The reinforcing pattern part 722 and 723 include a second reinforcing pattern part 723. The second reinforcing pattern part 723 may be disposed on the second insulating region 712. The second reinforcing pattern part may improve strength of the second insulating region 712.

The conductive pattern part 721 may be disposed on the first insulating region 711, the second insulating region 712, and the separation region 713. The conductive pattern part 721 may be electrically insulated from the reinforcing pattern part 722 and 723.

The conductive pattern part 721 includes a first terminal portion 721-1, a second terminal portion 721-2, and a connecting portion 721-3.

The conductive pattern part 721 as described above may have elasticity so that the first moving part 200 can relatively move with respect to the fixed part 100 while the main board 110 and the sensor board 241 are electrically connected. To this end, the conductive pattern part 721 may be formed of a metal material having elasticity. In addition, the conductive pattern part 721 may have a tensile strength of a certain level or higher that does not break even when the first moving part 200 moves. For example, the conductive pattern part 721 may be formed of a metal material having a tensile strength of 1000 MPa or more. The conductive pattern part 721 may be a binary alloy of copper (Cu)-nickel (Ni). For example, the conductive pattern part 721 may be a binary alloy of copper (Cu)-tin (Sn). For example, the conductive pattern part 721 may be a binary alloy of copper (Cu)-beryllium (Be). For example, the conductive pattern part 721 may be a binary alloy of copper (Cu)-cobalt (Co). For example, the conductive pattern part 721 may be a ternary alloy of copper (Cu)-nickel (Ni)-tin (Sn). For example, the conductive pattern part 721 may be a ternary alloy of copper (Cu)-beryllium (Be)-cobalt (Co). In addition to the metal material, the conductive pattern part 721 may be formed of an alloy such as iron (Fe), nickel (Ni), or zinc, which has elasticity capable of serving as a spring and has good electrical properties. In addition, the conductive pattern part 721 may be surface-treated with a plating layer including a metal material such as gold (Au), silver (Ag), or palladium (Pd), thereby improving electrical conductivity.

The conductive pattern part 721 as described above may be formed by an additive process, subtractive process, MSAP (Modified Semi Additive Process) and SAP (Semi Additive Process) process, which is a process of manufacturing a typical printed circuit board, and a detailed description thereof is omitted here.

The conductive pattern part 721 includes a first terminal portion 721-1 connected to the main substrate 110. In this case, the first terminal portion 721-1 may be disposed on the first insulating region 711. In this case, the first terminal portion 721-1 may be disposed on the first terminal opening portion 711-1 of the first insulating region 711. Specifically, upper and lower surfaces of at least a portion of the first terminal portion 721-1 may not contact the first insulating region 711 and the second insulating region 712. The first terminal portion 721-1 may be provided in plurality. For example, a plurality of first terminal portions 721-1 may be disposed in four different side regions of the first insulating region 711. For example, a plurality of first terminal portions 721-1 may be disposed on each of the first left side region, the first right side region, the first upper side region, and the first lower side region of the first insulating region 711. The first terminal portion 721-1 may be electrically connected to the fourth pad 116 disposed on the lower surface of the main substrate 110 through soldering.

The conductive pattern part 721 includes a second terminal portion 721-2 connected to the sensor substrate 241. In this case, the second terminal portion 721-2 may be disposed on the second insulating region 712. In this case, the second terminal portion 721-2 may be disposed on the second terminal opening portion 712-1 of the second insulating region 712. Specifically, upper and lower surfaces of at least a portion of the second terminal portion 721-2 may not contact the first insulating region 711 and the second insulating region 712. The second terminal portion 721-2 may be provided in plurality. For example, a plurality of second terminal portions 721-2 may be disposed in four different side regions of the second insulating region 712. For example, a plurality of second terminal portions 721-2 may be disposed on each of a second left side region, a second right side region, a second upper side region, and a second lower side region of the second insulating region 712. The second terminal portion 721-2 may be electrically connected to a pad (not shown) disposed on a lower surface of the sensor substrate 241 through soldering.

The connecting portion 721-3 may electrically connect the first terminal portion 721-1 and the second terminal portion 721-1. The connecting portion 721-3 may be disposed to fly on the separation region 713 of the insulating part. Specifically, the connecting portion 721-3 may not come into contact with other components constituting the lens driving device 10. For example, the connecting portion 721-3 may be physically separated from other components constituting the lens driving device 10.

The connecting portion 721-3 may have a plurality of bending structures and may be disposed in the separation region 713. For example, the connecting portion 721-3 may be respectively disposed at corner portions of the separation region 713. In this case, the connecting portion 721-3 may connect between terminal portions disposed on different sides of the first terminal portion 721-1 and the second terminal portion 721-1. For example, the connecting portion 721-3 may connect a first terminal portion disposed on a first lower side of the first insulating region 711 and a second terminal portion disposed on a second left side of the second insulating region 712. For example, the connecting portion 721-3 may connect a first terminal portion disposed on a first left side of the first insulating region 711 and a second terminal portion disposed on a second upper side of the second insulating region 712. For example, the connecting portion 721-3 may connect a first terminal portion disposed on a first upper side of the first insulating region 711 and a second terminal portion disposed on a second right side of the second insulating region 712. For example, the connecting portion 721-3 may connect a first terminal portion disposed on a first right side of the first insulating region 711 and a second terminal portion disposed on a second upper side of the second insulating region 712.

Accordingly, the connecting portion 721-3 may include a bending portion bent at least once at a corner portion of the separation region 713. Meanwhile, the connecting portion 721-3 may be disposed avoiding a partial region at the corner of the separation region 713.

For example, the connecting portion 721-3 may not be disposed in a first region OR1 of a first corner portion of the separation region 713. For example, the connecting portion 721-3 may not be disposed in a second region OR2 of a second corner portion of the separation region 713. For example, the connecting portion 721-3 may not be disposed in a third region OR1 of a third corner portion of the separation region 713. For example, the connecting portion 721-3 may not be disposed in a fourth region OR4 of a fourth corner portion of the separation region 713.

Here, the first region OR1 may be an region overlapping a third protruding portion formed on the first outer surface 211-1 of the second frame 210 in an optical axis direction. Accordingly, when the second frame 210 moves, the first region OR1 selectively allows the third protruding portion 214 of the first outer surface 211-1 to contact the second case 30 while preventing the third protruding portion of the first outer surface 211-1 and the connecting portion 721-3 from contacting each other.

The second region OR2 may be an region overlapping a third protruding portion formed on the second outer surface 211-2 of the second frame 210 in an optical axis direction. Accordingly, when the second frame 210 moves, the second region OR2 selectively allows the third protruding portion 214 of the second outer surface 211-2 to contact the second case 30 while preventing the third protruding portion of the second outer surface 211-2 and the connecting portion 721-3 from contacting each other.

The third region OR3 may be an region overlapping a third protruding portion formed on the third outer surface 211-3 of the second frame 210 in an optical axis direction. Accordingly, when the second frame 210 moves, the third region OR3 selectively allows the third protruding portion 214 of the third outer surface 211-3 to contact the second case 30 while preventing the third protruding portion of the third outer surface 211-2 and the connecting portion 721-3 from contacting each other.

The fourth region OR4 may be an region overlapping a third protruding portion formed on the fourth outer surface 211-4 of the second frame 210 in an optical axis direction. Accordingly, when the second frame 210 moves, the fourth region OR4 selectively allows the third protruding portion 214 of the fourth outer surface 211-3 to contact the second case 30 while preventing the third protruding portion of the fourth outer surface 211-2 and the connecting portion 721-3 from contacting each other.

A thickness of the conductive pattern part 721 as described above may be 10 µm to 50 µm. For example, the thickness of the conductive pattern part 721 may be 30 µm to 40 µm. In this case, when the thickness of the conductive pattern part 721 is smaller than 10 µm, the conductive pattern part 721 may be broken when the first moving part 200 moves. In addition, when the thickness of the conductive pattern part 721 is greater than 50 µm, the elastic force of the connecting portion 721-3 may be reduced, thereby hindering the moving characteristics of the first moving part 200. Accordingly, in the embodiment, the thickness of the conductive pattern part 721 is set to 35 µm ± 5 µm, so that the first moving part 200 can move stably.

In addition, a length of the connecting portion 721-3 is at least 1.5 times greater than a width of the separation region 713. In addition, the length of the connecting portion 721-3 is 20 times or less than the width of the separation region 713. In this case, the width of the separation region 713 may be 1.5 mm. When the length of the connecting portion 721-3 is smaller than 1.5 times the width of the separation region 713, the moving characteristics of the first moving part 200 my be deteriorated due to the decrease in elasticity of the connecting portion 721-3. In addition, when the length of the connecting portion 721-3 is greater than 20 times the width of the separation region 713, resistance increases as the signal transmission distance by the connecting portion 721-3 increases, and accordingly, noise may be included in a signal transmitted through the connecting portion 721-3.

Meanwhile, as described above, the main substrate 110 is electrically connected to the first terminal portion 721-1 of the elastic substrate 700, and the sensor substrate 241 is electrically connected to the second terminal portion 721-2 of the conductive pattern part 721 of the elastic substrate 700. In this case, the connecting portion 721-3 electrically connecting them while having elasticity may be formed between the first terminal portion 721-1 and the second terminal portion 721-2. Accordingly, the main substrate 110 and the sensor substrate 241 can be electrically connected to each other, and the first moving part 200 constituting the sensor substrate 241 is rotatable about the x-axis or the y-axis by the elastic force of the connecting portion 721-3. Meanwhile, the sensor substrate 241 may be electrically connected to the third driving member 330.

To this end, in an embodiment, a connection spring part 800 may be included. The connection spring part 800 may include a first connection spring portion 810 having one end connected to the sensor substrate 241 and the other end connected to one end of the second lower elastic member 620. In addition, one end of the second lower elastic member 620 may be electrically connected to one end of the third driving member 330. In addition, the connection spring part 800 may include a second connection spring portion 820 having one end connected to the sensor substrate 241 and the other end connected to the other end of the second lower elastic member 620. In addition, the other end of the second lower elastic member 620 may be connected to the other end of the third driving member 330. Accordingly, in the embodiment, a current of a specific intensity may be applied to the third driving member 330 in a specific direction. Meanwhile, the second lower elastic member 620 may be divided into a first portion connected to the first connection spring portion 810 and a second part electrically insulated from the first portion and connected to the second connection spring portion 820.

### <CONNECTION STRUCTURE >

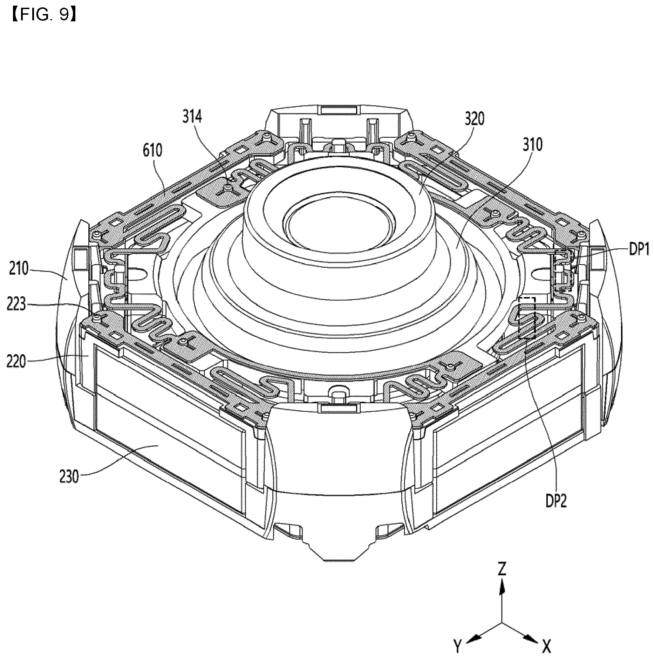

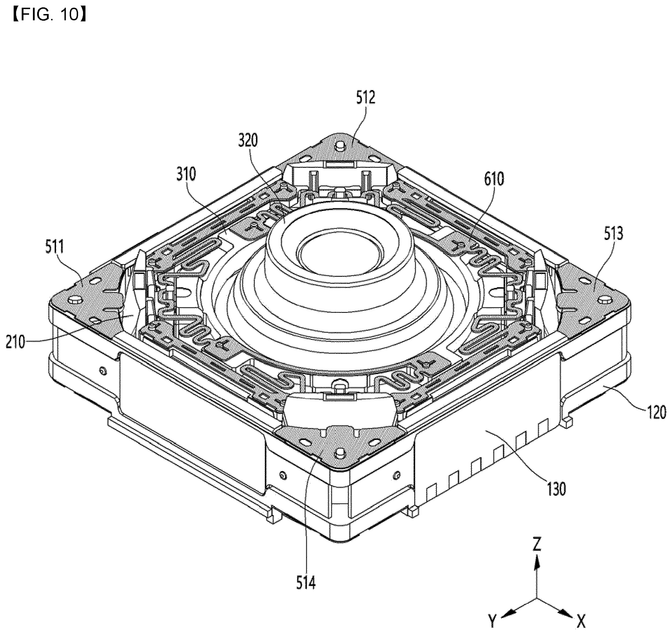

FIG. 9 is a view for explaining a coupling structure of a first moving part and a second moving part according to the first embodiment, and FIG. 10 is a view for explaining a coupling structure of a fixed part, a first moving part, and a second moving part according to the first embodiment. Hereinafter, a coupling structure of the fixed part 100, the first moving part 200, and the second moving part 300 will be described with reference to FIGS. 9 and 10.

The first moving part 200 is disposed in the inner space of the fixed part 100 according to the embodiment. In addition, the second moving part 300 is disposed in the inner space of the first moving part 200.

In this case, the fixed part 100 and the first moving part 200 may be mutually coupled by the guide member 400 and the first elastic member 500. In this case, the first moving part 200 and the second moving part 300 may be mutually coupled by the second elastic member 600.

A coupling structure of the first moving part 200 and the second moving part 300 will be described as follows. As described above, the first moving part 200 includes the second frame 210, the sub frame 220, the second driving member 230, and the sensor part 240.

In addition, the sensor part 240 may be fixed or coupled to the second frame 210. For example, an adhesive member (not shown) is applied to the fifth seating portion 215 of the second frame 210, and the sensor base 243 of the sensor part 240 may be fixed or coupled to the lower surface of the second seating portion 215 using the applied adhesive member.

In addition, in a state where the sensor part 240 is coupled to the second frame 210, the second driving member 230 may be disposed on the first magnet mounting portion 212 of the second frame 210.

Thereafter, in a state where one end of the second lower elastic member 620 of the second elastic member 600 is inserted into the seventh protrusion 226 formed on the lower surface of the sub frame 220, the subframe 220 may be coupled to the second frame 210 by inserting the second rail 221 of the sub frame 220 into the first rail 213 of the second frame 210 and sliding it downward. In this case, when the second rail 221 of the sub frame 220 slides to the lowermost end of the first rail 213, the seventh protrusion 226 of the sub frame 220 may be inserted into and coupled to the coupling groove 216-1 of the second frame 210. In this case, the sub frame 220 surrounds a portion of the side and upper portions of the second driving member 230 seated on the second frame 210, so that the second driving member 230 can be stably seated. In addition, the lower elastic member 620 is inserted into and coupled to the seventh protrusion 226 of the subframe 220. Accordingly, the lower elastic member 620 may be disposed in the inner space of the subframe 220 and the second frame 210 in a state supported by the second frame 210 and the sub frame 220.

In a state where the second lower elastic member 620 is coupled to the first moving part 200 as described above, the second moving part 300 may be coupled to the second lower elastic member 620. For example, the fourth protrusion 317 formed on the lower surface of the third frame 310 may be inserted into and coupled to the second moving part 300 on the second lower elastic member 620 coupled to the first moving part 200. Accordingly, the second moving part 300 may be supported by the second lower elastic member 620 and disposed in an inner space of the first moving part 200. Then, in a state where the second moving part 300 is supported by the first moving part 200 by the second lower elastic member 620 as described above, the second upper elastic member 610 may be coupled to the first moving part 200 and the second moving part 300. For example, the second upper elastic member 610 may be coupled to the fifth protrusion 223 of the subframe 220 of the first moving part 200 and the third protrusion 314 of the third frame 310. Accordingly, in an embodiment, the first moving part 200 and the second moving part 300 may be easily coupled.

Meanwhile, the first moving part 200 may be coupled to the fixed part 100. The first moving part 200 may be coupled by a guide member 400 disposed between the fixed part 100 and the first moving part 200 and the first elastic member 500 disposed on the guide member 400. Here, the "coupled" may mean that the first moving part 200 is movably disposed in the inner space of the fixed part 100 by the guide member 400 and the first elastic member 500.

To this end, the first moving part 200 may be disposed in the inner space of the first frame 120 of the fixed part 100, and the lower guide member 420 of the guide member 400 may be inserted into the second groove 129 of the first frame 120. In this case, the second groove 129 may be formed at lower ends of the four corner portions of the first frame 120. Accordingly, the lower guide member 420 may include four lower balls to be respectively disposed in the four second grooves 129.

In the embodiment, in a state where the lower guide member 420 is disposed in the second groove 129, the first lower elastic member 520 may be coupled to the second-second seating portion 127 of the first frame 120. In this case, the first lower elastic member 520 includes four sub-lower elastic members separated from each other, and accordingly, it may be disposed on each of the lower surfaces of the four corner portions of the first frame 120. In this case, the first lower elastic member 520 includes a coupling region seated on the second-second seating portion 127 and coupled to the first frame 120, and a contacting region contacting the lower guide member 420. In this case, the lower guide member 420 may be supported in a contacting region of the first lower elastic member 520 to be fixed in position. In this case, the first moving part 200 has a curved outer surface 211 protruding outward, and thus can be supported by the lower guide member 420.

Then, in the embodiment, the upper guide member 410 may be inserted into the first groove 126 of the first frame 120. In this case, the first groove 126 may be formed at the upper end of each of the four corner portions of the first frame 120. Accordingly, the upper guide member 410 may include four upper balls each inserted into the four first grooves.

In addition, in the embodiment, in the state where the upper guide member 410 is disposed in the first groove 126, the first upper elastic member 510 may be coupled to the second-first seating portion 124 of the first frame 120. The first upper elastic member 510 includes a coupling region seated on the second-first seating portion 124 and coupled to the first frame 120, and a contacting region contacting the upper guide member 410. In this case, the position of the upper guide member 410 in the first groove 126 may be determined by a pressing force applied in the contacting region of the first upper elastic member 510. As described above, each of the upper guide member 410 and the lower guide member 420 may be stably disposed between the fixed part 100 and the first moving part 200 by the pressing force applied in the respective contacting regions of the first upper elastic member 510 and the first lower elastic member 520.

### <DRIVING PART>

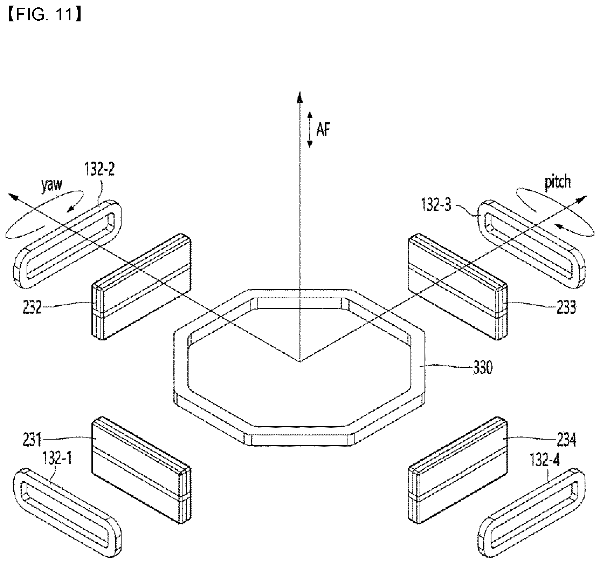

FIG. 11 is an exploded perspective view of a driving part according to an embodiment.

Referring to FIG. 11, the driving part may include a first driving member 130 disposed on the fixed part 100, a second driving member 230 disposed on the first moving part 200, and a third driving member 330 disposed on the second moving part 300.

In addition, the first driving member 130 includes a first coil part 132. The first coil part 132 includes the first-first coil 132-1 , the first-second coil 132-2, the first-third coil 132-3, and the first-fourth coil 132-4.

Meanwhile, the second driving member 230 may include a first magnet part 231, a second magnet part 232, a third magnet part 233, and a fourth magnet part 234.

In addition, the third driving member 330 includes a second coil part.

The first magnet part 231 may correspond to the first-first coil 132-1. The outer surface of the first magnet part 231 may be disposed to face to the first-first coil 132-1. In addition, the inner surface of the first magnet part 231 may be disposed to face the third driving member 330.

The second magnet part 232 may correspond to the first-second coil 132-2. The outer surface of the second magnet part 232 may be disposed to face the first-second coil 132-2. In addition, the inner surface of the second magnet part 232 may be disposed to face the third driving member 330.

The third magnet part 233 may correspond to the first-third coil 132-3. An outer surface of the third magnet part 233 may disposed to face the first-third coil 132-3. In addition, the inner surface of the third magnet part 233 may be disposed to face the third driving member 330.

The fourth magnet part 234 may correspond to the first-fourth coil 132-4. The outer surface of the fourth magnet part 234 may disposed to face the first-fourth coil 132-4. In addition, the inner surface of the fourth magnet part 234 may disposed to face the third driving member 330.

Accordingly, the movements of the first moving part 200 and the second moving part 300 will be described as follows.

First, the movement of the first moving part 200 will be described as follows.

The first moving part 200 may rotate about the z-axis or the y-axis by applying a current to two coils facing each other among the four coils of the first coil part 132.

### -FIRST X-AXIS ROTATION-

A current in a first direction may be applied to the first-first coil 132-1, and a current in a second direction opposite to the first direction may be applied to the first-third coil 132-3. Then, a current in a first direction is applied to the first-first coil 132-1, so that a magnetic force in the upward direction of the first-first coil 132-1 may be generated by an interaction between the first-first coil 132-1 and the first magnet part 231. In addition, a current in a second direction opposite to the first direction is applied to the first-third coil 132-3, so that a magnetic force in the downward direction of the first-third coil 132-3 may be generated by an interaction between the first-third coil 132-3 and the third magnet part 233. As a result, the first moving part 200 may rotate to the first x-axis in which a portion where the first-first coil 132-1 is disposed moves upward with respect to the fixed part 100 and a portion where the first-third coil 132-3 is disposed moves downward.

### -SECOND X-AXIS ROTATION-

A current in a second direction may be applied to the first-first coil 132-1, and a current in a first direction opposite to the second direction may be applied to the first-third coil 132-3. Then, a current in a second direction is applied to the first-first coil 132-1, so that a magnetic force in the downward direction of the first-first coil 132-1 may be generated by an interaction between the first-first coil 132-1 and the first magnet part 231. In addition, a current in the first direction opposite to the second direction is applied to the first-third coil 132-3, so that a magnetic force in the upward direction of the first-third coil 132-3 may be generated by an interaction between the first-third coil 132-3 and the third magnet part 233. As a result, the first moving part 200 may rotate to the second x-axis in which a portion where the first-first coil 132-1 is disposed moves downward with respect to the fixed part 100 and a portion where the first-third coil 132-3 is disposed moves upward.

### -FIRST Y-AXIS ROTATION-

A current in a first direction may be applied to the first-second coil 132-2, and a current in a second direction opposite to the first direction may be applied to the first-fourth coil 132-4. Then, a current in a first direction is applied to the first-second coil 132-2, so that a magnetic force in the upward direction of the first-second coil 132-2 may be generated by an interaction between the first-second coil 132-2 and the second magnet part 232. In addition, a current in the second direction opposite to the first direction is applied to the first-fourth coil 132-4, so that a magnetic force in the downward direction of the first-fourth coil 132-4 may be generated by an interaction between the first-fourth coil 132-3 and the fourth magnet part 234. As a result, the first moving part 200 may rotate to the first y-axis in which a portion where the first-second coil 132-2 is disposed moves upward with respect to the fixed part 100 and a portion where the first-fourth coil 132-4 is disposed moves downward.

### -SECOND X-AXIS ROTATION-

A current in the second direction may be applied to the first-second coil 132-2, and a current in the first direction opposite to the second direction may be applied to the first-fourth coil 132-4. Then, a current in the second direction is applied to the first-second coil 132-2, so that a magnetic force in the downward direction of the first-second coil 132-2 may be generated by an interaction between the first-second coil 132-2 and the second magnet part 232. In addition, a current in the first direction opposite to the second direction is applied to the first-fourth coil 132-3, so that a magnetic force in the upward direction of the first-fourth coil 132-4 may be generated by an interaction between the first-fourth coil 132-4 and the fourth magnet part 234. As a result, the first moving part 200 may rotate to the second y-axis in which a portion where the first-second coil 132-2 is disposed moves downward with respect to the fixed part 100 and a portion where the first-fourth coil 132-4 is disposed moves upward.

### -FIRST Z-AXIS MOVEMENT-

A current in a first direction may be applied to the second coil part of the third driving member 330. Then, a current in the first direction is applied to the third driving member 330, so that a magnetic force in the upward direction in the entire region of the third driving member 330 may be generated by an interaction with the third region inside the first to fourth magnet parts 231, 232, 233, and 234. In addition, the magnetic force is generated in the upward direction to the third driving member 330, so that the second moving part 300 on which the third driving member 330 is disposed may move upward.

### -SECOND Z-AXIS MOVEMENT-

A current in a second direction may be applied to the second coil part of the third driving member 330. Then, a current in the second direction is applied to the third driving member 330, so that a magnetic force in the downward direction in the entire region of the third driving member 330 may be generated by an interaction with the third region inside the first to fourth magnet parts 231, 232, 233, and 234. In addition, the magnetic force is generated in the downward direction to the third driving member 330, so that the second moving part 300 on which the third driving member 330 is disposed may move downward.

### <FIRST ELASTIC MEMBER>

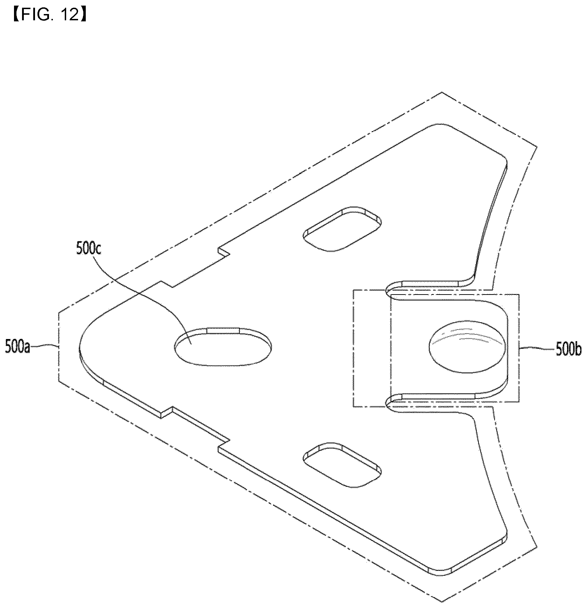

FIG. 12 is a perspective view of the first elastic member according to the first embodiment, and FIG. 13 is a view for explaining a coupling structure of the first elastic member of FIG. 12.

Referring to FIGS. 12 and 13, the first elastic member 500 includes a first upper elastic member 510 and a first lower elastic member 520. In addition, the first upper elastic member 510 includes four sub-elastic parts separated from each other. In addition, the first lower elastic member 520 includes four sub-elastic parts separated from each other. In this case, each of the four sub-elastic parts of the first upper elastic member 510 and each of the four sub-elastic parts of the first lower elastic member 520 may have the same shape as each other. In addition, FIG. 12 may show any one of the four sub-elastic parts of the first upper elastic member 510 and the four sub-elastic parts of the first lower elastic member 520.

The first elastic member 500 may have a triangular shape. However, the embodiment is not limited thereto, and the shape of the first elastic member 500 may be variously changed.

The first elastic member 500 may be divided into a plurality of regions. For example, the first elastic member 500 includes a coupling region 500a and a contacting region 500b. The coupling region 500a and the contacting region 500b may be integrally formed.

The coupling region 500a of the first elastic member 500 is a region in contact with the first frame 120. For example, the coupling region 500a may be a region coupled to the second seating portion of the first frame 120 in order to be coupled to the first frame 120. In this case, the coupling region 500a may include a coupling hole 500c. The coupling hole 500c may be inserted into a second protrusion formed at the second seating portion of the first frame 120. That is, the first elastic member 500 may be coupled to the first frame 120 as the coupling hole 500c is inserted into the second protrusion formed at the second seating portion of the first frame 120.

The contacting region 500b may extend from the coupling region 500a and contact the guide member 400. In this case, the contacting region 500b may include a spaced portion spaced apart from at least a portion of the coupling region 500a in order to provide a pressing force to the guide member 400. For example, the contacting region 500b may have a square shape. In addition, only one of four sides of the quadrangular contacting region 500b may be connected to the coupling region 500a, and other sides may be spaced apart from the coupling region 500a.

In this case, the guide member 400 may be disposed at a position protruding from the second seating portion of the first frame 120. For example, as shown in FIG. 13, the upper end of the upper guide member 410 may be positioned higher than the upper surface of the second-first seating portion 124 of the first frame 120 to which the first upper elastic member 510 is coupled by a first height H1. For example, the upper end of the upper guide member 410 may be positioned higher than the coupling region 500a of the first upper elastic member 510. In addition, the contacting region 500b of the first upper elastic member 510 is disposed on the upper guide member 410, and thus may be positioned higher than the coupling region 500a. For example, the upper end of the contacting region 500b of the first upper elastic member 510 may be positioned higher than the upper end of the coupling region 500a by the first height H1.

Correspondingly, the lower end of the lower guide member 420 may be positioned lower than the lower surface of the second-second seating portion 127 of the first frame 120 to which the first lower elastic member 520 is coupled by a first height H1. For example, the lower end of the lower guide member 420 may be positioned lower than the coupling region 500a of the first lower elastic member 520. In addition, the contacting region 500b of the first lower elastic member 520 is disposed below the lower guide member 420, and thus, may be positioned lower than the coupling region 500a of the first lower elastic member 520. For example, the lower end of the contacting region 500b of the first lower elastic member 520 may be positioned lower than the lower end of the coupling region 500a by the first height H1.

Meanwhile, a first groove 126 formed on the first frame 120 may include a first inner wall 126a connected to the upper surface of the first frame 120 and extending downward with a first inclination angle, and a second inner wall 126b extending from the first inner wall 126a at a second inclination angle and connected to the inner surface of the first frame 120. The first inner wall 126 may extend downward with the first inclination angle. The first inclination angle may be less than 90 degrees. For example, the first inner wall 126a may come closer to the inner surface of the first frame 120 toward the lower side. For example, a width of the first groove 126 may gradually decrease toward a lower direction due to the first inclination angle of the first inner wall 126a.

Meanwhile, the second inner wall 126b of the first groove 126 may extend from the first inner wall 126a to the inner surface of the first frame 120 at a second inclination angle. In this case, the second inclination angle may be an interior angle between the first inner wall 126a and the second inner wall 126b. And, the second inclination angle may be an obtuse angle greater than 90 degrees. Accordingly, the second inner wall 126b may come closer to the inner surface of the first frame 120 toward the lower side. In addition, a lowermost end of the second inner wall 126b may meet the inner surface of the first frame 120. In an embodiment, the first groove 126 may have a shape in which the width gradually decreases toward the lower direction as described above. For example, the first groove 126 may have a 'V' shape in which an interior angle has an obtuse angle. Accordingly, in the embodiment, a position of the upper guide member 410 disposed between the first frame 120 and the first moving part 200 may be adjusted. For example, the embodiment can adjust the pressing force of the upper guide member 410 by the first upper elastic member 510, so that the position of the upper guide member 410 (for example, the height of H1) can be adjusted within the first groove 126. For example, when the pressing force of the first upper elastic member 510 decreases, the position of the upper guide member 410 may be moved upward (eg, the height of H1 increases) within the first groove 126. In addition, in this case, the adhesion between the first moving part 200 and the first frame 120 can be reduced by the upper guide member 410. Conversely, when the pressing force of the first upper elastic member 510 increases, the position of the upper guide member 410 may move downward within the first groove 126 (eg, the height of H1 decreases). In this case, the adhesion between the first moving part 200 and the first frame 120 may be increased by the upper guide member 410.

According to an embodiment, the upper guide member 410 is disposed in the first groove 126 and the upper guide member 410 may be pressurized using the first elastic member 510, and accordingly, it is possible to rotate the first frame 120 in a state where the upper guide member 410 is stably disposed between the first frame 120 and the first moving part 200. In addition, the embodiment may adjust a shape of the first groove 126 and adjust the pressing force of the first elastic member 510 on the guide member, and accordingly, it is possible to easily adjust the adhesion between the first frame 120 and the first moving part 200. According to this, the embodiment may remove a magnet or a yoke used to adjust the adhesion while pressing the guide member in a comparative example. Furthermore, the embodiment may minimize magnetic field interference generated during an auto-focus operation or an image stabilization operation by the magnet or yoke of the comparative example, and thereby improve operation reliability.

Hereinafter, a modified example of the first moving part 200 will be described.

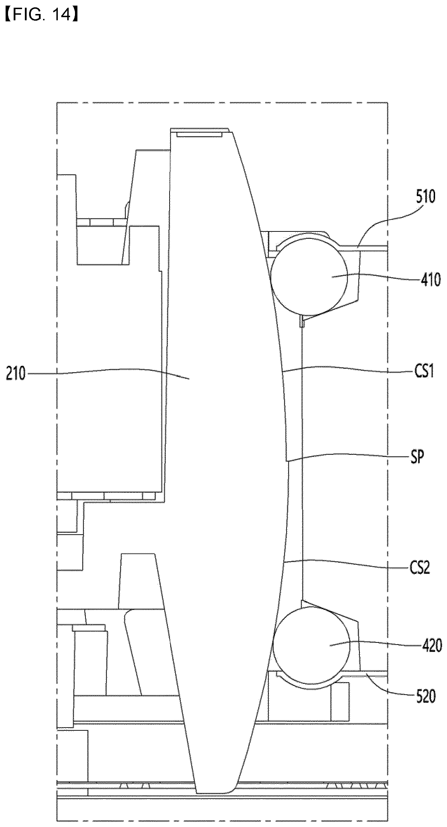

FIG. 14 is a cross-sectional view illustrating a second frame of a first moving part according to a modified example.

Before describing FIG. 14, the outer surface of the second frame 210 includes a curved surface formed in the optical axis direction as described with reference to FIG. 7B. For example, each of the curved surfaces of the first to fourth outer surfaces 211-1, 211-2, 211-3, and 211-4 may be depressed inward from the central region CP to the lower region. Each of the curved surfaces of the first to fourth outer surfaces 211-1, 211-2, 211-3, and 211-4 may protrude outward from the lower region toward the central region CP. In this case, each of the curved surfaces of the first to fourth outer surfaces 211-1, 211-2, 211-3, and 211-4 may include a first curved surface S1 corresponding to an upper region and a second curved surface S2 corresponding to a lower region based on the central region CP. In addition, a radius of curvature of the first curved surface S1 and a radius of curvature of the second curved surface S2 in the first embodiment were identical to each other.

Referring to FIG. 14, the outer surface of the second frame 210 includes a curved surface formed in the optical axis direction. For example, each of the curved surfaces of the first to fourth outer surfaces 211-1, 211-2, 211-3, and 211-4 may be depressed inward from the central region CP to the lower region. Each of the curved surfaces of the first to fourth outer surfaces 211-1, 211-2, 211-3, and 211-4 may protrude outward from the lower region toward the central region CP. In this case, each of the curved surfaces of the first to fourth outer surfaces 211-1, 211-2, 211-3, and 211-4 may include a first curved surface CS1 corresponding to an upper region and a second curved surface CS2 corresponding to a lower region based on the central region CP. In the second embodiment, a radius of curvature of the first curved surface CS1 and a radius of curvature of the second curved surface CS2 may be different from each other.

In the second embodiment, the radius of curvature of the first curved surface CS1 may be smaller than the radius of curvature of the second curved surface CS2.

For example, based on the curvature of each of the first curved surfaces CS1 of the first to fourth outer surfaces 211-1, 211-2, 211-3, and 211-4 of the second frame 210, a virtual first surface formed by connecting them in the x-axis, y-axis, and z-axis directions may have a first hemispherical shape having a first radius of curvature.

In addition, based on the curvature of the second curved surfaces CS2 of the first to fourth outer surfaces 211-1, 211-2, 211-3, and 211-4 of the second frame 210, the virtual second surface formed by connecting them in the x-axis, y-axis, and z-axis directions may have a second hemispherical shape having a second radius of curvature greater than the first radius of curvature.

In this case, a center of the first hemisphere is the same as a center of the second hemisphere. For example, a center of a virtual first circle formed by extending the first curvature of the first curved surface CS1 may be the same as a center of a virtual second circle formed by extending the second curvature of the second curved surface CS2. That is, when the center of the virtual first circle formed by the first curved surface CS1 and the center of the virtual second circle formed by the second curved surface CS2 are different from each other, normal movement is not possible when the first moving part 200 moves by the first curved surface CS1 and the second curved surface CS2, and thus reliability of OIS operation may deteriorate. Accordingly, the embodiment improves the reliability of the OIS operation by making the center of the radius of curvature or curvature of the first curved surface CS1 different from the radius of curvature or curvature of the second curved surface CS2.

Meanwhile, as described above, since the first radius of curvature of the first curved surface CS1 and the second radius of curvature of the second curved surface CS2 are different from each other, a step SP corresponding to the difference between the first and second radii of curvature may be provided between the first curved surface CS1 and the second curved surface CS2.

In addition, the embodiment can prevent the first moving part 200 from being separated from the fixed part 100 by the above structure. For example, when an external impact is applied, a problem in that the first moving part 200 is separated from the fixed part 100 may occur, and thus a reliability problem may occur.

On the other hand, in the embodiment, the first radius of curvature of the first curved surface CS1 and the second radius of curvature of the second curved surface CS2 are different from each other and a step SP is formed accordingly, and accordingly, it is possible to prevent the first moving part 200 from being separated from the external impact, thereby improving reliability. Furthermore, the first radius of curvature of the first curved surface CS1 is smaller than the second radius of curvature, thereby reducing the height of the first moving part 200 and further reducing the height of the lens driving device 10.

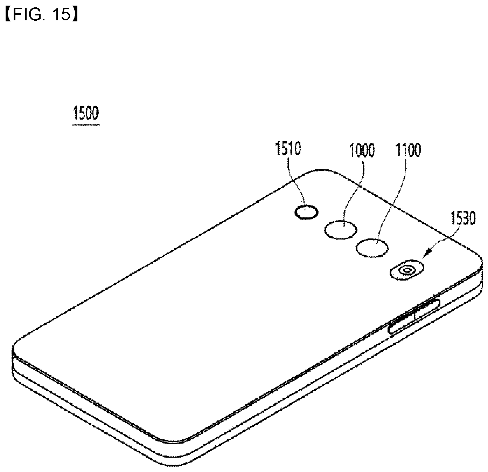

FIG. 15 is a mobile terminal 1500 to which a camera module according to an embodiment is applied.

Referring to FIG. 15, the mobile terminal 1500 according to the embodiment may include a camera module 1000, an autofocus device 1510 and a flash module 1530 provided on a back surface.

The camera module 1000 may include an image capturing function and an autofocus function. For example, the camera module 1000 may include an autofocus function using an image.

The camera module 1000 processes a still image or a moving image frame obtained by an image sensor in a photographing mode or a video call mode. The processed image frame may be displayed on a predetermined display unit, and may be stored in a memory. A camera (not shown) may be disposed on a front surface of the body of the mobile terminal.

For example, the camera module 1000 may include a first camera module and a second camera module, and OIS may be implemented along with an AF or zoom function by the first camera module.

The flash module 1530 may include a light-emitting device that emits light therein. The flash module 1530 may be operated by a camera operation of a mobile terminal or by user control.

The autofocus device 1510 may include one of the packages of a surface light emitting laser device as a light emitting unit.

The autofocus device 1510 may include an autofocus function using a laser. The autofocus device 1510 may be mainly used in a condition in which an autofocus function using an image of the camera module 1000 is deteriorated, for example, in a close environment of 10 m or less or a dark environment. The autofocus device 1510 may include a light-emitting unit including a vertical cavity surface emitting laser (VCSEL) semiconductor device, and a light receiving unit that converts light energy into electric energy such as a photodiode.

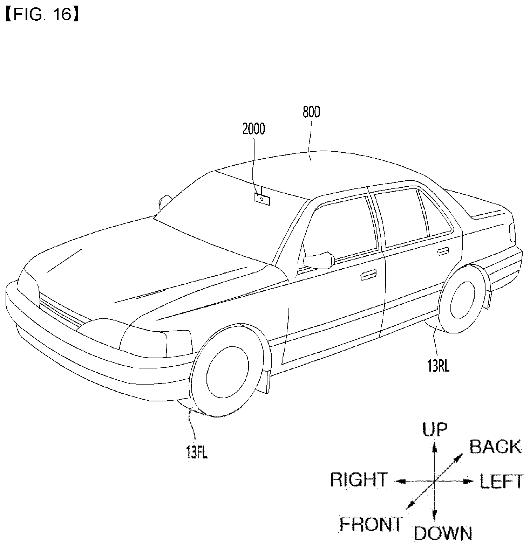

Next, FIG. 16 is a perspective view of a vehicle 700 to which a camera module according to an embodiment is applied.

For example, FIG. 16 is an appearance view of a vehicle having a vehicle driving assistance device to which a camera module 10 according to the embodiment is applied.

Referring to FIG. 16, the vehicle 800 according to the embodiment may include wheels 13FL and 13FR that rotate by a power source, and a predetermined sensor. The sensor may be a camera sensor 2000, but the embodiment is not limited thereto.

The camera 2000 may be a camera sensor to which the camera module 1000 according to the embodiment is applied.

The vehicle 800 according to the embodiment may acquire image information through the camera sensor 2000 that photographs a front image or a surrounding image, and may determine an unidentified situation of a lane by using the image information and generate a virtual lane in the unidentified situation.

For example, the camera sensor 2000 may acquire the front image by photographing a front of the vehicle 800, and a processor (not shown) may acquire the image information by analyzing an object included in the front image.

For example, when an object such as a lane, a neighboring vehicle, a traveling obstacle, and a median strip, a curb, and a street tree corresponding to an indirect road marking is photographed in an image photographed by the camera sensor 2000, the processor detects such an object to include in the image information.

In this case, the processor may acquire distance information with the object detected through the camera sensor 2000 to further complement the image information. The image information may be information about an object captured in the image.

Such a camera sensor 2000 may include an image sensor and an image processing module. The camera sensor 2000 may process a still image or moving image obtained by the image sensor (e.g., CMOS or CCD). The image processing module may process the still image or moving image acquired through the image sensor to extract necessary information, and may transmit the extracted information to the processor.

In this case, the camera sensor 2000 may include a stereo camera so as to improve the measurement accuracy of the object and to secure more information such as a distance between the vehicle 5 and the object, but the embodiment is not limited thereto.

According to an embodiment, the guide member is disposed in the groove and the guide member may be pressurized using the first elastic member, and accordingly, it is possible to rotate the first moving part in a state where the guide member is stably disposed between the fixed part and the first moving part. In addition, the embodiment may adjust a shape of the groove and adjust the pressing force of the first elastic member on the guide member, and accordingly, it is possible to easily adjust the adhesion between the fixed part and the first moving part. According to this, the embodiment may remove a magnet or a yoke used to adjust the adhesion while pressing the guide member in a comparative example. Furthermore, the embodiment may minimize magnetic field interference generated during an auto-focus operation or an image stabilization operation by the magnet or yoke of the comparative example, and thereby improve operation reliability.

In addition, in the embodiment, the frame in which the magnet is disposed in the first moving part is divided into a second frame and a subframe. Accordingly, the embodiment may allow easy coupling of a magnet part corresponding to a second driving member to the first moving part, thereby improving assembly.

In addition, the embodiment has a structure in which the second lower elastic member is coupled together between the second frame and the subframe, thereby improving the assembly of the first moving part and the second moving part.

In an embodiment, the first curved surface provided in an upper portion of the second frame and the second curved surface provided in a lower portion have different radius of curvature. In this case, a center of a virtual first circle formed by the first curved surface coincides with a center of a virtual second circle formed by the second curved surface, and accordingly, a step is provided between the first curved surface and the second curved surface. Accordingly, the embodiment may prevent the first moving part from being separated from an external impact, and thus may improve reliability. Furthermore, a first radius of curvature of the first curved surface is smaller than a second radius of curvature of the second curved surface, thereby reducing a height of the first moving part compared to both the first curved surface and the second curved surface having a second radius of curvature, and further reducing the height of the overall lens driving device.

The vehicle 800 of the embodiment may provide an advanced driver assistance system (ADAS).

For example, the ADAS include an autonomous emergency braking (AEB), which automatically slows down or stops without the driver stepping on the brakes in the event of a collision risk, a lane keep assist system (LKAS) ma, which maintains the lane by adjusting the driving direction when the driver leaves the lane, an advanced smart cruise control (ASCC), which automatically maintains a distance from the vehicle in front while driving at a pre-set speed, a blind-spot collision avoidance assist system (ABSD: Active Blind Spot Detection), which detects the risk of collision in the blind spot and helps to change lanes safely, and an around view monitoring system (AVM: Around View Monitor), which visually displays a situation around the vehicle.

In such an advanced driver assistance system (ADAS), the camera module functions as a core component along with radar and the like, and the proportion of the camera module to which it is applied is gradually widening.

For example, in the case of an automatic emergency braking system (AEB), a vehicle's front camera sensor and radar sensor detect a vehicle or pedestrian in front and automatically emergency brake when the driver does not control the vehicle. Alternatively, in the case of driving steering assistance system (LKAS), a camera sensor can be used to detect whether the driver leaves the lane without operating a turn signal, and automatically steers the steering wheel to maintain the lane. In addition, in the case of around view monitoring system (AVM), the situation around the vehicle can be visually displayed through camera sensors placed on all sides of the vehicle.

Hereinafter, a camera module according to another embodiment will be described.

### <SECOND EMBODIMENT>

Hereinafter, specific features of the camera module according to the second embodiment will be described in detail with reference to the drawings.

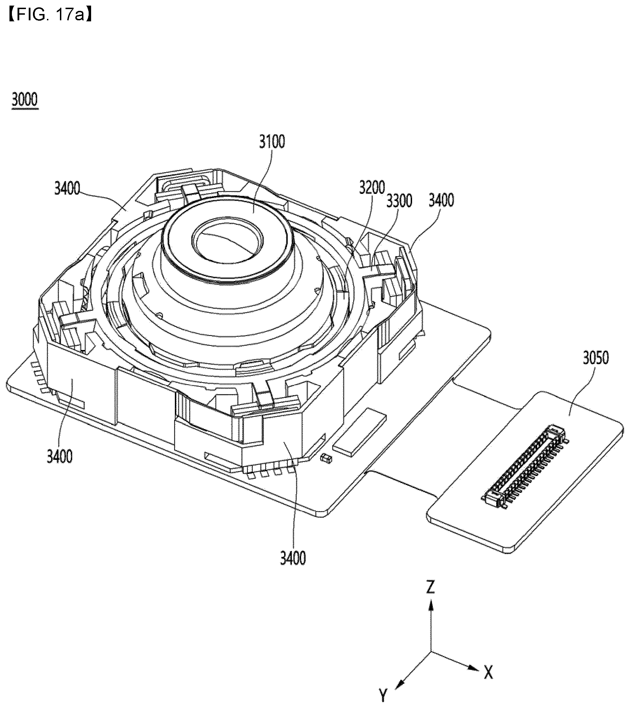

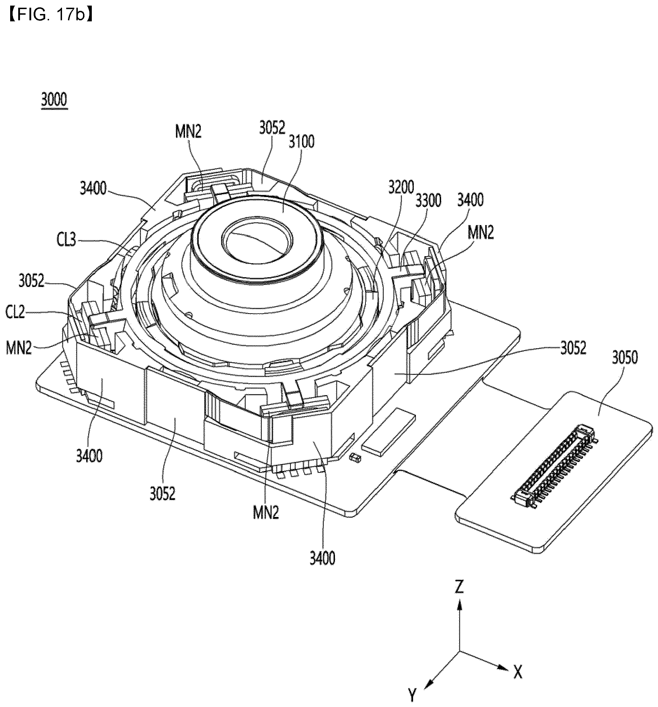

FIG. 17A is a perspective view of a camera module 3000 according to the second embodiment, and FIG. 17B is a detailed perspective view of the camera module 3000 according to the embodiment shown in FIG. 17A.

Referring to FIG. 17A, a camera module 3000 according to an embodiment may include a circuit board 3050, a bobbin 3200 disposed on the circuit board 3050 and on which a lens 3100 is disposed, a first housing 3300 on which the bobbin 3200 is disposed, and a second housing 3400 on which the first housing 3300 is disposed.

The second housing 3400 may be disposed outside the first housing 3300 in plurality. For example, four second housings 3400 may be disposed at corners outside the first housing 3300, but are not limited thereto.

The circuit board 3050 may be a PCB, a Flexible Printed Circuit Board (FPCB), or a Rigid Flexible Printed Circuit Board (RFPCB).

Next, referring to FIG. 17B, the embodiment may include a plurality of coil substrates 3052 electrically connected to the circuit board 3050 and disposed in the second housing 3400. A second coil part CL2 and a third coil part CL3 may be disposed on the coil substrate 3052.

For example, the coil substrates 3052 may be disposed in each of the four second housings 3400, and a second coil part CL2 and a third coil part CL3 may be disposed on each coil substrate 3052, but is not limited thereto.

In addition, in the embodiment, a second magnet part MN2 may be disposed at the second housing 3400. For example, second magnet parts MN2 may be respectively disposed at each of the four second housings 3400.

According to the embodiment, the OIS may be driven by the electromagnetic force between the second magnet part MN2 and the second coil part CL2.

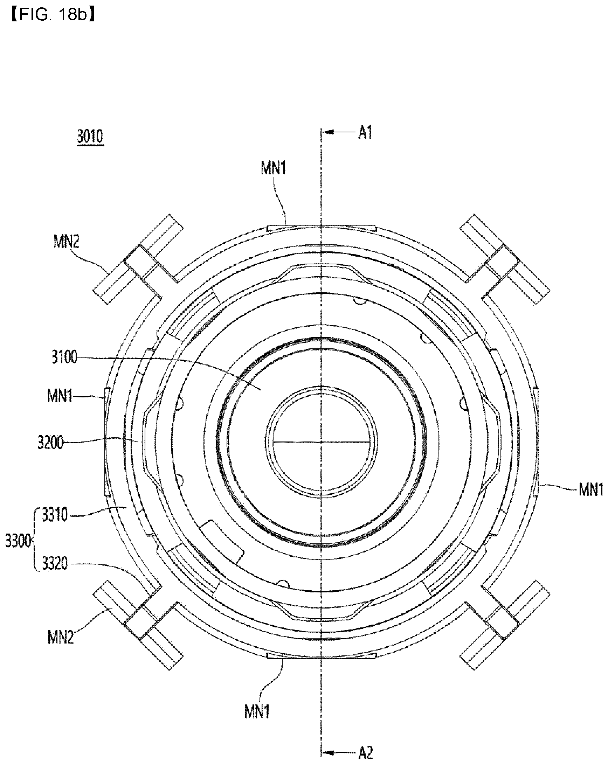

In addition, according to the embodiment, a first magnet part MN1 may be disposed in a region of the first housing 3300 corresponding to the third coil part CL3 (see FIG. 18B). According to the embodiment, the OIS can be driven by the electromagnetic force between the first magnet part MN1 and the third coil part CL3. As will be described later, the first magnet part MN1 may also perform an AF driving function. For example, some of the first magnet parts MN1 may contribute to OIS driving, and other parts of the first magnet parts MN1 may contribute to AF driving.

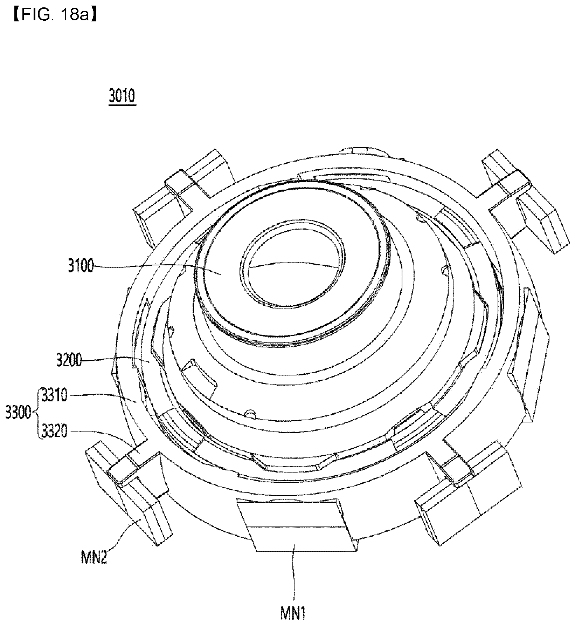

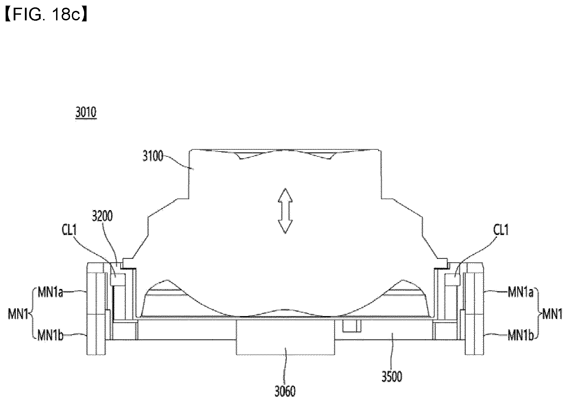

Next, FIG. 18A is a perspective view in which the circuit board 3050 is omitted from the camera module 3000 according to the embodiment shown in FIG. 17B, FIG. 18B is a plan view of the lens driving device 3010 in the camera module according to the embodiment shown in FIG. 18A, and FIG. 18C is a cross-sectional view of the lens driving device 3010 according to the embodiment shown in FIG 18B.

Referring to FIGS. 18A and 18B, a lens driving device 3010 according to an embodiment may include a bobbin 3200 on which a lens 3100 is disposed, and a first housing 3300 on which the bobbin 3200 is disposed. The first housing 3300 may include a housing frame 3310 accommodating the bobbin 3200 having a hollow shape and a protruding portion 3320 of the first housing 3300. The first magnet part MN1 may be disposed on the housing frame 3310, and the second magnet part MN2 may be disposed on the protruding portion 3320 of the first housing 3300. An end of the protruding portion 3320 of the first housing 3300 may have a protruding portion groove (not shown) in which the second magnet part MN2 is disposed.

Next, as shown in FIG. 18C, AF can be driven by the interaction between the first magnet part MN1 and the first coil part CL1 disposed on the bobbin 3200, and as the bobbin 3200 moves, the lens 3100 can be moved up and down in the optical axis direction, and the distance to the image sensor 3060 can be controlled.

In this case, the first magnet part (MN1) may include a bipolarly magnetized magnet.

For example, the first magnet part MN1 may include a first-first magnet MN1a and a first-second magnet MN1b. The first-first magnet MN1a may be disposed to face the first coil part CL1.

In the embodiment, AF driving may be possible as much as the vertical width and length of the first-first magnet MN1a, but is not limited thereto. The first-second magnet MN1b may contribute to driving the OIS by interacting with the third coil part CL3.

In addition, the first-first magnet MN1a may contribute to driving the OIS by interacting with the third coil part CL3. That is, the first-first magnet MN1a may be a magnet for both AF driving and OIS, but is not limited thereto.

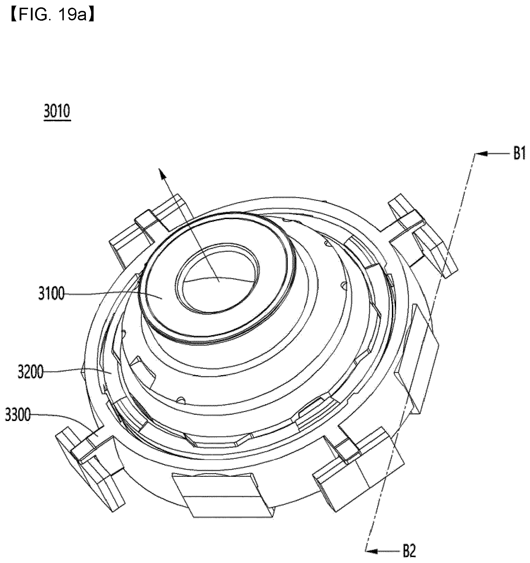

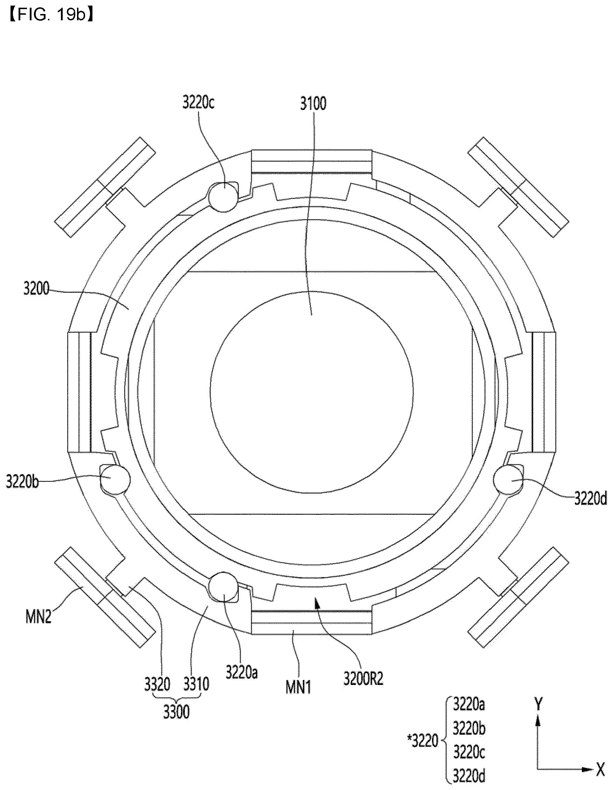

Next, FIG. 19A is a perspective view of a lens driving device according to the embodiment shown in FIG. 18B, and FIG. 19B is a side cross-sectional view of the lens driving device according to the embodiment shown in FIG. 19A taken along line B1-B2 perpendicular to the z-axis.

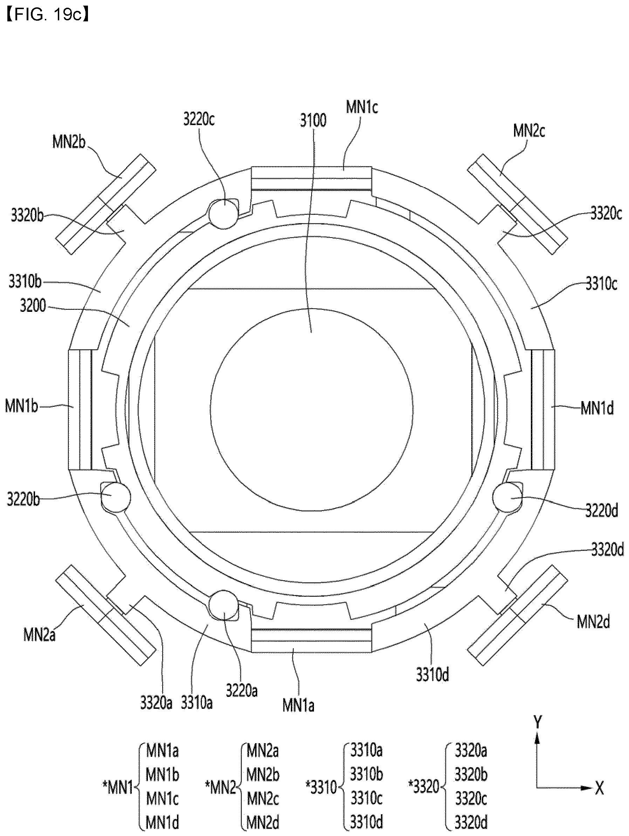

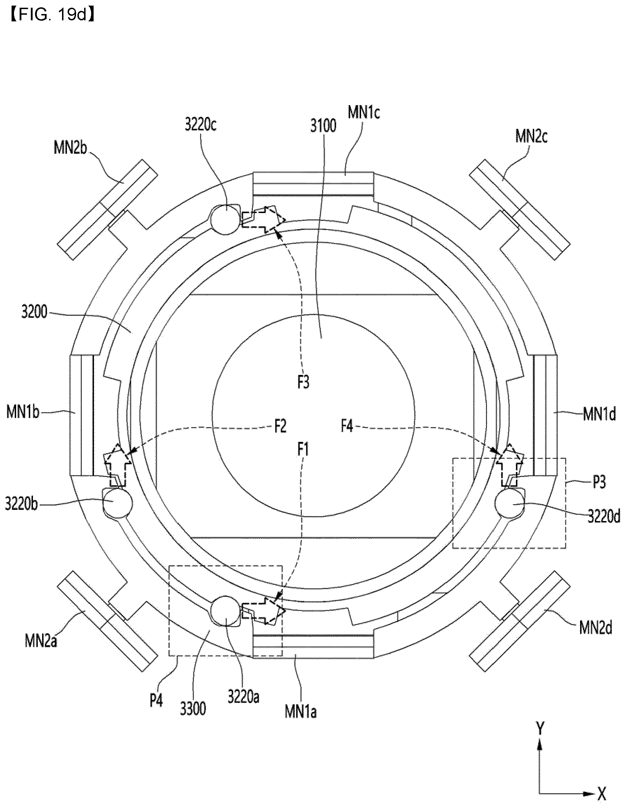

FIG. 19C is a detailed view of FIG. 19B, and FIG. 19D is a view showing attraction in FIG. 19C.

Referring to FIG. 19B, a lens driving device 3010 according to an embodiment may include a bobbin 3200 on which a lens 3100 is disposed, a first housing 3300 on which the bobbin 3200 is disposed, and a first guide member 3220 disposed between the bobbin 3200 and the first housing 3300.

The first guide member 3220 may have a shaft shape, but is not limited thereto.

In addition, the first guide member 3220 may be disposed in plurality. For example, it may include four first guide members 3220 disposed between the bobbin 3200 and the first housing 3300, but is not limited thereto.

For example, the first guide member 3220 may include, a first-first guide member 3220a, a first-second guide member 3220b, a first-third guide member 3220c, and a first-fourth guide member 3220d, but is not limited thereto.

In addition, the first housing 3300 may include a housing frame 3310 accommodating the bobbin 3200 and having a hollow shape, and a protruding portion 3320 of the first housing 3300. The first magnet part MN 1 may be disposed on the housing frame 3310, and the second magnet part MN2 may be disposed on the protruding portion 3320 of the first housing 3300. An end of the protruding portion 3320 of the first housing 3300 may have a protruding portion groove (not shown) in which the second magnet part MN2 is disposed.

In addition, the bobbin 3200 of the embodiment may include a second recess 3200R2 in a region corresponding to the first magnet MN1 disposed on the first housing 3300.

According to the embodiment, as the second recess 3200R2 is disposed on the bobbin 3200, the electromagnetic force between the first magnet MN1 and the first coil part CL1 can be improved, and the driving force can be improved according to the weight reduction of the bobbin 3200.

Next, referring to FIG. 19C, the housing frame 3310 of the first housing 3300 may include four regions.

For example, the housing frame 3310 of the first housing 3300 may include a first-first housing frame portion 3310a, a first-second housing frame portion 3310b, a first-third housing frame portion 3310c, and a first-fourth housing frame portion 3310d.

In addition, the protruding portion 3315 of the first housing 3300 may include four regions.

For example, the protruding portion 3315 of the first housing 3300 includes a first-first housing protruding portion 3320a extending from the first-first housing frame portion 3310a, a first-second housing protruding portion 3320b extending from the first-second housing frame portion 3310b, a first-third housing protruding portion 3320c extending from the first-third housing frame portion 3310c, and a first-fourth housing protruding portion 3320d extending from the first-fourth housing frame portion 3310d.

The first magnet part MN1 may be disposed in plurality. For example, the first magnet part MN1 may include, a first-first magnet MN1a, a first-second magnet MN1b, a first-third magnet MN1c, and a first-fourth magnet MN1d disposed on four sides of the housing frame 3310 of the first housing 3300, but is not limited thereto.

For example, the first-first magnet MN1a may be disposed between the first-first housing frame portion 3310a and the first-fourth housing frame portion 3310d. The first-second magnet MN1b may be disposed between the first-first housing frame portion 3310a and the first-second housing frame portion 3310b.

In addition, the first-third magnet MN1c may be disposed between the first-second housing frame portion 3310b and the first-third housing frame portion 3310c. The first-fourth magnet part MN1a may be disposed between the first-third housing frame portion 3310c and the first-fourth housing frame portion 3310d.

In addition, the second magnet part MN2 may be disposed in plurality. For example, the second magnet part MN2 may include a second-first magnet part MN2a, a second-second magnet part MN2b, a second-third magnet part MN2c, and a second-fourth magnet part MN2d respectively disposed on the protruding portion 3315 of the first housing 3300, but is not limited thereto.

For example, the second-first magnet part MN2a may be disposed on the first-first housing protruding portion 3320a of the first housing 3300, and the second-second magnet part MN2b may be disposed on the first-second housing protruding portion 3320b of the first housing 3300.

In addition, the second-third magnet part MN2c may be disposed on the first-third housing protruding portion 3320c of the first housing 3300, and the second-fourth magnet part MN2d may be disposed on the first-fourth housing protruding portion 3320d of the first housing 3300.

In an embodiment, the first guide member 3220 may be provided in plurality. For example, the first guide member 3220 may include a first-first guide member 3220a, a first-second guide member 3220b, a first-third guide member 3220c, and a first-fourth guide member 3220d, but is not limited thereto.

In addition, the first housing frame portion 3310 may include a plurality of housing frame portions. For example, the housing frame 3310 may include a first-first housing frame portion 3310a, a first-second housing frame portion 3310b, a first-third housing frame portion 3310c, and a first-fourth housing frame portion 3310d.

In an embodiment, the plurality of first guide members 3220 may be disposed on some of the plurality of first housing frame portions, and may not be disposed on other first housing frame portions.

For example, the first guide member 3220 may be disposed on second to fourth quadrants based on the horizontal cross section of the first housing 3310, and the first guide member 3220 may not be disposed on a first quadrant.

For example, a horizontal cross section (perpendicular to the optical axis) of the first housing 3310 may include first to fourth quadrants, the first guide member 3220 may be disposed on the second to fourth quadrants of the first housing 3310, and the first guide member 3220 may not be disposed in the first quadrant of the first housing 3300.

For example, the first guide member 3220 may be disposed on the first-first housing frame portion 3310a, the first-second housing frame portion 3310b, and the first-fourth housing frame portion 3310d, but may not be disposed on the remaining first-third housing frame portions 3310c.

In addition, a plurality of first guide members 3220 among the first guide members 3220 may be disposed on any one first housing frame portion.

For example, in the embodiment, the first-first guide member 3220a and the first-second guide member 3220b may be disposed on the first-first housing frame portion 3310a.

In addition, one of the first guide members 3220 may be disposed on any one of the first housing frame portions.

For example, the first-third guide member 3220c may be disposed on the first-second housing frame portion 3310b. In addition, the first-fourth guide member 3220d may be disposed on the first-fourth housing frame portion 3310d.

Next, FIG. 19D is a view showing the attraction direction in FIG. 19c.

For example, the attraction direction in FIG. 19D represents a direction in which the attraction between the first magnet part MN1 and the first guide member 3220 is greatest. In FIG. 19D, the X-axis and the Y-axis are directions perpendicular to the Z-axis, which is an optical axis, and the X-axis and Y-axis are not limited to those shown and may be interchangeable directions.

Referring to FIG. 19D, in the embodiment, the first-first guide member 3220a may be disposed at one end of the first-first housing frame portion 3310a, and the first-second guide member 3220b may be disposed at the other end of the first-first housing frame portion 3310a.

The first-first guide member 3220a may be disposed adjacent to the first-first magnet MN1a, and the first-second guide member 3220b may be disposed adjacent to the first-second magnet MN1b.

Accordingly, a first attraction direction (F1) in which the attraction between the first-first magnet MN1a and the first-first guide member 3220a is maximum may be a direction parallel to the X axis.

In addition, a second attraction direction F2 in which the attraction between the first-second magnet MN1b and the first-second guide member 3220b is maximum may be a direction parallel to the Y axis.

In addition, in the embodiment, the first-third guide member 3220c may be disposed at the other end positioned farther from the first-first housing frame portion 3310a among one end and the other end of the first-second housing frame portion 3310b.

The first-third guide member 3220c may be disposed adjacent to the first-third magnet MN1c, but may be spaced apart from the first-second magnet MN1b and may be disposed farther than the first-third magnet MN1c.

Accordingly, a third attraction direction F3 in which the attraction between the first-third magnet MN1c and the first-third guide member 3220c is maximum may be a direction parallel to the X axis.

In addition, in the embodiment, the first-fourth guide member 3220d may be disposed at the other end positioned farther from the first-first housing frame portion 3310a among one end and the other end of the first-fourth housing frame portion 3310d.

The first-fourth guide member 3220d may be disposed adjacent to the first-fourth magnet MN1d, but may be spaced apart from the first-first magnet MN1a and may be disposed farther than the first-first magnet MN1a.

Accordingly, a fourth attraction direction F4 in which the attraction between the first-fourth magnet MN1d and the first-fourth guide member 3220d is maximum may be a direction parallel to the Y axis.

In a closed internal technology, a resultant force of attraction between the first magnet part MN1 and the first guide member 3220 cancels each other, and accordingly, it is difficult for the resultant force to cancel a gravitational force.

On the other hand, according to the embodiment, there is a special technical effect of suppressing the difference in attitude with minimal force by arranging the position of the first guide member 3220, which is a magnetic material, based on the direction of attraction. Accordingly, there is a technical effect of reducing current consumption by minimizing the force in the AF direction (movement direction).

For example, according to the embodiment, a resultant force of attraction between the first magnet part MN1 and the first guide member 3220 has a technical effect that cancels the gravitational force.

For example, the resultant force of attraction between the first magnet part MN1 and the first guide member 3220 can be controlled to be greater than the gravitational force.

For example, when a gravitational force of 5mN is applied, the resultant force of attraction between the first magnet part MN1 and the first guide member 3220 may be controlled to be about 10mN.

For example, referring to FIG. 19D, a case in which the Y-axis direction is opposite to the gravitational force will be described.

In Figure 19D, the resultant force of the second attraction direction F2 where the attraction between the first-second magnet MN1b and the first-second guide member 3220b is maximum and the fourth attraction direction F4 where the attraction between the first-fourth magnet MN1d and the first-fourth guide member 3220d is maximum is in the opposite direction to the gravitational force. Accordingly, the resultant forces of the second attraction direction F2 and the third attraction direction F4 are greatly controlled compared to the gravitational force, so that the gravitational force can be canceled.

Accordingly, the embodiment arranges the position of the first guide member 3220, which is a magnetic material, based on the direction of attraction, and accordingly, there is a technical effect of reducing current consumption by minimizing the force in the AF direction (movement direction) by suppressing the posture difference with a minimum force.

On the other hand, the first guide member 3220 has a complex technical effect of preventing the tilt of the barrel by a resultant force in a third attraction direction F3 with the maximum attraction between the first-third magnet part MN1c and the first-third guide member 3220c and a first attraction direction F1 with the maximum attraction between the first-first magnet part MN1a and the first-first guide member 3220a.

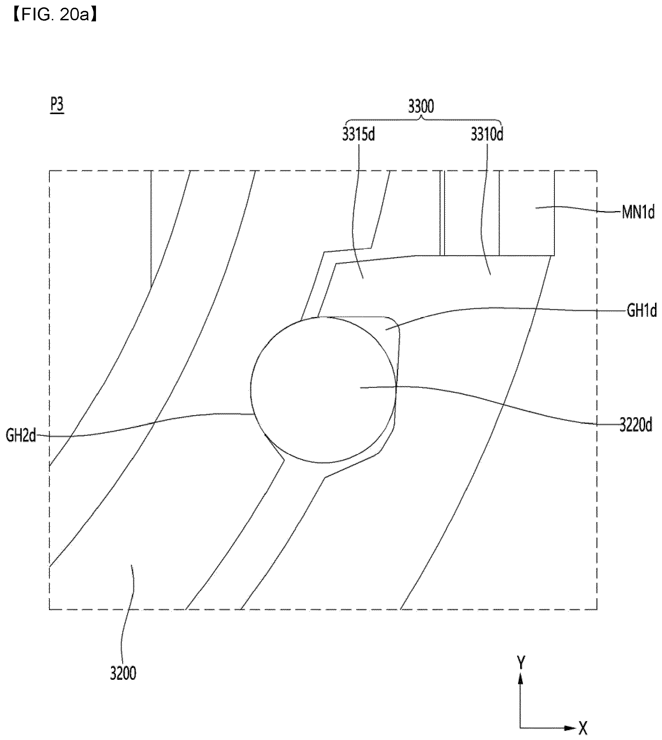

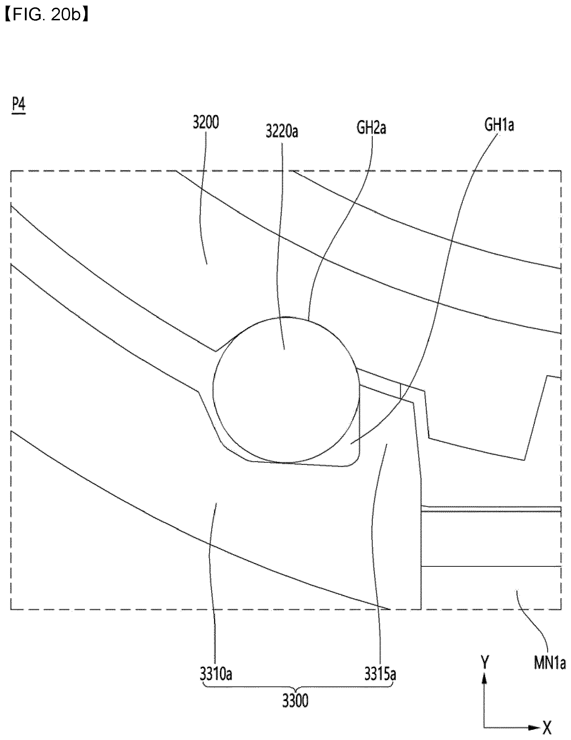

Next, FIG. 20A is an enlarged view of the third region P3 in FIG. 19D, and FIG. 20B is an enlarged view of the fourth region P4 in FIG. 19D.

Referring to FIG. 20A, in an embodiment, the first housing 3300 may include a first-fourth housing frame portion 3310d and a first-fourth guide protruding portion 3315d.

The first housing 3300 may have a first-fourth guide groove GH1d in which the first-fourth guide member 3220d is disposed. The first-fourth guide groove GH1d may have an asymmetrical shape.

In addition, the bobbin 3200 may have a second-fourth guide groove GH2d in which the first-fourth guide member 3220d is disposed. The second-fourth guide groove GH2d may have a shape corresponding to the outer circumference surface of the first-fourth guide member 3220d. For example, the second-fourth guide groove GH2d may have a curved shape corresponding to the outer circumference surface of the first-fourth guide member 3220d.

The first-fourth guide protruding portion 3315d may protrude by extending in the X-axis direction from the first-fourth housing frame portion 3310d.

Accordingly, in the embodiment, the first-fourth guide protruding portion 3315d may function as a stopper of the first-fourth guide member 3220d in the Y-axis direction.

Next, referring to FIG. 20B, in an embodiment, the first housing 3300 may include a first-first housing frame portion 3310a and a first-first guide protruding portion 3315a.

The first housing 3300 may have a first-first guide groove GH1a in which the first-first guide member 3220a is disposed. The first-first guide groove GH1a may have an asymmetrical shape.

In addition, the bobbin 3200 may include a second-first guide groove GH2a in which the first-first guide member 3220a is disposed. The second-first guide groove GH2a may have a shape corresponding to the outer circumference surface of the first-first guide member 3220a. For example, the second-first guide groove GH2a may have a curved shape corresponding to the outer circumference surface of the first-first guide member 3220a.

The first-first guide protruding portion 3315a may protrude by extending in the Y-axis direction from the first-first housing frame portion 3310a.

Accordingly, in the embodiment, the first-first guide protruding portion 3315a may function as a stopper in the X-axis direction of the first-first guide member 3220a.

Referring to FIGS. 19D, 20A, and 20B together, in the embodiment, the first housing 3300 has a stopper in the X-axis direction and the Y-axis direction, so that there is a technical effect of improved reliability. For example, in the embodiment, the first-fourth guide protruding portion 3315d may function as a stopper of the first-fourth guide member 3220d in the Y-axis direction, and the first-first guide protruding portion 3315a may function as a stopper of the first-first guide member 3220a in the X-axis direction.

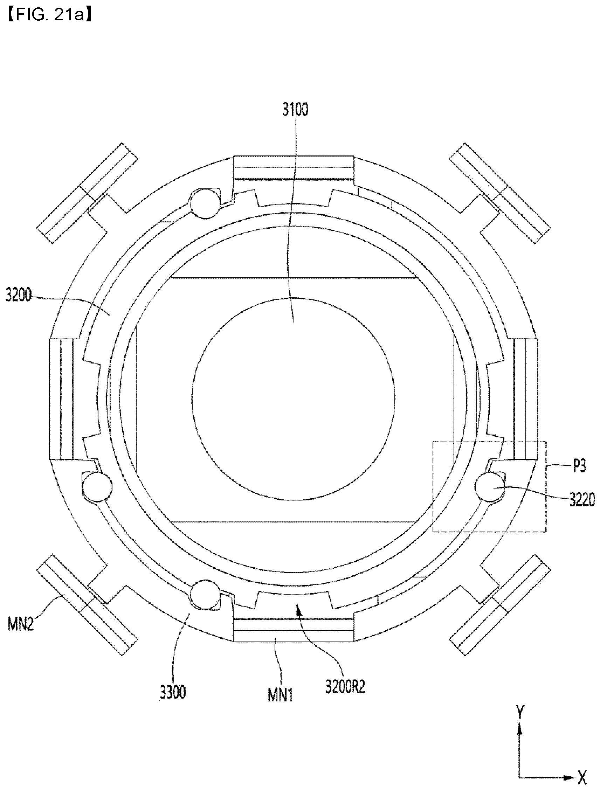

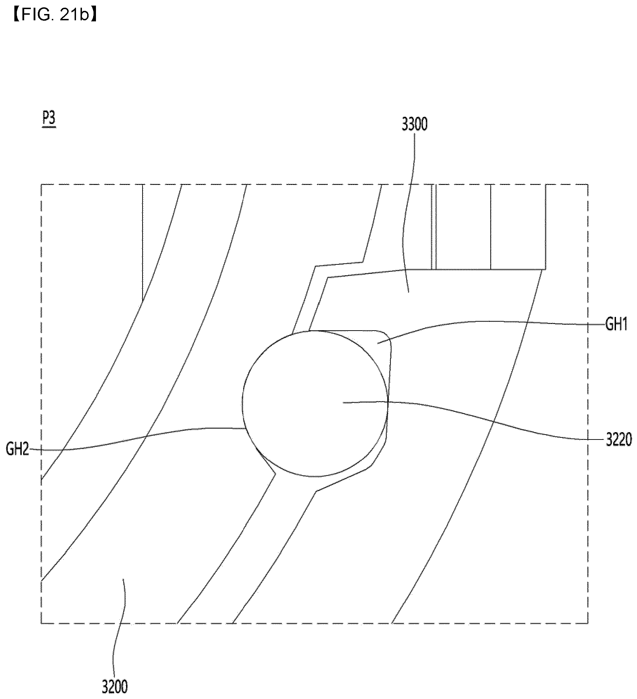

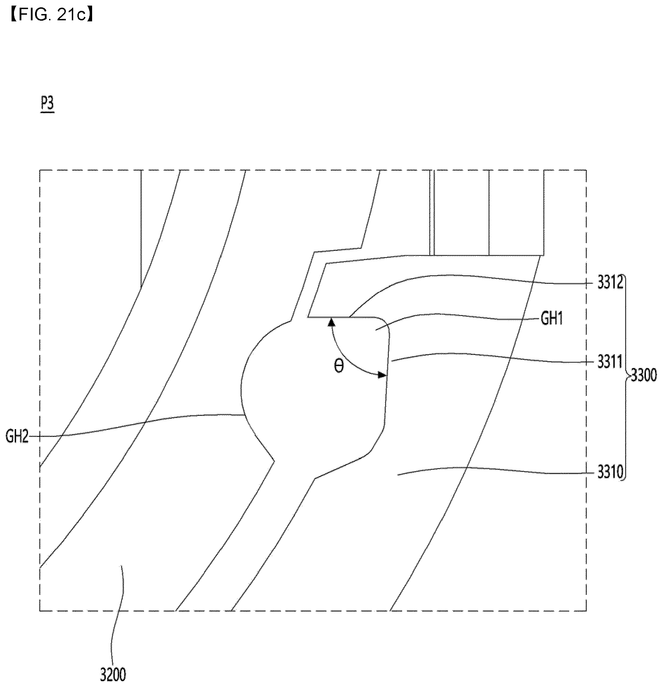

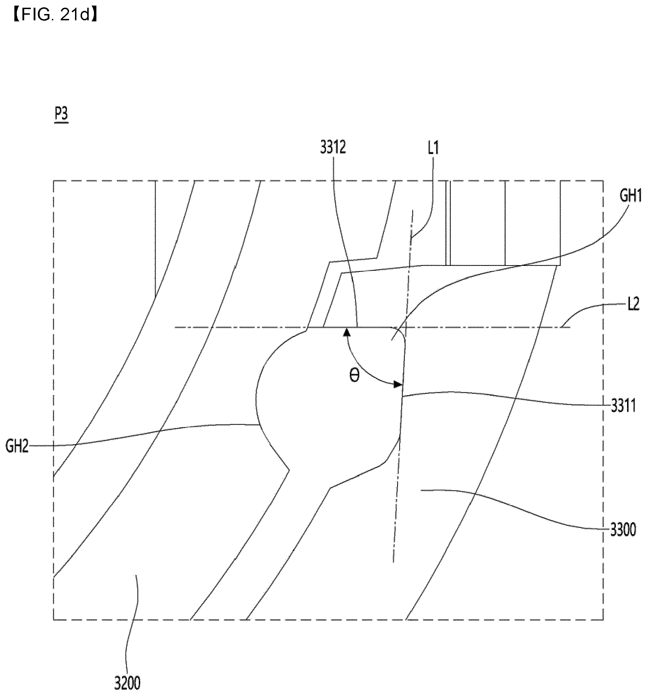

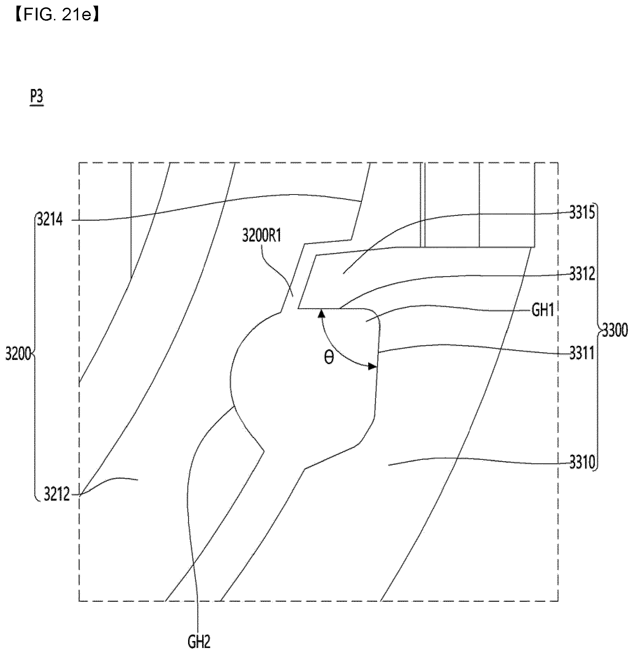

Next, FIG. 21A is a side cross-sectional view of the lens driving device 3010 according to the embodiment shown in FIG. 19A taken along line B1-B2 perpendicular to the z-axis, FIG. 21B is an enlarged view of a third region P3 in a side cross-sectional view of the lens driving device according to the embodiment shown in FIG. 21A, FIG. 21C is a first detail view of FIG. 21B, FIG. 21D is a second detail view of FIG. 21B, and FIG. 21E is a third detail view of FIG. 21B.

For example, FIG. 21C is a first detailed view in which the first guide member 3220 is omitted from the enlarged view of a third region P3 in a side cross-sectional view of the lens driving device 3010 according to the embodiment shown in FIG. 21B, and FIG. 21D is a second detailed view in which the first guide member 3220 is omitted from enlarged view of a third region P3 in a side cross-sectional view of the lens driving device 3010 according to the embodiment shown in FIG. 21B.

Referring to FIG. 21B, in the embodiment, the first housing 3300 may include a first guide groove GH1 in which the first guide member 3220 is disposed. The first guide groove GH1 may have an asymmetrical shape.

In addition, the bobbin 3200 may have a second guide groove GH2 in which the first guide member 3220 is disposed. The second guide groove GH2 may have a shape corresponding to an outer circumference surface of the first guide member 3220. For example, the second guide groove GH2 may have a curved shape corresponding to the outer circumference surface of the first guide member 3220.

Specifically, referring to FIG. 21C, the first housing 3300 includes a housing frame 3310 accommodating the bobbin 3200 and having a hollow shape, and a first guide groove GH1 may be formed inside the first housing frame 3310.

The first guide groove GH1 includes a first guide surface 3311 and a second guide surface 3312 that can contact the first guide member 3220, and an angle Θ formed between the first guide surface 3311 and the second guide surface 3312 may be an acute angle.

In addition, the first guide groove GH1 may include a first guide surface 3311 and a second guide surface 3312 that may contact the first guide member 3220. The first guide surface 3311 and the second guide surface 3312 may be flat.

According to the lens driving device and the camera module including the same according to the embodiment, it is possible to solve the technical problem of separation of the lens driving device when an impact is applied to the camera module.

For example, in the embodiment, the first guide member 3220 for AF driving of the lens is disposed between the first guide groove GH1 and the second guide groove GH2, and the first guide groove GH1 and the second guide groove GH2 may function as a guide rail.

According to the embodiment, the first guide groove GH1 in which the first guide member 3220 is disposed has an asymmetrical shape, so that even if an impact or the like occurs, there is a technical effect of providing a movement path through which the lens may move with minimal friction while preventing separation of the first guide member 3220.

In addition, in the embodiment, the angle Θ formed by the first guide surface 3311 and the second guide surface 3312 may be an acute angle, and accordingly, there is a technical effect of preventing the separation of the first guide member 220 even when an impact or the like occurs.

Specifically, referring to FIG. 21D, an angle Θ formed by the first guide surface 3311 and the second guide surface 3312 may be an acute angle based on a first line L1 extending from the first guide surface 3311 and a second line L2 extending from the second guide surface 3312 in the first guide groove GH1.

The first line L1 and the second line L2 may be one of tangential lines to the first guide member 3220.

According to the embodiment, the angle formed between the first guide surface 3311 and the second guide surface 3312 in the first guide groove GH1 of the first housing 3300 is controlled at an acute angle, so that a technical problem that the first guide member 3220 is separated when an impact is applied to the camera module can be solved.

Next, referring to FIG. 21E, the bobbin 3200 may include a bobbin frame 212 where the second guide groove GH2 is formed and a first recess 3200R1 inward from an outermost periphery 3214 of the bobbin frame.

The first housing 3300 may include a first guide protruding portion 3315 protruding from the first housing frame 3310 toward the bobbin 3200, and the first guide protruding portion 3315 may be disposed on the first recess 3200R1 of the bobbin 3200.

The first guide protruding portion 3315 may be disposed lower than the outermost periphery 3214 of the bobbin 3200. Through this, separation of the first guide member 3220 can be effectively prevented.

For example, the first guide protruding portion 3315 of the first housing 3300 protrudes toward the bobbin 3200 and protrudes to the first recess 3200R1 of the bobbin 3200 and is disposed, so that even if a situation such as impact occurs, the first guide member 3220 can be firmly positioned in the first guide groove GH1 and the second guide groove GH2 without being separated, and reliability can be improved by preventing the AF module from being separated due to impact.

In addition, according to the embodiment, it is possible to solve the technical problems of occurrence of high-frequency vibration, increase in driving resistance, and occurrence of dynamic tilt due to a preload spring structure in the AF structure.

For example, according to the embodiment, it is possible to provide a structure for moving a lens with minimal friction and tilt by removing a spring vulnerable to high-frequency vibration from an AF structure and applying a guide shaft.

For example, the embodiment employs a first guide member 3220 in the form of a guide shaft, so that can move up and down in a point contact state with the first housing 3300. According to the embodiment, there are the following technical effects. The first guide member 3220 for AF operation is disposed between the first guide groove GH1 and the second guide groove GH2, so that the spring structure is removed compared to the prior art, so there is no high-frequency vibration, and the absence of spring structure reduces drive resistance, reduces power consumption, and the dynamic tilt is less compared to the guide bearing structure.

In addition, according to the embodiment, there is a technical effect of preventing magnetic field interference between magnets when AF or OIS is implemented. For example, in the conventional internal technology, there is a problem in that thrust is reduced because AF driving or OIS driving does not work properly due to magnetic field interference between a magnet for driving AF and a magnet for driving OIS. In addition, there is a problem of causing decentering or tilting due to magnetic field interference between magnets.

According to the embodiment, there is a technical effect capable of providing a lens driving device capable of preventing magnetic field interference between magnets by changing the arrangement positions of the second magnet part MN2 for OIS driving and the first magnet part MN1 for AF driving, and a camera module including the same.

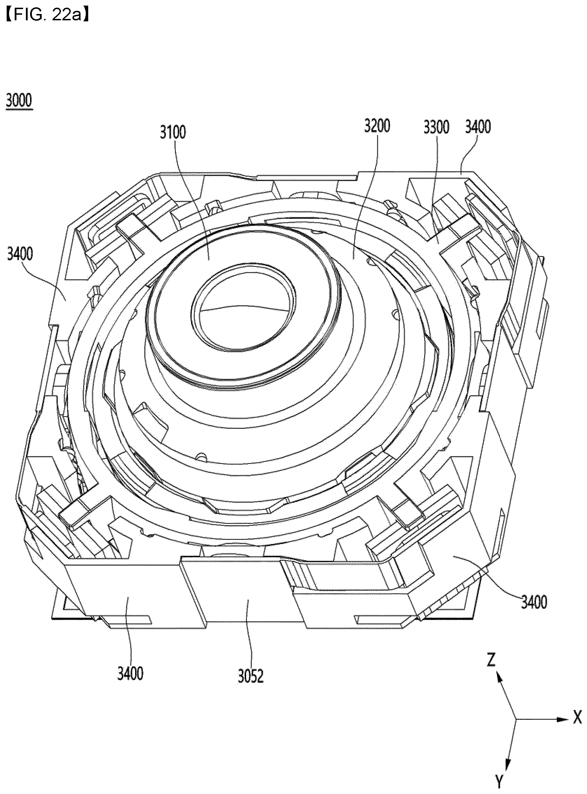

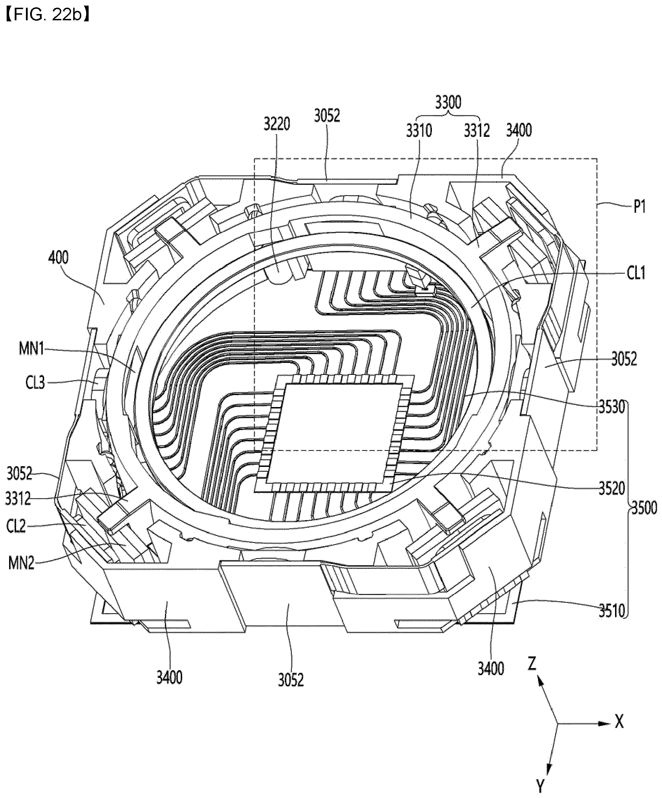

Next, the OIS driving of the embodiment will be described with reference to FIGS. 22A to 22C. FIG. 22A is a view in which the circuit board 3050 is omitted from the camera module according to the embodiment shown in FIG. 17A, and FIG. 22B is a detailed view in which the bobbin 3100 and the lens 3100 are omitted in FIG. 22A.

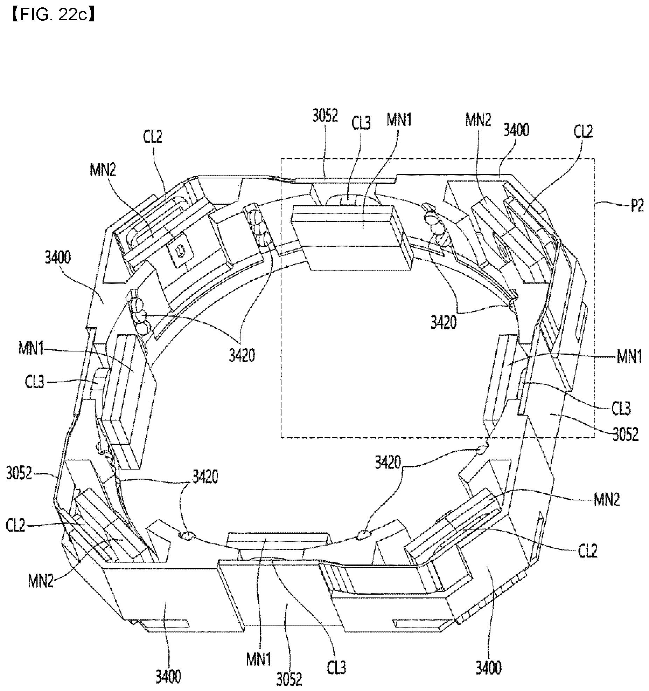

In addition, FIG. 22C is a detailed view in which the first housing 3300, the first guide member 3220, and the sensor substrate part 3500 are omitted in FIG. 22B.

First, referring to FIG. 22A, a camera module 3000 according to an embodiment may include a first housing 3300 on which a bobbin 3200 is disposed and a second housing 3400 on which the first housing 3300 is disposed.

Next, referring to FIG. 22B based on FIG. 22A, the embodiment may include a sensor substrate part 3500 electrically connected to the circuit board 3050 and disposed below the second housing 3400.

The camera module 3000 according to the embodiment may be a module tilting method in which the lens 3100 and the image sensor (not shown) move integrally to realize OIS.

Through this, the embodiment has a wider correction range than the conventional lens movement method as the OIS operation is possible by moving the entire module including the lens and the image sensor, and since the optical axis of the lens and the axis of the image sensor are not twisted, there is a technical effect that there is no distortion of the image by minimizing the deformation of the image.

Continuously, referring to FIG. 22B, the sensor substrate part 3500 may include a first sensor substrate part 3510 electrically connected to a circuit board 3050, a second sensor substrate part 3520 on which an image sensor (not shown) is disposed, and an elastic substrate part 3530 connecting the first sensor substrate part 3510 and the second sensor substrate part 3520.

The first sensor substrate part 3510 and the second sensor substrate part 3520 may be a rigid printed circuit board (Rigid PCB), and the elastic substrate part 3530 may be a flexible printed circuit board (Flexible PCB) or a rigid printed circuit board (Rigid Flexible PCB), but is not limited thereto.

The elastic substrate part 3530 may be disposed in a curved shape in the form of a flexible circuit board.

In addition, the embodiment may include a gyro sensor (not shown) disposed on the circuit board 3050 to sense motion and a driving circuit device (not shown) driven according to input/output signals of the gyro sensor.

The gyro sensor of the embodiment may employ a two-axis gyro sensor that detects two rotational motion amounts of pitch and yaw, which represent large motions in a two-dimensional image frame, and may employ a three-axis gyro sensor that detects both pitch, yaw, and roll motion amounts for more accurate image shake correction. Movements corresponding to pitch, yaw, and roll detected by the gyro sensor may be converted into appropriate physical quantities according to a camera shake correction method and a correction direction.

Next, referring to FIGS. 22B and 22C together, the embodiment may include a plurality of coil substrates 3052.

For example, the coil substrates 3052 may be disposed in each of the four second housings 3400, and the second and third coil parts CL2 and CL3 may be disposed in each of the four second housings 3400, but is not limited thereto.

In addition, in the embodiment, the second magnet part MN2 may be disposed in the second housing 3400. For example, second magnet parts MN2 may be respectively disposed in each of the four second housings 3400.

Referring to FIG. 22B, the second magnet part MN2 may be disposed on the protruding portion 3320 of the first housing 3300. For example, an end of the protruding portion 3320 of the first housing 3300 may have a protruding portion groove (not shown) in which the second magnet part MN2 is disposed.

According to the embodiment, the OIS may be driven by the electromagnetic force between the second magnet part MN2 and the second coil part CL2.

In addition, according to the embodiment, a first magnet part MN1 may be disposed in a region of the first housing 3300 corresponding to the third coil part CL3. According to the embodiment, the OIS can be driven by the electromagnetic force between the first magnet part MN1 and the third coil part CL3.

Specifically, according to an embodiment, the pitch or yaw OIS may be driven by the electromagnetic force between the first magnet part MN1 and the third coil part CL3.

In addition, according to the embodiment, a roll OIS can be driven by electromagnetic force between the second magnet part MN2 and the second coil part CL2.

In the OIS drive in the embodiment, the first housing 3300 may rotate pitch, yaw, or roll with respect to the second housing 3400 by the second guide member 3420 disposed between the first housing 3300 and the second housing 3400.

Referring to FIG. 22B, in the embodiment, the outer surface of the first housing 3300 and the inner surface of the second housing 3400 may include curved surfaces in which a central portion is convex outward than the upper and lower portions. In the embodiment, OIS implementation may be possible through a curved surface.

For example, referring to FIG. 22C, the inner surface of the second housing 3400 may include a curved surface in which the central portion is convex outward than the upper and lower portions, and the second guide member 3420 may be disposed so that the second housing 3400 may be rotated in a pitch, yaw, or roll by module rotational movement of the first housing 3300 relative to the second housing 3400.

For example, referring to FIG. 22B, in an embodiment, the first housing 3300 may include a first housing outer surface (not shown) facing the second housing 3400, and the second housing 3400 may include a second housing inner surface (not shown) facing the first housing 3300.

The outer surface of the first housing and the inner surface of the second housing may include curved surfaces in which a central portion is more convex outward than upper and lower portions. In the embodiment, OIS implementation may be possible through a curved surface.

Referring to FIG. 22C, the embodiment may include a second guide member 3420 disposed between the outer surface of the first housing and the inner surface of the second housing. In an embodiment, the first guide member 3220 and the second guide member may have different shapes. For example, the first guide member 3220 may have a cylindrical shape, and the second guide member may have a ball shape. The second guide member may be a bearing, but is not limited thereto.

In addition, according to the embodiment, the AF may be driven along the first guide part 3200 by mutual electromagnetic force between another part of the first magnet part MN1 and the first coil part CL1 disposed around the bobbin 3200.

According to the lens driving device and the camera module including the same according to the embodiment, it is possible to solve the fact that a larger force is required for rolling torque for roll implementation than pitch and yaw implementation in OIS implementation.

For example, in an embodiment, the second magnet part MN2 for roll implementation is disposed farther from the center of the lens 3100 or bobbin 200 compared to the second magnet part MN2 for implementing a pitch or yaw, and it is possible to solve the problem that a greater force is required for the rolling torque.

In addition, for example, according to the embodiment, the second magnet part MN2 disposed at the corner of the second housing 3400 and facing the second coil part CL2 is disposed farther from the center of the lens 3100 or the center of the bobbin 3200 than the first magnet part MN1 facing the third coil part CL3, and there is a special technical effect that the distance of the driving point is increased so that the driving force may be increased through a greater torque implementation.

For example, the first housing 3300 may include a first housing frame 3310 for accommodating the bobbin 3200 and having a hollow circular shape and a protruding portion 3320 extending from the first housing frame 3310 toward the edge of the second housing 3400.

In this case, the embodiment may include a first magnet part MN1 mounted on the first housing frame 3310 and a second magnet part MN2 mounted on an end of the protruding portion 3320.

According to the embodiment, since the second magnet part (MN2) mounted on the protruding portion 3320 of the first housing 3300 is farther from the center of the lens 3100 or the bobbin 3200 than the first magnet part MN1 mounted on the first housing frame 3310, there is a special technical effect of increasing the driving force by increasing the distance of the driving point without increasing the size of the magnet or increasing additional power.

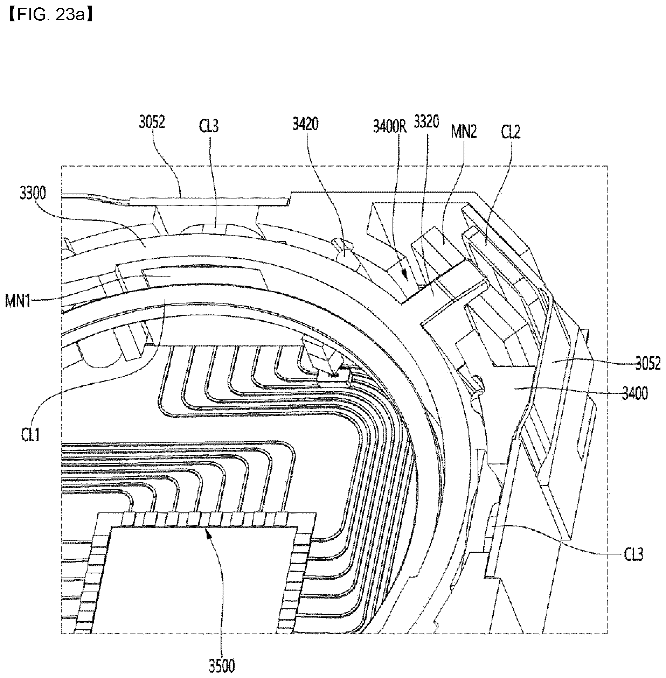

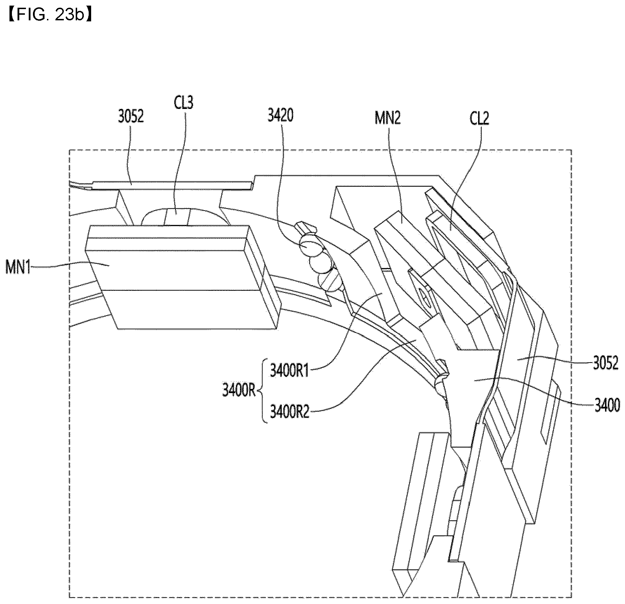

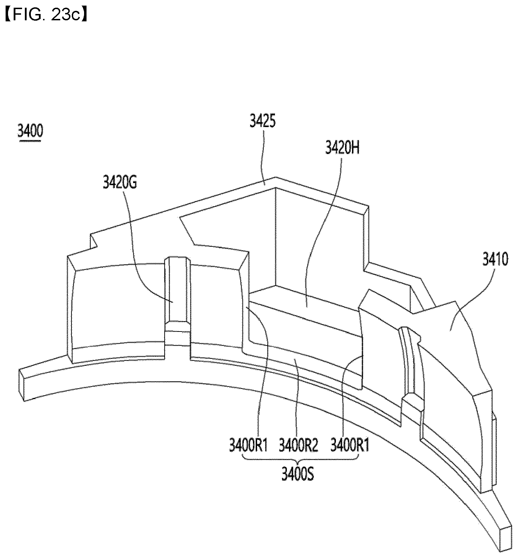

Next, FIG. 23A is an enlarged view of the first region P1 in FIG. 22B, and FIG. 23B is an enlarged view of the second region P2 in FIG. 22C. In addition, FIG. 23C is an enlarged view of the second housing 3400 in FIG. 23B.

Referring to FIG. 23A, in the OIS drive in the embodiment, The first housing 3300 may rotate pitch, yaw, or roll with respect to the second housing 3400 by the second guide member 3420 disposed between the first housing 3300 and the second housing 3400.

For example, in the embodiment, the pitch or yaw OIS can be driven by the electromagnetic force between the first magnet part MN1 and the third coil part CL3.

In addition, according to the embodiment, a roll OIS can be driven by electromagnetic force between the second magnet part MN2 and the second coil part CL2.

Accordingly, in the OIS drive in the embodiment, the first housing 3300 may pitch or yaw or roll with respect to the second housing 3400 by the second guide member 3420 disposed between the first housing 3300 and the second housing 3400.

In addition, according to the embodiment, the AF may be driven along the first guide part 3200 by mutual electromagnetic force between another part of the first magnet part MN1 and the first coil part CL1 disposed around the bobbin 3200.

In addition, the embodiment can solve the problem of deteriorating the reliability of the camera module when an external impact or the like occurs in OIS implementation.

For example, in the embodiment, the protruding portion 3320 of the first housing 3300 may be positioned located in the housing groove 3400R of the second housing 3400, and there is a technical effect that the protruding portion 3320 of the first housing 3300 and the housing groove 3400R of the second housing 3400 can implement a stopper function related to a 3-axis OIS.

Through this, the embodiment can solve the problem of deteriorating the reliability of the camera module when an external impact or the like occurs.

Specifically, referring to FIG. 23B, the housing groove 3400R may include a groove side wall portion 3400R1 and a groove bottom portion 3400R2.

The groove side wall portion 3400R1 may function as a stopper during roll rotation, and the groove bottom portion 3400R2 may function as a stopper during yaw or pitch rotation, but is not limited thereto. In addition, the groove bottom portion 3400R2 may function as a stopper during AF operation.

In addition, in the embodiment, the second guide member 3420 may be disposed adjacent to the housing groove 3400R, which is a stopper structure.

In addition, in the embodiment, the second guide member 3420 may be disposed to be symmetrical to each other with respect to the housing groove 3400R. This enables stable implementation of OIS functions.

In addition, in the embodiment, the first guide member 3220 may be disposed to overlap the second guide member 3420 in a radial direction around an optical axis.

According to the embodiment, the protruding portion 3320 of the first housing 3300 has a technical effect of improving the driving force in implementing the roll OIS through the function of the mounting portion of the second magnet part MN2 and a complex technical effect of functioning as an OIS stopper.

In addition, according to the embodiment, the second housing 3400 has a technical effect of functioning as a stopper while accommodating the second coil part CL2 and the like.

In addition, according to the embodiment, the second magnet part MN2 may be disposed closer to the second coil part CL2 than to the housing groove 3400R.

Next, referring to FIG. 23C, the second housing 3400 may include a housing body 3410, a guide groove 3420G disposed on the housing body 3410, and a housing sidewall 3425 extending and disposed outside the housing body 3410. A housing hole 3420H may be provided between the housing sidewall 3425 and the housing body 3410.

A second guide member 3420 is disposed in the guide groove 3420G so that OIS can be implemented. In addition, the coil substrate 3052 and the second coil part CL2 are disposed in the housing hole 3420H, so that OIS can be implemented.

According to the embodiment, the protruding portion 3320 of the first housing 3300 can be located in the housing groove 3400R of the second housing 3400, and the protruding portion 3320 of the first housing 3300 and the housing groove 3400R of the second housing 3400 have a technical effect that can implement a stopper function related to a three-axis OIS. Through this, the embodiment can solve the problem of deteriorating the reliability of the camera module when an external impact or the like occurs.

### <THIRD EMBODIMENT>

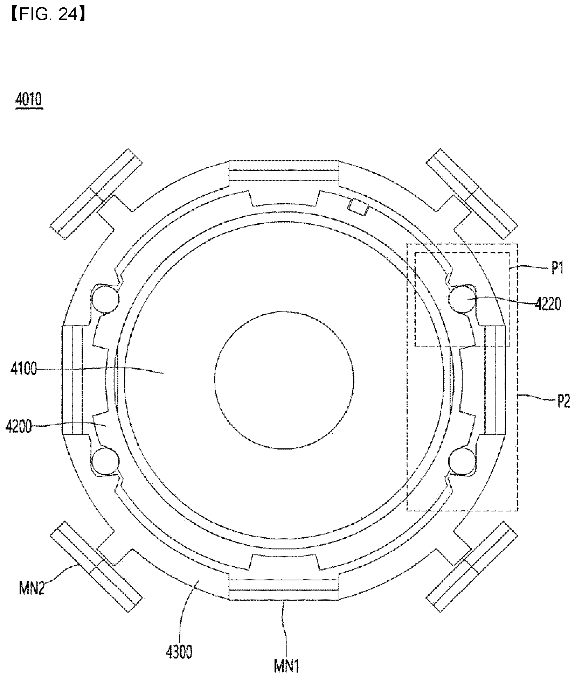

FIG. 24 is a side cross-sectional view of the lens driving device in the camera module according to the third embodiment taken along line B1-B2.

Referring to FIG. 24, a lens driving device 4010 according to an embodiment may include a bobbin 4200 on which a lens 4100 is disposed, a first housing 4300 on which the bobbin 4200 is disposed, and a first guide member 4220 disposed between the bobbin 4200 and the first housing 4300.

The first guide member 4220 may be disposed in plurality. For example, it may include four first guide members 4220 disposed between the bobbin 4200 and the first housing 4300, but is not limited thereto.

The first guide member 4220 may have a shaft shape, but is not limited thereto.

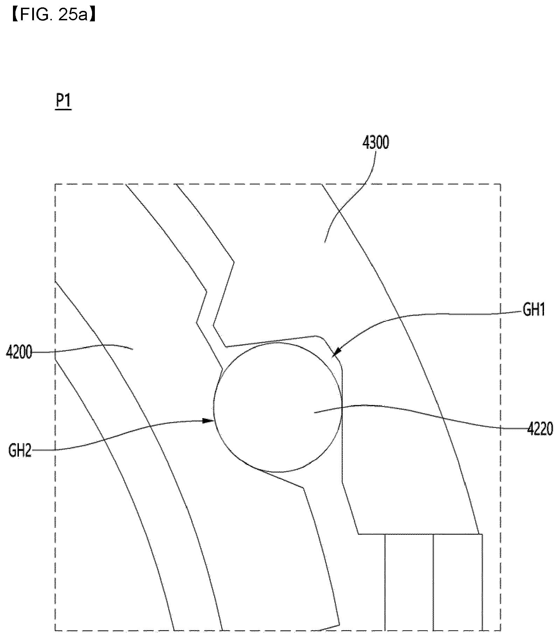

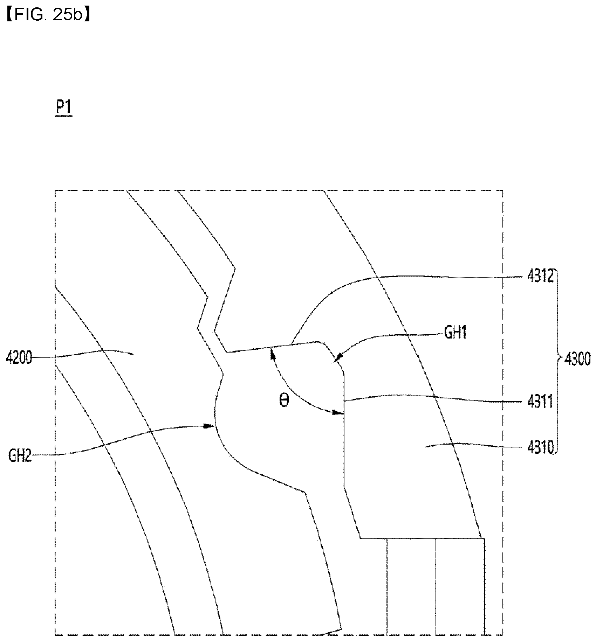

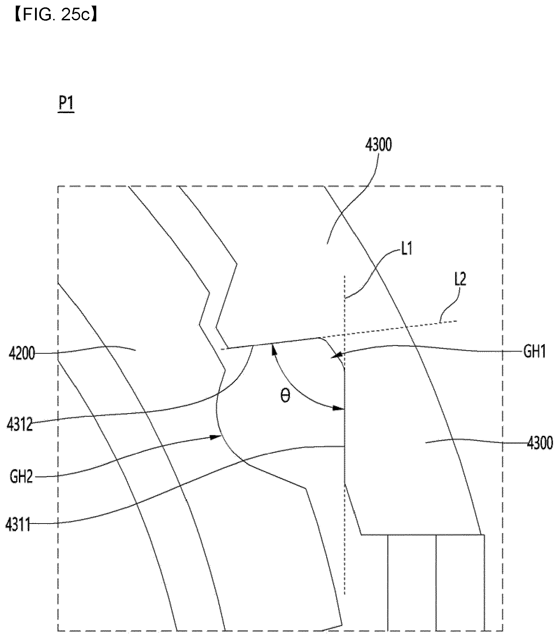

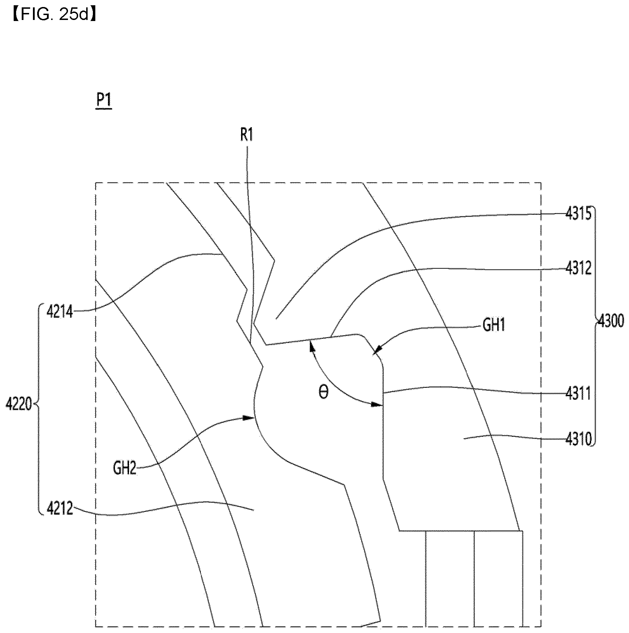

Next, FIG. 25A is an enlarged view of a first region P1 in a side cross-sectional view of the lens driving device 4010 according to the embodiment shown in FIG. 24, FIG. 25B is a first detail view of FIG. 25A, FIG. 25C is a second detail view of FIG. 25A, and FIG. 25D is a third detail view of FIG. 25A.

For example, FIG. 25B is a first detailed view in which the first guide member 4220 is omitted from the enlarged view of the first region P1 in the side cross-sectional view of the lens driving device 4010 according to the embodiment shown in FIG. 25A, and FIG. 25C is a second detailed view in which the first guide member 4220 is omitted from the enlarged view of the first region P1 in the side cross-sectional view of the lens driving device 4010 according to the embodiment shown in FIG. 25A.

First, referring to FIG. 25A, in the embodiment, the first housing 4300 may include a first guide groove GH1 in which the first guide member 4220 is disposed. The first guide groove GH1 may have an asymmetrical shape.

In addition, the bobbin 4200 may include a second guide groove GH2 in which the first guide member 4220 is disposed. The second guide groove GH2 may have a shape corresponding to an outer circumference surface of the first guide member 4220. For example, the second guide groove GH2 may have a curved shape corresponding to the outer circumference surface of the first guide member 4220.

Specifically, referring to FIG. 25B, the first housing 4300 includes the housing frame 4310, and the first guide groove GH1 may be formed inside the first housing frame 4310.

The first guide groove GH1 includes a first guide surface 4311 and a second guide surface 4312 that can contact the first guide member 4220, and an angle Θ formed between the first guide surface 4311 and the second guide surface 4312 may be an acute angle.

In addition, the first guide groove GH1 may include a first guide surface 4311 and a second guide surface 4312 that may contact the first guide member 4220. The first guide surface 4311 and the second guide surface 4312 may be flat.

According to the lens driving device and the camera module including the same according to the embodiment, it is possible to solve the technical problem of separation of the lens driving device when an impact is applied to the camera module.

For example, in the embodiment, the first guide member 4220 for AF driving of the lens is disposed between the first guide groove GH1 and the second guide groove GH2, and the first guide groove GH1 and the second guide groove GH2 may function as a guide rail.

According to the embodiment, the first guide groove GH1 in which the first guide member 3220 is disposed has an asymmetrical shape, so that even if an impact or the like occurs, there is a technical effect of providing a movement path through which the lens may move with minimal friction while preventing separation of the first guide member 3220.

In addition, in the embodiment, the angle Θ formed by the first guide surface 3311 and the second guide surface 3312 may be an acute angle, and accordingly, there is a technical effect of preventing the separation of the first guide member 220 even when an impact or the like occurs.

Specifically, referring to FIG. 25C, the angle Θ formed by the first guide surface 4311 and the second guide surface 4312 may be an acute angle based on the first line L1 extending from the first guide surface 4311 in the first guide groove GH1 and the second line L2 extending from the second guide surface 4312.

The first line L1 and the second line L2 may be tangential lines to the first guide member 4220.

According to the embodiment, when an impact is applied to the camera module, the technical problem of separation of the first guide member 4220 can be solved by controlling the angle formed between the first guide surface 4311 and the second guide surface 4312 in the first guide groove GH1 of the first housing 4300 to an acute angle.

Next, referring to FIG. 25D, the bobbin 4200 may include a bobbin frame 4212 where the second guide groove GH2 is formed and a first recess R1 inward from the outermost periphery 4214 of the bobbin frame.

The first housing 4300 may include a first guide protruding portion 4315 protruding from the first housing frame 4310 toward the bobbin 4200, and the first guide protruding portion 4315 may be disposed on the first recess R1 of the bobbin 4200.

The first guide protruding portion 4315 may be disposed lower than the outermost periphery 4214 of the bobbin 4200. Through this, separation of the first guide member 4220 can be effectively prevented.

For example, the first guide protruding portion 4315 of the first housing 4300 protrudes toward the bobbin 4200 and protrudes to the first recess R1 of the bobbin 4200 and is disposed, so that even if a situation such as impact occurs, the first guide member 4220 can be firmly positioned in the first guide groove GH1 and the second guide groove GH2 without being separated, and reliability can be improved by preventing the AF module from being separated due to impact.

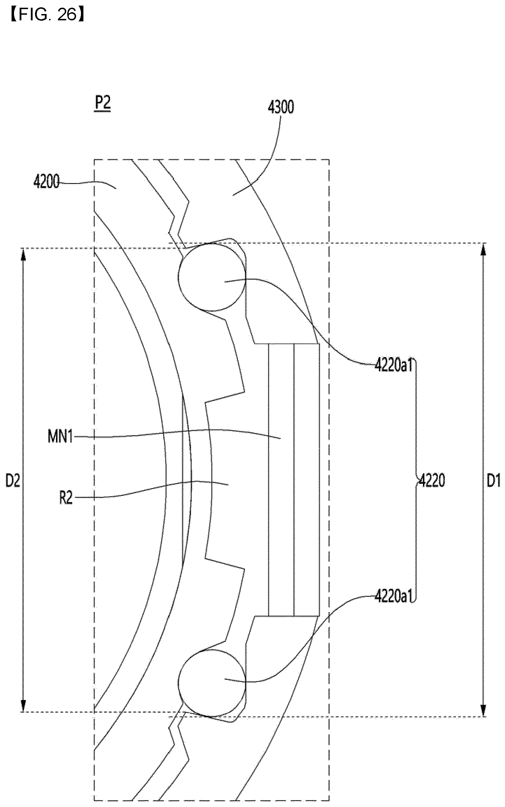

Next, FIG. 26 is an enlarged view of the second region P2 in the lens driving device according to the embodiment shown in FIG. 24.

According to the embodiment, a first distance D1 between edges of adjacent first guide grooves GH1 may be greater than a second distance D2 between both ends of the first guide protruding portion 4315 of the first housing 4300.

The first distance D1 may be a distance from the upper end of the first upper guide member 4220a1 disposed at the upper side of the first guide member 4220 to the lower end of the first lower guide member 4220b disposed at the lower side.

In addition, the second distance D2 may be a distance between the first guide protruding portion 4315 on one side and the first guide protruding portion 4315 on the other side of the adjacent first guide groove GH1.

According to the embodiment, the first distance D1 between the edges of the adjacent first guide grooves GH1 is designed to be greater than the second distance D2 between both ends of the first guide protruding portion 4315 of the adjacent first guide grooves GH1, thereby preventing the first guide member 4220 from departing even in situations such as impact, thereby contributing to reliability.

In addition, the lens driving device and the camera module including the same according to the embodiment prevent separation of the first guide member 3220 when implementing AF, zooming, or OIS, and accordingly, it is possible to solve the problem of lens decenter or tilt occurrence by precise implementation of AF and OIS for the lens. In addition, there is a technical effect of remarkably improving image quality or resolving power by preventing the angle of view from changing or out of focus by properly matching the alignment between the plurality of lens groups.

In addition, referring to FIG. 26, the bobbin 4200 of the embodiment may include a second recess R2 in a region corresponding to the first magnet MN1 disposed in the first housing 4300. The second recess R2 may be disposed between adjacent second guide grooves GH2.

In addition, the second recess R2 may be disposed between adjacent first guide grooves GH1.

Accordingly, the second recess R2 may be disposed between adjacent first guide members 4220.

According to the embodiment, the electromagnetic force between the first magnet MN1 and the first coil part CL1 can be improved as the second recess R2 is disposed in the bobbin 4200, and the driving force can be improved according to the weight reduction of the bobbin 4200.

### <FOURTH EMBODIMENT >

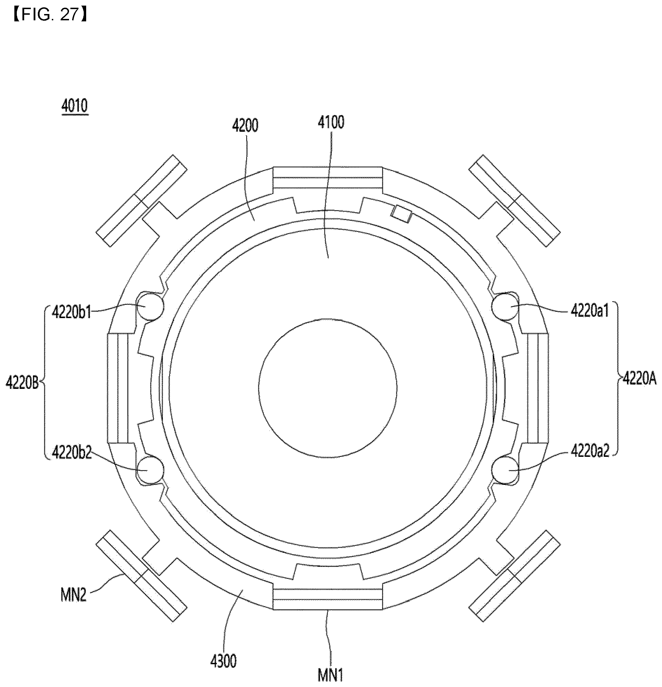

Next, FIG. 27 is a side cross-sectional view of the lens driving device according to the embodiment shown in FIG. 24.

The lens driving device 4010 according to the embodiment may include a first guide member 4220 made of a magnetic material and a non-magnetic material.

For example, at least one of the plurality of first guide members 4220 may be a magnetic material and at least the other one may be a non-magnetic material.

Among the plurality of first guide members 4220, the first-first guide member 4220A disposed at one side of the bobbin 4200 may be a magnetic material, and the first-second guide member 4220b disposed at the other side of the bobbin 4200 may be a non-magnetic material.

For example, the first-first guide member 4220A may include a first-first magnetic shaft 4220a1 and a first-second magnetic shaft 4220a2. The first-second guide member 4220b may include a second-first non-magnetic shaft 4220b1 and a second-second non-magnetic shaft 4220b2.

The first-first guide member 4220A may contact the first guide groove GH1 of the first housing 4300 by attraction between magnetic materials.

The first-second guide member 4220b may have a predetermined gap, for example, 0.03 mm, for the purpose of mechanism tolerance and frictional force reduction, but is not limited thereto.

According to the embodiment, it is possible to solve the technical problems of occurrence of high-frequency vibration, increase in driving resistance, and occurrence of dynamic tilt due to a spring structure in the AF structure.

For example, according to the embodiment, it is possible to provide a structure for moving a lens with minimal friction and tilt by removing a spring vulnerable to high-frequency vibration from an AF structure and applying a guide shaft.

For example, in the embodiment, among the plurality of first guide members 4220, the first-first guide member 4220A disposed at one side of the bobbin 4200 is a magnetic material, and the first-second guide member 4220b disposed at the other side of the bobbin 4200 may be a non-magnetic material.

The first-first guide member 4220A is a magnetic material and can move up and down in point contact with the first housing 4300 by attraction of a magnet.

According to the embodiment, there are the following technical effects. The first guide member 4220 for AF operation is disposed between the first guide groove GH1 and the second guide groove GH2, and accordingly, the spring structure is removed compared to the prior art, so there is no high-frequency vibration, and the absence of spring structure reduces drive resistance, reduces power consumption, and the dynamic tilt is less compared to the guide bearing structure.

In addition, according to the embodiment, there is a technical effect of preventing magnetic field interference between magnets when AF or OIS is implemented. For example, in the conventional internal technology, there is a problem in that thrust is reduced because AF driving or OIS driving is not normally performed due to magnetic field interference between a magnet for driving AF and a magnet for driving OIS. In addition, there is a problem of causing decentering or tilting due to magnetic field interference between magnets.

According to the embodiment, there is a technical effect capable of providing a lens driving device and a camera module including the same capable of preventing magnetic field interference between magnets by changing the arrangement positions of the magnets for OIS driving and AF driving.

The characteristics, structures, effects, and the like described in the above-described embodiments are included in at least one embodiment, but are not limited to only one embodiment. Furthermore, the characteristic, structure, and effect illustrated in each embodiment may be combined or modified for other embodiments by a person skilled in the art. Therefore, it should be construed that contents related to such combination and modification are included in the scope of the embodiment.

Embodiments are mostly described above, but the embodiments are merely examples and do not limit the embodiments, and a person skilled in the art may appreciate that several variations and applications not presented above may be made without departing from the essential characteristic of embodiments. For example, each component specifically represented in the embodiments may be varied. In addition, it should be construed that differences related to such a variation and such an application are included in the scope of the embodiment defined in the following claims.

## Claims

1. A lens driving device comprising:
a first frame;
a first moving part disposed in an inner space of the first frame and relatively movable with respect to the first frame;
a lens module disposed inside the first moving part; and
a guide member disposed between the first frame and the first moving part,
wherein the guide member is disposed between an inner surface of the first frame and an outer surface of the first moving part, and
wherein the first moving part is guided by the guide member and arranged to be rotatable based on each of a first axis and a second axis.

2. The lens driving device of claim 1, wherein the outer surface of the first moving part includes a curved surface formed in the optical axis direction.

3. The lens driving device of claim 2, wherein the inner surface of the first frame includes a groove in which the guide member is disposed, and
wherein the guide member is disposed between the curved surface and the groove.

4. The lens driving device of claim 3, further comprising:
a first elastic member disposed above or below the first frame, and
wherein the guide member is disposed between the first elastic member, the outer surface of the first moving part, and the inner surface of the first frame.

5. The lens driving device of claim 3, wherein a position of an upper end of the guide member is higher than a region where the first elastic member is coupled to the first frame,
wherein the first elastic member includes a coupling region coupled to the first frame and a contacting region in contact with the guide member, and
wherein the coupling region is disposed to overlap the guide member in a horizontal direction.

6. The lens driving device of claim 4 or 5, wherein the first elastic member includes:
a plurality of upper elastic members disposed on the first frame; and
a plurality of lower elastic members disposed under the first frame,
wherein the guide member includes:
a plurality of upper balls corresponding to each of the plurality of upper elastic members; and
a plurality of lower balls corresponding to each of the plurality of lower elastic members.

7. The lens driving device of claim 1, wherein the first moving part includes a first driving member,
wherein the lens driving device further comprises a fixed part including the first frame and a second driving member, and
wherein the first moving part moves relative to the fixed part by an electromagnetic force provided by an interaction between the first driving member and the second driving member.

8. The lens driving device of claim 1, wherein the first moving part includes a second frame and a sensor part coupled to the second frame; and
wherein the sensor part includes an image sensor and a sensor substrate on which the image sensor is disposed.

9. The lens driving device of claim 8, wherein the sensor part includes a sensor base disposed on the sensor substrate and having a filter disposed thereon, and wherein the sensor part is coupled with the second frame through the sensor base.

10. The lens driving device of claim 1, wherein the guide member includes a plurality of balls.
